# EUROPEAN PATENT APPLICATION

(11) **EP 4 648 394 A1**
(43) Date of publication of application: **12.11.2025**
(21) Application number: 24803632.9
(22) Date of filing: 30.04.2024
(51) Int. Cl.: H04M 1/72454, G06F 3/04817, G06F 3/0482, G06F 3/00, G06F 3/04842, G06F 21/32, G06F 21/36, H04M 1/02, G06F 3/041, G06V 40/16

(54) **FOLDABLE ELECTRONIC DEVICE THAT CONTROLS DISPLAY**

(30) Priority: 10.05.2023 KR 20230060570; 31.05.2023 KR 20230070059
(71) Applicant: Samsung Electronics Co., Ltd., Suwon-si, Gyeonggi-do 16677 (KR)
(72) Inventor: HONG, Hyunchul, Suwon-si, Gyeonggi-do 16677 (KR); KANG, Jeongho, Suwon-si, Gyeonggi-do 16677 (KR); KIM, Namwoo, Suwon-si, Gyeonggi-do 16677 (KR); KIM, Minho, Suwon-si, Gyeonggi-do 16677 (KR); PARK, Changi, Suwon-si, Gyeonggi-do 16677 (KR); BAE, Hyerim, Suwon-si, Gyeonggi-do 16677 (KR)
(74) Representative: Gulde & Partner
(86) International application number: PCT/KR2024/005828
(87) International publication number: WO 2024/232578

(57) **Abstract**

This electronic device comprises: a second housing: a first housing which is foldably coupled to one side of the second housing; a third housing which is foldably coupled to the other side of the second housing; a display comprising a first display area disposed in the first housing, a second display area disposed in the second housing, and a third display area disposed in the third housing; at least one camera disposed on the display; at least one sensor for sensing a folded state of the first housing or the third housing; a memory for storing instructions; and at least one processor. The instructions, when executed by the at least one processor, may cause the electronic device to: calculate a first angle between the first housing and second housing and a second angle between the second housing and third housing by using data received from the sensor while an image captured by the at least one camera is displayed on the display; and operate in a privacy mode in response to a folding state between the first housing and second housing based on the first angle, or a folding state between the second housing and third housing based on the second angle.

## Description

### [Technical Field]

Embodiments of the disclosure relate to a foldable electronic device configured to control the display for privacy protection.

### [Background Art]

A bar-type housing structure may be applied to an electronic device. For example, the bar-type housing structure may include a plate (or a cover) configured to form the front surface of the electronic device, a plate configured to form the rear surface of the electronic device, and a bezel structure configured to form a side surface surrounding the front and rear surfaces. A display may be disposed on the front surface.

A foldable housing structure may be applied to an electronic device. The electronic device may have a housing structure divided into two housings with reference to the folding axis. The first display area of a display (for example, a flexible display) may be disposed on the first housing, and the second display area of the display may be disposed on the second housing. The folding axis may be implemented in an infolding type such that the first and second display areas face each other in a folded state of the foldable housing structure. Alternatively, folding axis may be implemented in an outfolding type such that the first and second display areas face in opposite directions in a folded state of the foldable housing structure. The electronic device may have two or more folding axes, thereby having three or more divided housings and screens. For example, the electronic device may have a first folding axis implemented in an infolding type, a second folding axis implemented in an outfolding type, and a display. The screen of the display may be divided into a first display area, a second display area, and a third display area by the first and second folding axes.

The above-described information is provided as a related art for helping the understanding of the disclosure. No claim or determination is raised regarding whether any of the above description is applicable as a prior art related to the disclosure.

### [Disclosure of Invention]

### [Technical Problem]

A foldable electronic device may provide a wider screen than an electronic device having a bar-type housing structure. Therefore, there may be a high possibility that, among visual information displayed on the screen, personal information related to privacy may be exposed to nearby people.

Embodiments of the disclosure may provide a foldable electronic device configured to reduce screen exposure. Technical problems to be solved by the disclosure are not limited to the technical problems mentioned above, and other technical problems not mentioned herein will be clearly understood from the following descriptions by those skilled in the art to which the disclosure pertains.

### [Solution to Problem]

According to an embodiment, an electronic device may include: a second housing; a first housing foldably coupled to one side of the second housing; a third housing foldably coupled to the other side of the second housing; a display including a first display area disposed on the first housing, a second display area disposed on the second housing, and a third display area disposed on the third housing; at least one camera disposed on the display; at least one sensor configured to sense a folding state of the first housing or the third housing; a memory configured to store instructions; and at least one processor. The instructions, when executed by the at least one processor, may cause the electronic device to, while an image captured by the at least one camera is displayed on the display, calculate a first angle between the first housing and the second housing and a second angle between the second housing and the third housing by using data received from the sensor. The instructions, when executed by the at least one processor, may cause the electronic device to operate in a privacy mode in response to a folding state between the first housing and the second housing based on the first angle, or a folding state between the second housing and the third housing based on the second angle.

According to an embodiment, an electronic device may include a second housing; a first housing coupled to the second housing and configured to be rotatable; a third housing coupled to the second housing and configured to be rotatable; a touch-sensitive display including a first display area disposed on the first housing, a second display area disposed on the second housing, and a third display area disposed on the third housing; at least one camera disposed to face in the same direction as the direction in which the display faces; a processor; and a memory configured to instructions. The instructions, when executed by the processor, may cause the electronic device to receive an image from the at least one camera, and compare multiple faces recognized from the image with face images stored in the memory, thereby distinguishing the multiple recognized faces as a user face and an observer face. The instructions, when executed by the processor, may cause the electronic device to determine a display area at which the eyes of the user face gaze, and display a lock icon corresponding to a display area other than the determined display area on the display. The instructions, when executed by the processor, may cause the electronic device to, based on receiving a user input regarding the lock icon from the display, display a lock image in the display area corresponding to the lock icon instead of visual information currently displayed in the display area corresponding to the lock icon.

According to an embodiment, an electronic device may include a second housing; a first housing coupled to the second housing and configured to be rotatable; a third housing coupled to the second housing and configured to be rotatable; a touch-sensitive display including a first display area disposed on the first housing, a second display area disposed on the second housing, and a third display area disposed on the third housing; a sensing circuit; a processor; and a memory configured to store instructions. The instructions, when executed by the processor, may cause the electronic device to, while visual information is displayed on the display, calculate a first angle between the first housing and the second housing and a second angle between the second housing and the third housing by using data received from the sensing circuit. The instructions, when executed by the processor, may cause the electronic device to, based on the first angle and the second angle being less than or equal to a specified threshold angle value, display a first lock image in the first display area instead of the visual information currently displayed in the first display area. The instructions, when executed by the processor, may cause the electronic device to display a second lock image in the third display area instead of the visual information currently displayed in the third display area.

### [Advantageous Effects of Invention]

According to embodiments of the disclosure, exposure of the screen of an electronic device to nearby people may be reduced. Various other advantageous effects identified explicitly or implicitly from the disclosure may be provided.

### [Brief Description of Drawings]

FIG. 1 is a block diagram of an electronic device within a network environment according to various embodiments.
FIG. 2 is a block diagram of a display module according to various embodiments.
FIG. 3 illustrates an electronic device having an infolding-type housing structure according to an embodiment.
FIG. 4 illustrates an electronic device having an outfolding-type housing structure according to an embodiment.
FIG. 5A to FIG. 5E illustrate an electronic device having an infolding-type and an outfolding-type housing structure according to an embodiment.
FIG. 6A to FIG. 6D illustrate an electronic device having a multi-infolding-type housing structure according to an embodiment.
FIG. 7 to FIG. 12 illustrate various multi-folding-type housing structures applicable to electronic devices according to embodiments of the disclosure.
FIG. 13A to FIG. 13G are diagrams for describing operations of a processor for user privacy according to an embodiment of the disclosure.
FIG. 14 is a diagram for describing operations of a processor for user privacy, based on user gaze tracking, according to an embodiment.
FIG. 15A and FIG. 15B are diagrams for describing operations of a processor for user privacy, based on calculation of the distance between an electronic device and an observer, according to an embodiment.
FIG. 16A and FIG. 16B are diagrams for describing operations of a processor for user privacy, based on calculation of the angle between housings, according to an embodiment.
FIG. 17A to FIG. 17D are diagrams for describing operations of a processor for screen unlocking according to an embodiment.
FIG. 18A, FIG. 18B, and FIG. 18C are diagrams for describing operations of a processor for screen unlocking according to an embodiment.
FIG. 19A, FIG. 19B, and FIG. 19C are diagrams for describing operations of a processor for screen unlocking according to an embodiment.
FIG. 20A, FIG. 20B, FIG. 20C, and FIG. 20D are diagrams for describing operations of a processor for screen unlocking according to an embodiment.
FIG. 21A to FIG. 21D are diagrams for describing operations of a processor for screen unlocking according to an embodiment.
FIG. 22A to FIG. 22C are diagrams for describing operations of a processor for screen unlocking according to an embodiment.
FIG. 23A to FIG. 23C are diagrams for describing operations of a processor for screen unlocking according to an embodiment.
FIG. 24A to FIG. 24C are diagrams for describing operations of a processor for screen unlocking according to an embodiment.
FIG. 25A to FIG. 25C are diagrams for describing operations of a processor for screen unlocking according to an embodiment.
FIG. 26A to FIG. 26C are diagrams for describing operations of a processor for screen unlocking according to an embodiment.
FIG. 27A to FIG. 27C are diagrams for describing operations of a processor for screen unlocking according to an embodiment.
FIG. 28A to FIG. 28D are diagrams for describing operations of a processor for screen locking according to embodiments of the disclosure.
FIG. 29A to FIG. 29D are diagrams for describing operations of a processor for screen locking according to embodiments of the disclosure.
FIG. 30A and FIG. 30B are diagrams for describing operations of a processor for user privacy according to an embodiment of the disclosure.
FIG. 31 is a flowchart for describing operations of a processor for user privacy according to an embodiment.
FIG. 32 is a flowchart for describing operations of a processor for user privacy according to an embodiment.
FIG. 33 is a flowchart for describing operations of a processor for user privacy according to an embodiment.

Hereinafter, embodiments of the disclosure will be described in detail with reference to the drawings such that those skilled in the art can easily implement the same. However, the disclosure may be implemented in various different forms and is not limited to the embodiments described herein. In connection with the description of the drawings, identical or similar components may be given identical or similar reference numerals. In addition, in the drawings and related descriptions, descriptions of well-known functions and configurations may be omitted for clarity and brevity.

### [Mode for the Invention]

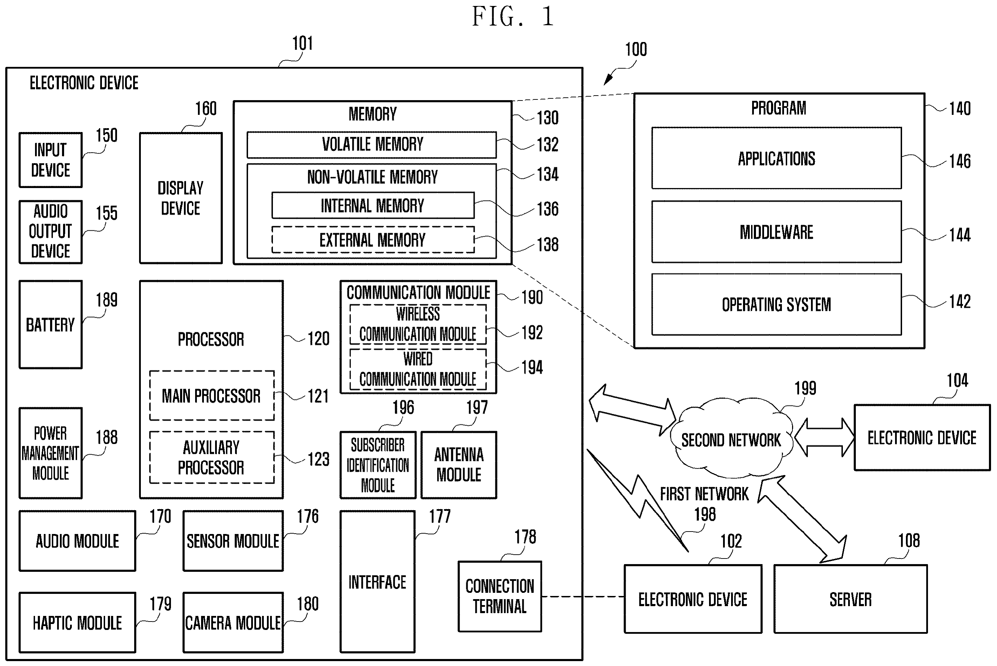

Fig. 1 is a block diagram illustrating an electronic device 101 in a network environment 100 according to various embodiments. Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

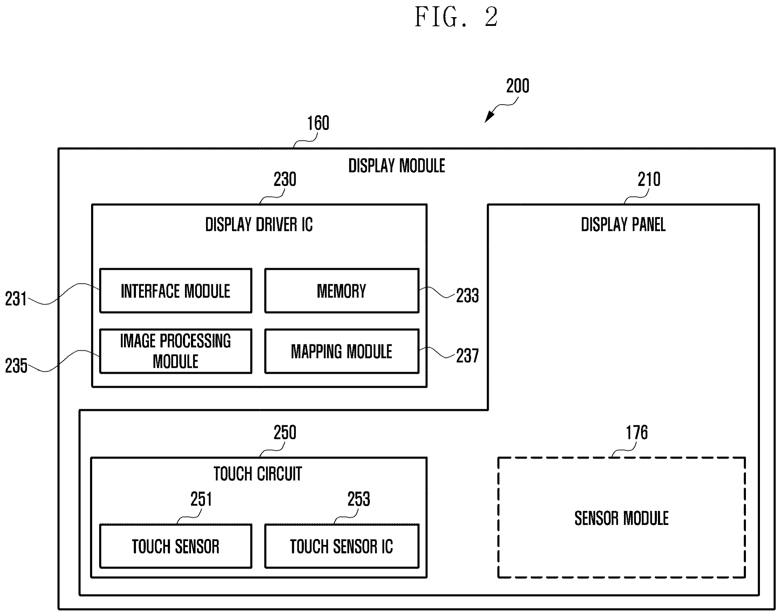

Fig. 2 is a block diagram 200 illustrating the display module 160 according to various embodiments. Referring to Fig. 2, the display module 160 may include a display 210 and a display driver integrated circuit (DDI) 230 to control the display 210. The DDI 230 may include an interface module 231, memory 233 (e.g., buffer memory), an image processing module 235, or a mapping module 237. The DDI 230 may receive image information that contains image data or an image control signal corresponding to a command to control the image data from another component of the electronic device 101 via the interface module 231. For example, according to an embodiment, the image information may be received from the processor 120 (e.g., the main processor 121 (e.g., an application processor)) or the auxiliary processor 123 (e.g., a graphics processing unit) operated independently from the function of the main processor 121. The DDI 230 may communicate, for example, with touch circuitry 250 or the sensor module 176 via the interface module 231. The DDI 230 may also store at least part of the received image information in the memory 233, for example, on a frame by frame basis. The image processing module 235 may perform pre-processing or post-processing (e.g., adjustment of resolution, brightness, or size) with respect to at least part of the image data. According to an embodiment, the pre-processing or post-processing may be performed, for example, based at least in part on one or more characteristics of the image data or one or more characteristics of the display 210. The mapping module 237 may generate a voltage value or a current value corresponding to the image data preprocessed or post-processed by the image processing module 235. According to an embodiment, the generating of the voltage value or current value may be performed, for example, based at least in part on one or more attributes of the pixels (e.g., an array, such as an RGB stripe or a pentile structure, of the pixels, or the size of each subpixel). At least some pixels of the display 210 may be driven, for example, based at least in part on the voltage value or the current value such that visual information (e.g., a text, an image, or an icon) corresponding to the image data may be displayed via the display 210.

According to an embodiment, the display module 160 may further include the touch circuitry 250. The touch circuitry 250 may include a touch sensor 251 and a touch sensor IC 253 to control the touch sensor 251. The touch sensor IC 253 may control the touch sensor 251 to sense a touch input or a hovering input with respect to a certain position on the display 210. To achieve this, for example, the touch sensor 251 may detect (e.g., measure) a change in a signal (e.g., a voltage, a quantity of light, a resistance, or a quantity of one or more electric charges) corresponding to the certain position on the display 210. The touch circuitry 250 may provide input information (e.g., a position, an area, a pressure, or a time) indicative of the touch input or the hovering input detected via the touch sensor 251 to the processor 120. According to an embodiment, at least part (e.g., the touch sensor IC 253) of the touch circuitry 250 may be formed as part of the display 210 or the DDI 230, or as part of another component (e.g., the auxiliary processor 123) disposed outside the display module 160.

According to an embodiment, the display module 160 may further include at least one sensor (e.g., a fingerprint sensor, an iris sensor, a pressure sensor, or an illuminance sensor) of the sensor module 176 or a control circuit for the at least one sensor. In such a case, the at least one sensor or the control circuit for the at least one sensor may be embedded in one portion of a component (e.g., the display 210, the DDI 230, or the touch circuitry 250)) of the display module 160. For example, when the sensor module 176 embedded in the display module 160 includes a biometric sensor (e.g., a fingerprint sensor), the biometric sensor may obtain biometric information (e.g., a fingerprint image) corresponding to a touch input received via a portion of the display 210. As another example, when the sensor module 176 embedded in the display module 160 includes a pressure sensor, the pressure sensor may obtain pressure information corresponding to a touch input received via a partial or whole area of the display 210. According to an embodiment, the touch sensor 251 or the sensor module 176 may be disposed between pixels in a pixel layer of the display 210, or over or under the pixel layer.

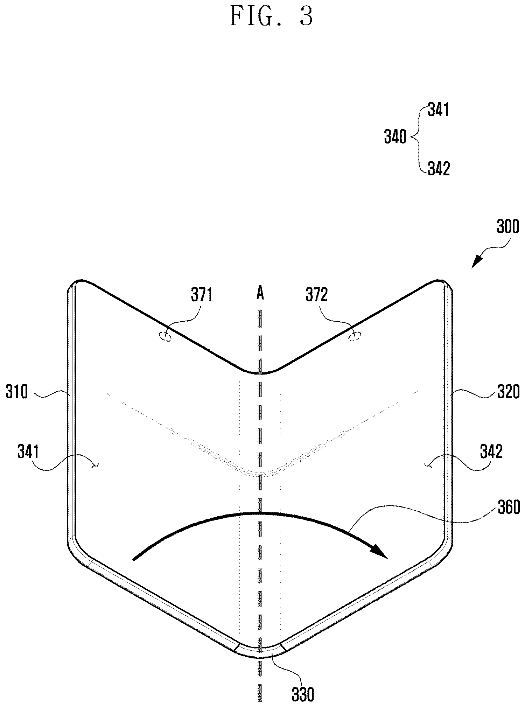

Displays having various structures applicable as a display 210 of an electronic device (for example, a smartphone, a tablet PC, or a laptop PC) 101 will be described with reference to FIG. 3 to FIG. 11. In this document, the surface on which a display is disposed may be defined as the front surface of the electronic device 101. In addition, the surface opposite to the front surface may be defined as the rear surface of the electronic device 101. In addition, the surface that surrounds the space between the front surface and the rear surface may be defined as the side surface of the electronic device 101. Hereinafter, the term "state" may refer to the structural form, type, or shape of an electronic device according to an embodiment of the disclosure or a component thereof (for example, a display, a foldable housing structure).

FIG. 3 illustrates an electronic device 300 having an infolding-type housing structure according to an embodiment. Referring to FIG. 3, the electronic device 300 (for example, the electronic device 101 in FIG. 1) may include a first housing 310, a second housing 320, a hinge assembly 330 configured to connect the first housing 310 and the second housing 320 such that the second housing 320 is rotatable with regard to the first housing 310, and a flexible display 340 disposed in a space formed by the foldable housings 310 and 320.

The display 340 (for example, the display 210 in FIG. 2) may be disposed to extend from the first housing 310 to the second housing 320 across the hinge assembly 330. The display 340 may include a first display area 341 positioned on the first housing 310 and a second display area 342 positioned on the second housing 320 with reference to the folding axis A. In an embodiment, the hinge assembly 330 may be implemented in an infolding type such that, when the electronic device 300 undergoes a state transition (for example, a form transition) from an unfolded state to a folded state, the two display areas 331 and 332 face each other. For example, when the electronic device 300 is in an unfolded state, the two display areas 331 and 332 may face in the same direction, and according to a state transition 360 from the unfolded state to a folded state, the two display areas 341 and 342 may rotate in a direction so as to face each other.

According to an embodiment, the state of the electronic device 300 may be defined based on the angle between the two display areas 341 and 342. For example, the state of the electronic device 300 may be defined to be an unfolded (flat or open) state in case that the angle between the two display areas 341 and 342 is about 180 degrees. The state of the electronic device 300 may be defined to be a folded (or closed) state in case that the angle between the two display areas 341 and 342 is between about 0 degrees and 10 degrees. The state of the electronic device 300 may be defined to be an intermediate state (in other words, a partially folded or a partially unfolded state) as illustrated in FIG. 3 in case that the two display areas 341 and 342 form an angle (for example, between about 10 degrees and 179 degrees) larger than the angle in the folded state and smaller than the angle in the unfolded state.

Based on the state of the electronic device 300, active areas in which visual information (for example, an execution screen of an application) is to be displayed on the display 340 may be determined. For example, in case that the electronic device 300 is determined to be in an intermediate state, the first display area 341 or the second display area 342 may be determined to be the active area. In an embodiment, the area having smaller movements between the first display area 341 and the second display area 342 may be determined to be the active area. For example, in case that the user holds a housing of the electronic device 300 with one hand and opens another housing with the other hand, the electronic device 300 undergoes a state transition from a folded state to an intermediate state, and the electronic device 300 may accordingly determine the display area of the held housing (for example, the housing having smaller movements) to be the active area. In case that the electronic device 300 is determined to be in an unfolded state, the entire display areas 341 and 342 may be determined to be the active area.

According to an embodiment, the electronic device 300 may include at least one front camera positioned inside the electronic device 300 so as to have a lens visually exposed through the front surface of the electronic device 300. For example, the first front camera 371 may be positioned under the first display area 341 so as to have a lens visually exposed through the first display area 341. For example, the second front camera 372 may be positioned under the second display area 342 so as to have a lens visually exposed through the second display area 342. The first front camera 371 and the second front camera 372 are positioned under the display 340 so as to receive light through the display 340 and may thus be referred to as under display cameras (UDCs).

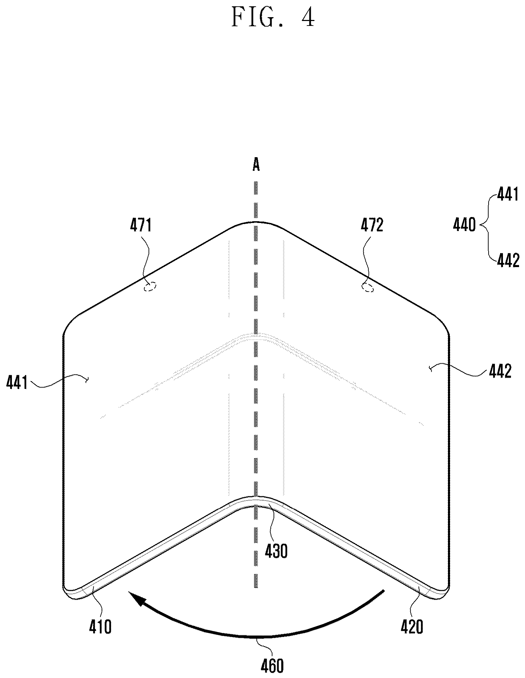

FIG. 4 illustrates an electronic device 400 having an outfolding-type housing structure according to an embodiment. In the following description of the electronic device 400, descriptions of configurations, functions, and/or structures that overlap those in FIG. 3 may be abbreviated or omitted.

Referring to FIG. 4, the electronic device 400 (for example, the electronic device 101 in FIG. 1) may include a first housing 410, a second housing 420, a hinge assembly 430, and a display 440 disposed on the foldable housings 410 and 420. The display 440 (for example, the display 210 in FIG. 2) may include a first display area 441 positioned on the first housing 410 and a second display area 442 positioned on the second housing 420 with reference to the folding axis A.

According to an embodiment, the hinge assembly 430 may be implemented in an outfolding type such that, when the electronic device 400 undergoes a state transition from an unfolded state to a folded state, the two display areas 441 and 442 face in opposite directions. For example, in the unfolded state of the electronic device 400, the two display areas 441 and 442 may face in the same direction, and in response to a state transition 460 from the unfolded state to the folded state, the two display areas 441 and 442 may rotate in opposite directions.

According to an embodiment, the state of the electronic device 400 may be defined based on the angle between the two display areas 441 and 442. For example, the state of the electronic device 400 may be defined to be an unfolded state in case that the angle between the two display areas 441 and 442is about 180 degrees. The state of the electronic device 400 may be defined to be a folded state in case that the angle between the two display areas 441 and 442 is about 360 degrees. The state of the electronic device 400 may be defined to be an intermediate state as illustrated in FIG. 4 in case that the two display areas 441 and 442 form an angle (for example, between about 181 degrees and 359 degrees) larger than the angle in the unfolded state and smaller than the angle in the folded state.

According to an embodiment, the active area on the display 440 may be determined based on the state of the electronic device 400. For example, in case that the electronic device 400 is determined to be in a folded state, the first display area 441 or the second display area 442 may be determined to be the active area. For example, one of the first display area 441 and the second display area 442, which is positioned above the other, may be determined to be the active area. For example, in case that the electronic device 400 is determined to be in an unfolded state, both the first display area 441 and the second display area 442 may be determined to be the active areas.

According to an embodiment, the electronic device 400 may include at least one front camera having a lens visually exposed through the front surface of the electronic device 400. For example, the electronic device 400 may include a first front camera 471 positioned under the first display area 441 and a second front camera 472 positioned under the second display area 442.

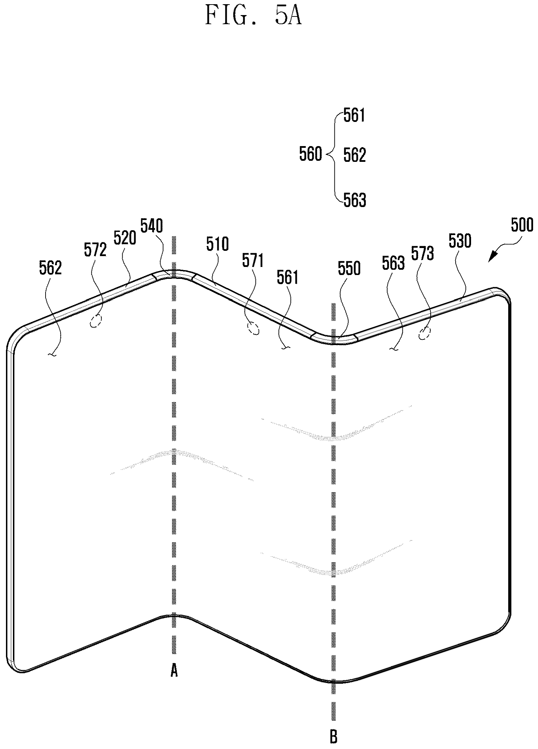

FIG. 5A to FIG. 5E illustrate an electronic device 500 having an infolding-type and outfolding-type housing structure according to an embodiment. In the following description of the electronic device 500, descriptions of configurations, functions, and/or structures that overlap those in FIG. 3 and FIG.4 may be abbreviated or omitted.

Referring to FIG. 5A to FIG. 5E, the electronic device 500 (for example, the electronic device 101 in FIG. 1) may include a second housing 510, a first housing 520, a third housing 530, a first hinge assembly 540 configured to connect the second housing 510 and the first housing 520 such that the first housing 520 can rotate with regard to the second housing 510, a second hinge assembly 550 configured to connect the second housing 520 and the third housing 530 such that the third housing 530 can rotate with regard to the second housing 520, and a display 560 disposed in the space formed by the multi-foldable (for example, Z-shaped foldable) housings 510, 520, and 530.

The display 560 (for example, the display 210 in FIG. 2) may be disposed to extend from the first housing 520 to the third housing 530 across the first hinge assembly 540, the second housing 510, and the second hinge assembly 550. The display 560 may include a second display area 561 positioned on the second housing 510, a first display area 562 positioned on the first housing 520, and a third display area 563 positioned on the third housing 530 with reference to the first folding axis A and the second folding axis B. The first hinge assembly 540 may be implemented in an infolding type such that, when the second housing 510 and the first housing 520 are folded, the second display area 561 and the first display area 562 face each other. The second hinge assembly 550 may be implemented in an outfolding type such that, when the second housing 510 and the third housing 530 are folded, the second display area 561 and the third display area 563 face in opposite directions.

Referring to FIG. 5A, when the first foldable housing structure 510 and 520 is in an intermediate state and the second foldable housing structure 510 and 530 is in an intermediate state, all display areas 56, 562, and 563 may be exposed to the outside.

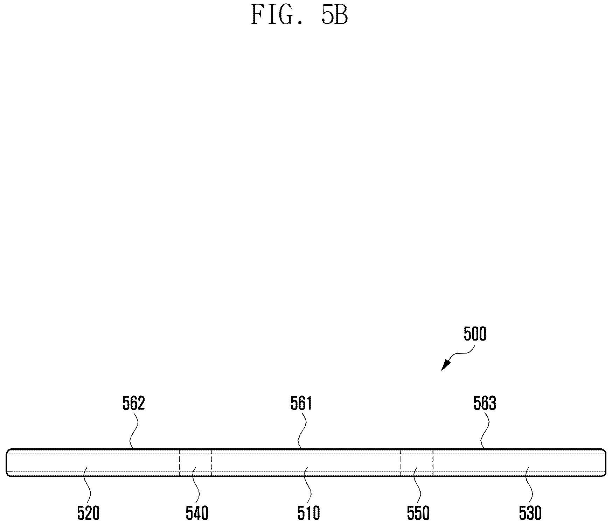

Referring to FIG. 5B, when all housing structures 510, 520, and 530 are in an unfolded state, all display areas 561, 562, and 563 may be exposed to the outside in the same direction.

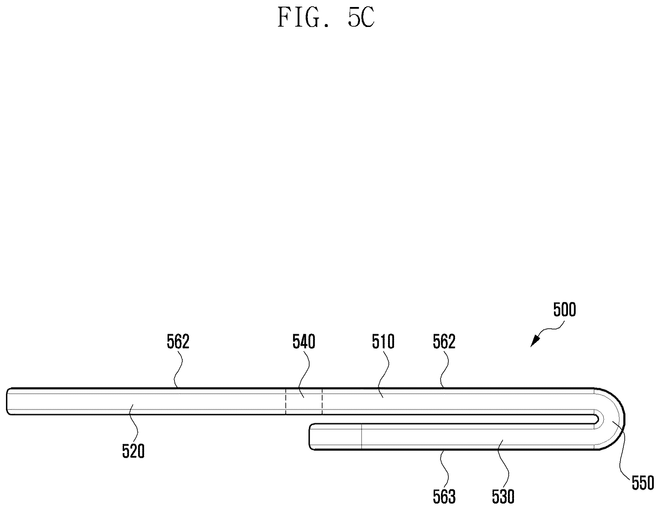

Referring to FIG. 5C, when the second foldable housing structure 510 and 530 is in a folded state, the second display area 561 and the third display area 563 may be exposed to the outside in different directions.

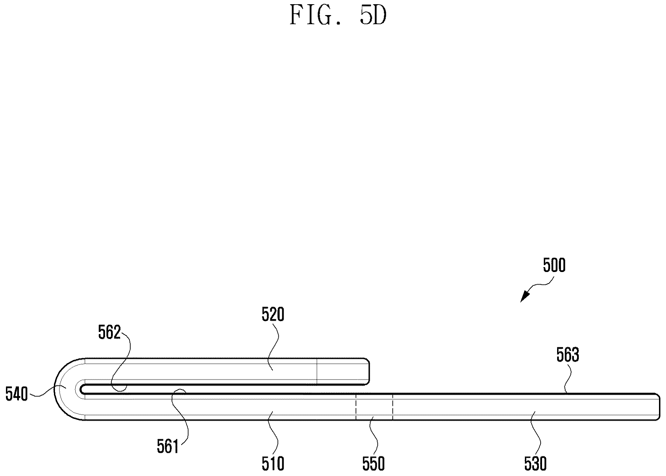

Referring to FIG. 5D, when the first foldable housing structure 510 and 520 is in a folded state, the second display area 561 and the first display area 562 may face each other and may thus not be exposed to the outside.

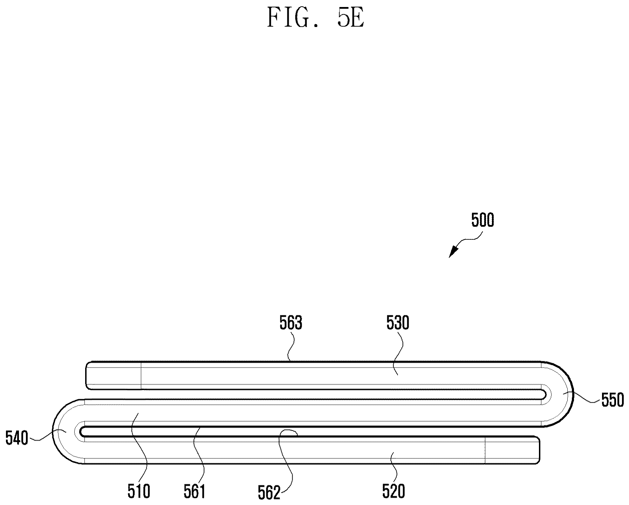

Referring to FIG. 5E, when all housing structures 510, 520, and 530 are folded, the second display area 561 and the first display area 562 may face each other without being exposed to the outside, and the third display area 563 may be exposed to the outside.

According to an embodiment, the active area on the display (560) may be determined based on the state of the first foldable housing structure 510 and 520 and the state of the second foldable housing structure 510 and 530. For example, in case that all housing structures 510, 520, and 530 are in an intermediate state or in an unfolded state (for example, FIG. 5A or 5B), all display areas 561, 562, and 563 may be determined to be the active areas.

According to an embodiment, in case that all housing structures 510, 520, and 530 are in a folded state (for example, FIG. 5E), the third display area 563 may be determined to be the active area. For example, in case that the first foldable housing structure 510 and 520 is in a folded state and the second foldable housing structure 510 and 530 is in an intermediate state or in an unfolded state (for example, FIG. 5D), the third display area 563 may be determined to be the active area.

According to an embodiment, in case that the first foldable housing structure 510 and 520 is in an intermediate state or in an unfolded state and the second foldable housing structure 510 and 530 is in a folded state (for example, FIG. 5C), the second display area 561 and the first display area 562 may be determined to be the active areas.

According to an embodiment, the electronic device 500 may include at least one front camera having a lens visually exposed through the front surface of the electronic device 500 (for example, the surface on which the display 560 is positioned). For example, the electronic device 500 may include a second front camera 571 positioned under the second display area 561, a first front camera 572 positioned under the first display area 562, and/or a third front camera 573 positioned under the third display area 563. The term "front" used in connection with the front camera is intended only for intuitive understanding of the position of the corresponding camera without limiting the technical characteristics of the camera. Therefore, "front camera" may be used interchangeably with "camera."

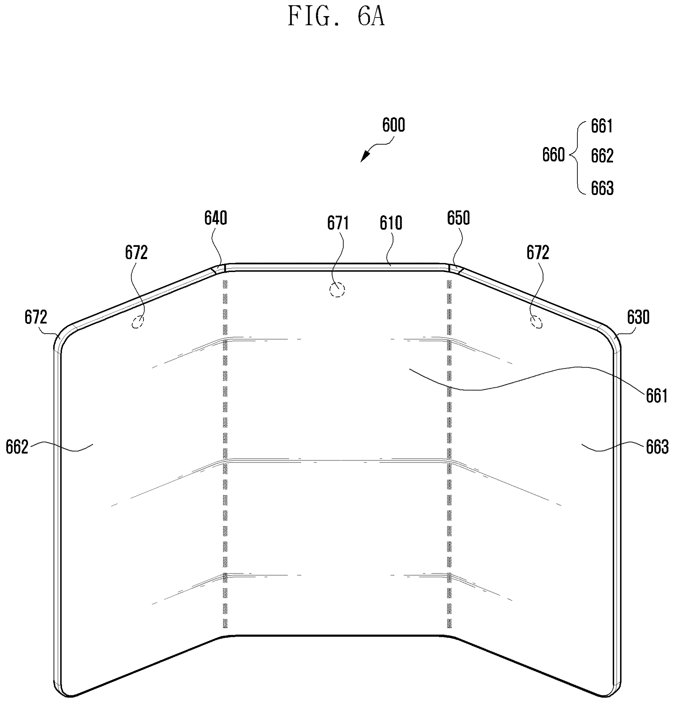

FIG. 6A to FIG. 6D illustrate an electronic device 600 having a multi-infolding-type housing structure according to an embodiment. In the following description of the electronic device 600, descriptions of configurations, functions, and/or structures that overlap those in FIG. 3 to FIG. 5 may be abbreviated or omitted.

Referring to FIG. 6A to FIG. 6D, the electronic device 600 (for example, the electronic device 101 in FIG. 1) may include a second housing 610, a first housing 620, a third housing 630, a first hinge assembly 640 configured to connect the second housing 610 and the first housing 620 such that the first housing 620 can rotate with regard to the second housing 610, a second hinge assembly 650 configured to connect the second housing 610 and the third housing 630 such that the third housing 630 can rotate with regard to the second housing 620, and a display 660 disposed in the space formed by the multi-foldable (for example, G-shaped foldable) housings 610, and 620, 630.

In an embodiment, the display 660 (for example, the display 210 in FIG. 2) may be disposed to extend from the first housing 620 to the third housing 630 across the first hinge assembly 640, the second housing 610, and the second hinge assembly 650. The display 660 may include a second display area 661 positioned on the second housing 510, a first display area 662 positioned on the first housing 620, and a third display area 663 positioned on the third housing 630 with reference to the first folding axis A and the second folding axis B. The first hinge assembly 640 may be implemented in an infolding type such that, when the first foldable housing structure 610 and 620 is folded, the second display area 661 and the first display area 662 face each other. The second hinge assembly 650 may be implemented in an infolding type such that, when the second foldable housing structure 610 and 630 is folded, the first display area 662 and the third display area 663 face each other.

Referring to FIG. 6A, when the first foldable housing structure 610 and 620 is in an intermediate state and the second foldable housing structure 610 and 630 is in an intermediate state, all display areas 661, 662, and 663 may be exposed to the outside.

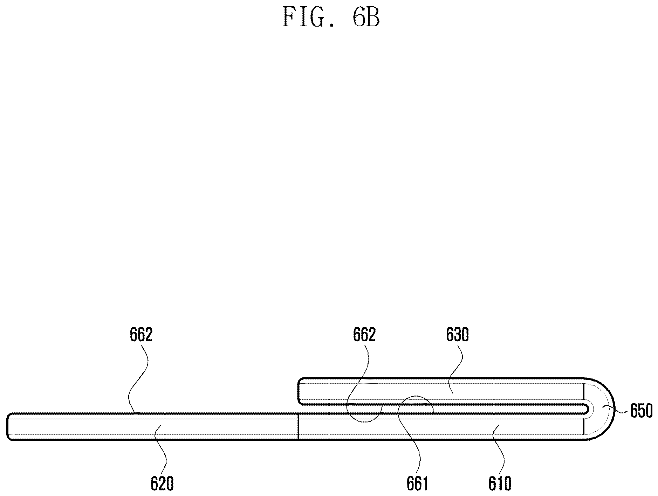

Referring to FIG. 6B, when the first foldable housing structure 610 and 620 is in an unfolded state (or in an intermediate state) and the second foldable housing structure 610 and 630 is in a folded state, only the second display area 662 may be exposed to the outside.

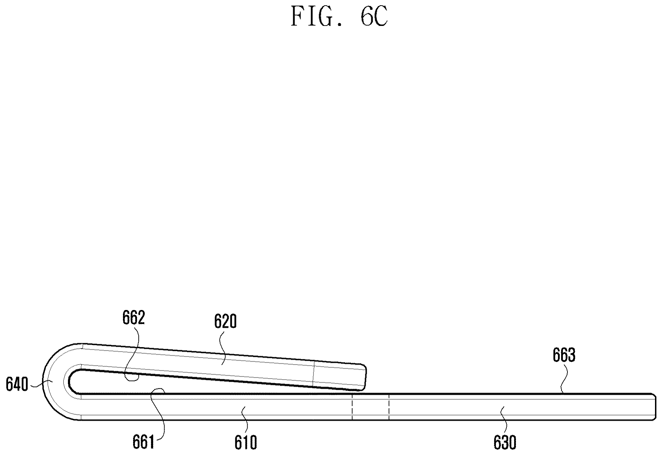

Referring to FIG. 6C, when the first foldable housing structure 610 and 620 is in a folded state and the second foldable housing structure 610 and 630 is in an unfolded state (or in an intermediate state), only the third display area 663 may be exposed to the outside.

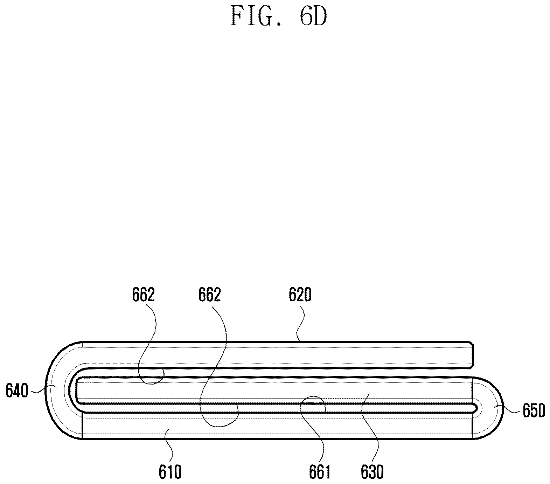

Referring to FIG. 6D, when all housing structures 610, 620, and 630 are folded, none of the display areas 661, 662, and 663 are exposed to the outside.

According to an embodiment, active areas on the display 660 may be determined based on the state of the first foldable housing structure 610 and 620 and the state of the second foldable housing structure 610 and 630. For example, in case that all housing structures 610, 620, and 630 are in an intermediate state or in an unfolded state (for example, FIG. 6A), all display areas 661, 662, and 663 may be determined to be the active areas.

According to an embodiment, in case that all housing structures 610, 620, and 630 are in a folded state (for example, FIG. 6dD, all display areas 661, 662, and 663 may be disabled.

According to an embodiment, in case that the first foldable housing structure 610 and 620 is in an unfolded state (or in an intermediate state) and the second foldable housing structure 610 and 630 is in a folded state (for example, FIG. 6B), only the second display area 662 may be determined to be the active area.

According to an embodiment, in case that the first foldable housing structure 610 and 620 is in a folded state and the second foldable housing structure 610 and 630 is in an unfolded state (or in an intermediate state) (for example, FIG. 6C), only the third display area 663 may be determined to be the active area.

According to an embodiment, the electronic device 600 may include at least one front camera having a lens facing the front surface of the electronic device 600. For example, the electronic device 600 may include a second front camera 671 positioned under the second display area 661, a first front camera 672 positioned under the first display area 662, and a third front camera 673 positioned under the third display area 663.

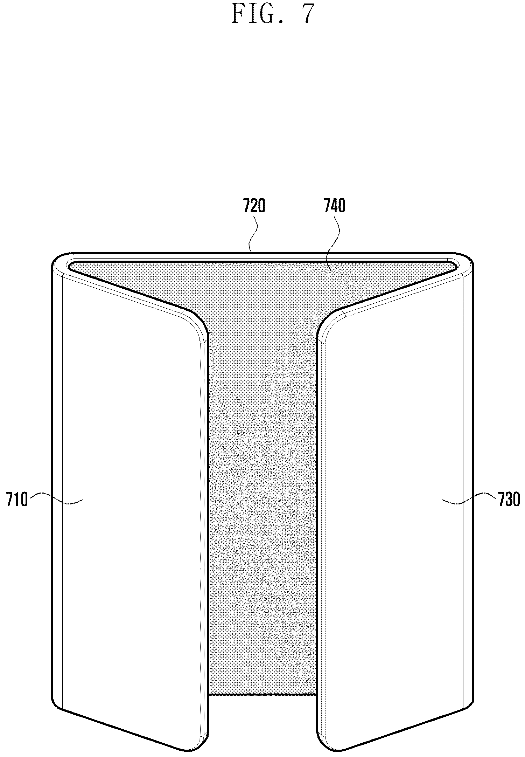

FIG. 7 to FIG. 12 illustrate various multi-folding-type housing structures applicable to electronic devices according to embodiments of the disclosure.

Referring to FIG. 7, the electronic device may have a gate-type foldable housing structure. The gate-type foldable housing structure may include three housings. Each of the three housings may have a display area of a flexible display disposed thereon. When the second housing 710 and the third housing 730 are rotated so as to be folded onto the first housing 720, the second display area disposed on the second housing 710, the first display area 740 disposed on the first housing 730, and the third display area disposed on the third housing 730 may be exposed to the outside. When the second housing 710 and the third housing 730 are rotated so as to be unfolded from the first housing 720, the display areas may be hidden from the outside. The first housing 710 and the third housing 730 may be configured so as not to overlap each other in case that both the first foldable housing structure 710 and 720 and the second foldable housing structure 720 and 730 are in a folded state, unlike the housing structures in FIG. 6D, which are folded onto each other.

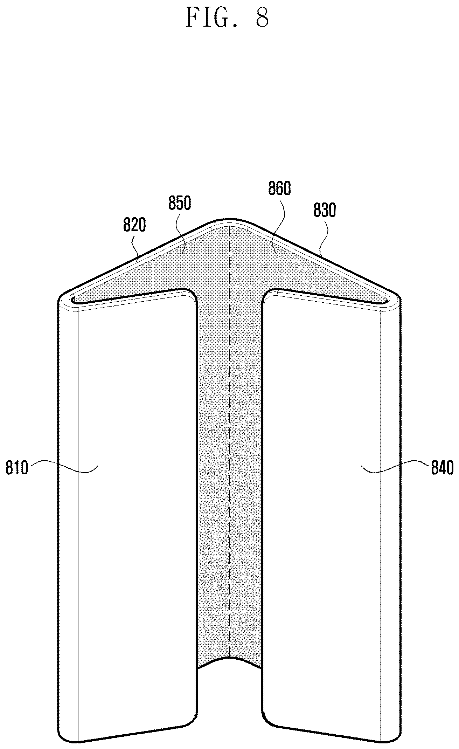

Referring to FIG. 8, the electronic device may have a double-gate-type foldable housing structure. The double-gate-type foldable housing structure may include four housings. Each of the four housings may have a display area of a flexible display disposed thereon. The second housing 810 may be coupled to the first housing 820 and configured to be rotatable, the first housing 820 may be coupled to the third housing 830 and configured to be rotatable, and the third housing 830 may be coupled to the fourth housing 840 and configured to be rotatable. For example, all housings may be formed in an infolding type. The second display area disposed on the second housing 810 and the first display area 850 disposed on the first housing 820 may be configured to face each other when the second housing 810 and the first housing 820 are in a folded state. The third display area 860 disposed on the third housing 830 and the fourth display area disposed on the fourth housing 840 may be configured to face each other when the third housing 830 and the fourth housing 840 are in a folded state. In an embodiment, in an unfolded state of the second housing 810 and the first housing 820, at least the second display area among the second display area and the first display area 850 may be exposed to the outside. In an embodiment, in an unfolded state of the third housing 830 and the fourth housing 840, at least the fourth display area among the third display area 830 and the fourth display area may be exposed to the outside. The first housing 820 and the third housing 830 may be configured to be foldable while the second housing 810 and the first housing 820 are folded and the third housing 830 and the fourth housing 840 are folded. For example, the second housing 810 and the fourth housing 840 may be configured to be positioned between the first housing 820 and the third housing 830 when all housings are folded. All display areas may be hidden from the outside when all housings are folded.

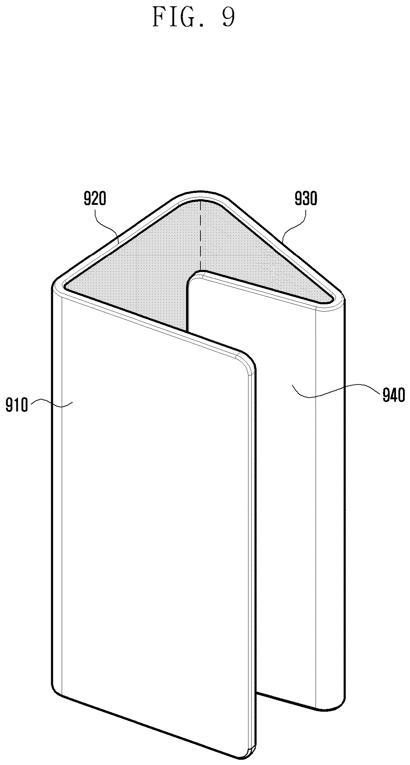

Referring to FIG. 9, the electronic device may have a roll-type foldable housing structure. The roll-type foldable housing structure may include four housings. Each of the four housings may have a display area of a flexible display disposed thereon. The second housing 910 may be coupled to the first housing 920 and configured to be rotatable, the first housing 920 may be coupled to the third housing 930 and configured to be rotatable, and the third housing 930 may be coupled to the fourth housing 940 and configured to be rotatable. All housings may be formed in an infolding type. As illustrated, the housings 910, 920, 930, and 940 may be configured to be folded as if paper is wrapped. All display areas may be hidden from the outside when all housings are folded.

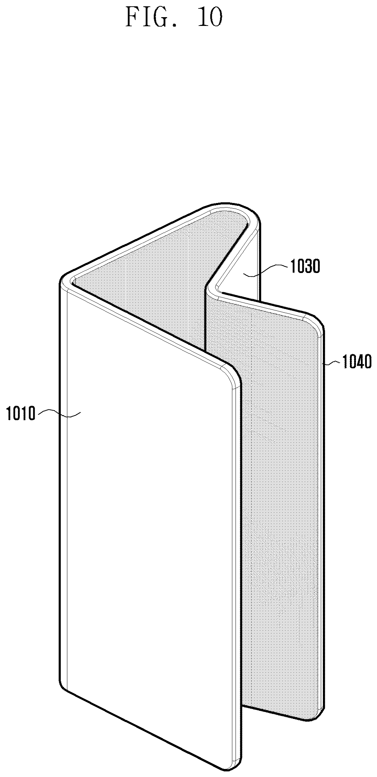

Referring to FIG. 10, the electronic device may have a double parallel-type foldable housing structure. The double parallel-type foldable housing structure may include four housings. Each of the four housings may have a display area of a flexible display disposed thereon. The second housing 1010 may be coupled to the first housing (020 and configured to be rotatable in an infolding type, the first housing 1020 may be coupled to the third housing 1030 and configured to be rotatable in an infolding type, and the third housing 1030 may be coupled to the fourth housing 1040 and configured to be rotatable in an outfolding type. The second housing 1010 and the first housing 1020 may be configured to be foldable in a folded state of the third housing 1030 and the fourth housing 1040. In other words, the third housing 1030 and the fourth housing 1040 may be configured to be positioned between the second housing 1010 and the first housing 1020 in a folded state. All display areas may be hidden from the outside when all housings are folded.

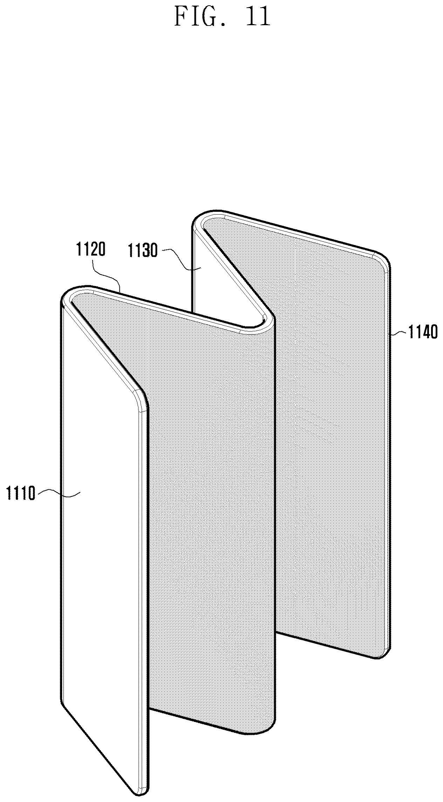

Referring to FIG. 11, the electronic device may have an accordion-type foldable housing structure. The accordion-type foldable housing structure may include four housings. Each of the four housings may have a display area of a flexible display disposed thereon. The second housing 1110 may be coupled to the first housing 1120 and configured to be rotatable in an infolding type, the first housing 1120 may be coupled to the third housing 1130 and configured to be rotatable in an outfolding type, and the third housing 1130 may be coupled to the fourth housing 1140 and configured to be rotatable in an infolding type. The first housing 1120 and the third housing 1130 may be configured to be positioned between the second housing 1110 and the fourth housing 1140 when all housings are folded. All display areas may be hidden from the outside when all housings are folded.

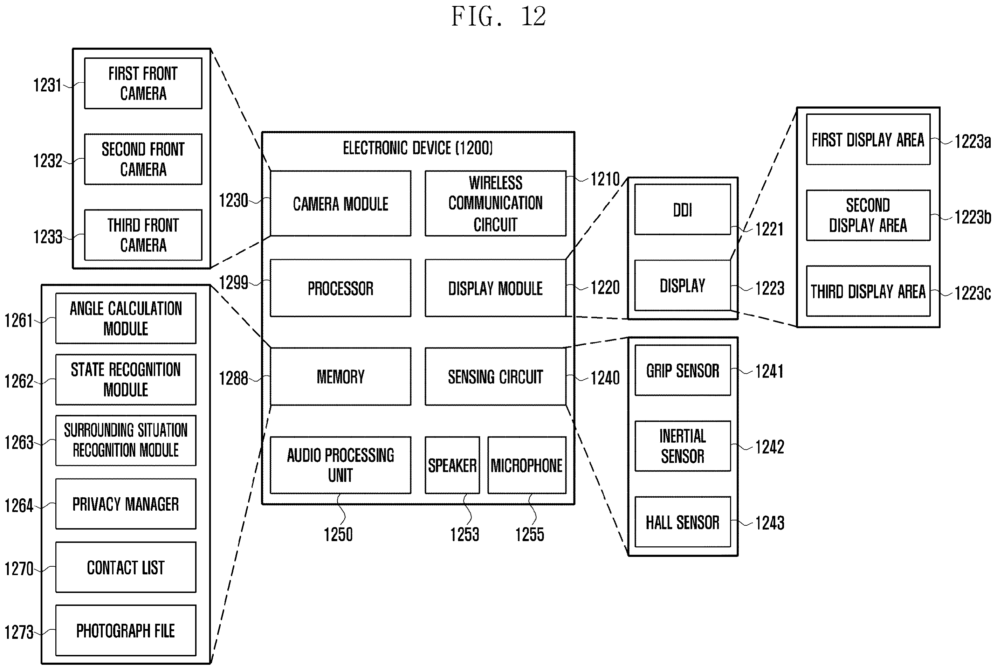

FIG. 12 is a block diagram of an electronic device 1200 according to an embodiment. Referring to FIG. 12, the electronic device 1200 (for example, the electronic device 101 in FIG. 1) is a portable device and may have various types of foldable housing structures described above. The electronic device 1200 may include a wireless communication circuit 1210, a display module 1220, a camera module 1230, a sensing circuit 1240, an audio processing circuit 1250, a speaker 1253, a microphone 1255, an angle calculation module 1261, a state recognition module 1262, a surrounding situation recognition module 1263, a privacy manager 1264, a memory 1288, and/or a processor 1299. For example, the display module 1220 may include a DDI 1221 and a display 1223.

The wireless communication circuit 1210, the display module 1220, the camera module 1230, the sensing circuit 1240, the audio processing circuit 1250, the memory 1288, and the processor 1299 may be implemented substantially identically to the wireless communication module 192, the display module 160, the sensor module 176, the audio module 170, the memory 130, and the processor 120 in FIG. 1, respectively, thereby performing identical functions.

According to an embodiment, the display 1223 may include a second display area 1223a (for example, 341, 441, 561, or 661) and a first display area 1223b (for example, 342, 442, 562, or 662). In case that the electronic device 1200 has a multi-foldable housing structure, the electronic device 1200 may further include a third display area 1223c (for example, 573 or 673).

In an embodiment, the camera module 1230 may include a second front camera 1231 (for example, 371, 471, 571, or 671). In an embodiment, the camera module 1230 may further include a first front camera 1232 (for example, 372, 472, 572, or 672). In an embodiment, in case that the electronic device 1200 has a multi-foldable housing structure, the electronic device 1200 may further include a third front camera 1233 (for example, 573 or 673).

In an embodiment, the sensing circuit 1240 may generate data necessary to determine the location at which the user is holding the electronic device 1200. The sensing circuit 1240 may also generate data necessary to determine the angle between the housings and the state of the foldable housing structure. In an embodiment, the sensing circuit 1240 may include a grip sensor 1241, an inertial sensor 1242, and/or a Hall sensor 1243.

According to an embodiment, the grip sensor 1241 may be electrically connected to a conductor formed on a side surface of the electronic device 1200. For example, the grip sensor 1241 may generate data (for example, data indicating the amount of change in capacitance) necessary to recognize that an external object, such as the user's hand, has contacted the conductor, and may output the data to the processor 1299. In an embodiment, the grip sensor 1241 may be disposed in the internal space of the electronic device 1200 so as to be adjacent to the conductor. For example, in case that the electronic device 1200 is formed to have the multi-foldable housing structure 610, 620, and 630 in FIG. 6, and in case that at least a part of the second housing 610, at least a part of the first housing 620, and a part of the third housing 630 include a conductor, the grip sensor 1241 may include a first grip sensor disposed adjacent to the metal included in the second housing 610, a second grip sensor positioned adjacent to the metal included in the first housing 620, and a third grip sensor positioned adjacent to the metal included in the third housing 630. The grip sensor 1241 may generate data indicating the amount of change in capacitance and may output the data to the processor 1299. For example, the processor 1299 may determine the location of the user's hand that contacts the electronic device 1200, based on the data received from the grip sensor 1241.

According to an embodiment, the inertial sensor 1242 may generate data used to calculate the direction of application of a force applied to the foldable housing structure and/or the angle of the foldable housing structure, or to determine whether the foldable housing structure is open or closed, and may output the data to the processor 1299. For example, in case that the electronic device 1200 is formed to have the multi-foldable housing structure 610, 620, and 630 in FIG. 6, the inertial sensor 1242 may include a first inertial sensor (for example, an acceleration sensor and/or a gyro sensor) disposed in the internal space of the second housing 610 so as to generate data corresponding to the position and/or movement (for example, six-axis or nine-axis angular velocity and/or acceleration) of the second housing 610, a second inertial sensor disposed in the internal space of the first housing 620 so as to generate data corresponding to the position and/or movement of the first housing 620, and/or a third inertial sensor disposed in the internal space of the third housing 630 so as to generate data corresponding to the position and/or movement of the third housing 630. In an embodiment, the Hall sensor 1243 may generate data used to calculate the direction of application of a force applied to the foldable housing structure and/or the angle of the foldable housing structure, or to determine whether the foldable housing structure is open or closed, and may output the data to the processor 1299. For example, the Hall sensor 1243 may measure the intensity of a magnetic field and generate data corresponding to the measured magnetic field intensity. The Hall sensor 1243 may be attached to a hinge assembly or disposed in a housing internal space. For example, in case that the electronic device 1200 is formed to have the multi-foldable housing structure 610, 620, and 630 in FIG. 6, the Hall sensor 1243 may include a first Hall sensor attached to the first hinge assembly 640 and a second Hall sensor attached to the second hinge assembly 650. The processor 1299 may determine the angle between housings, based on data received from the inertial sensor 1242 and/or the Hall sensor 1243. The processor 1299 may determine whether the foldable housing structure is open or closed and the state thereof, based on the determined angle.

In an embodiment, the angle calculation module 1261 may calculate the angle of housings, based on data received from the sensing circuit 1240 (for example, the inertial sensor 1242 and/or the Hall sensor 1243). For example, the angle calculation module 1261 may receive data indicating movements of the first housing from the first inertial sensor, and may receive data indicating movements of the second housing coupled to the first housing through the hinge assembly from the second inertial sensor. The angle calculation module 1261 may calculate the angle by using the data received from the two inertial sensors. The angle calculation module 1261 may receive data corresponding to the intensity of a magnetic field from the Hall sensor 1243 attached to the hinge assembly, and calculate the angle by using the received data. The angle calculation module 1261 may calculate the angle by using data received from the inertial sensor 1242 and data received from the Hall sensor 1243.

According to an embodiment, the state recognition module 1262 may recognize that the foldable housing structure is in an unfolded state, a folded state, or an intermediate state, for example, based on the calculated angle. For example, in case that the calculated angle is between about 0 degree and 10 degrees, the state recognition module 1262 may determine that the foldable housing structure is in a folded state. In case that the calculated angle is about 180 degrees, the state recognition module 1262 may determine that the foldable housing structure is in an unfolded state. In case that the angle is between about 10 degrees and 179 degrees, the state recognition module 1262 may determine that the foldable housing structure is in an intermediate state.

According to an embodiment, the surrounding situation recognition module 1263 may receive an image from the camera module 1230 and may determine whether observers other than the user who owns the electronic device 1200 exist in the received image or not. As an example, the surrounding situation recognition module 1263 may recognize faces in the image by using an algorithm for face recognition (for example, a face recognition model trained through machine learning). For example, based on multiple faces existing in the image as a result of recognition, the surrounding situation recognition module 1263 may determine that observers other than the user exist in the image.

According to an embodiment, the surrounding situation recognition module 1263 may specify observer faces among faces recognized from the image. For example, the surrounding context recognition module 1263 may compare the user's face image stored in the memory 1288 with each of the recognized faces, thereby distinguishing the user face and observer faces among the recognized faces. The surrounding situation recognition module 1263 may track eyes of observer faces, thereby determining display areas viewed by observers among display areas 1211, 1212, and 1213.

According to an embodiment, the privacy manager 1264 may perform a privacy mode (in other words, a secret mode) by controlling the display 1223 in order to prevent the user's personal information from being exposed to observers through the display 1223, based on data received from at least one of the modules 1261, 1262, and 1263 described above. The privacy manager 1264 may be executed by the processor 1299 while the display 1223 is activated (for example, the display 1223 is supplied with power such that the screen is turned on) and visual information (for example, an application execution screen) is thus provided through the display 1223.

According to an embodiment, the privacy manager 1264 may identify the angle between the second housing on which the second display area 1223a is disposed and the first housing on which the first display area 1223b is disposed (for example, the angle between the second housing 610 and the first housing 620 in FIG. 6) (hereinafter, referred to as the first angle) from the angle calculation module 1261. The privacy manager 1264 may identify the angle between the second housing and the third housing on which the third display area 1223c is disposed (for example, the angle between the second housing 610 and the third housing 630 in FIG. 6) (hereinafter, referred to as the second angle) from the angle calculation module 1261. The second display area 1223a is positioned between two display areas 1223b and 1223c and may correspond to the second display area 661 in FIG. 6, for example. In an embodiment, the privacy manager 1264 may activate the surrounding situation recognition module 1263, based on at least one of the first angle and the second angle being equal to or smaller than a designated threshold angle value. The threshold angle value may be configured to be a value smaller than about 179 degrees, between 0 degree and 180 degrees. In an embodiment, the privacy manager 1264 may display a first icon (for example, a lock icon) corresponding to the first display area 1223b on the display 1223, based on the first angle being equal to or smaller than a first threshold angle value, and observers being identified as existing around the user through the surrounding situation recognition module 1263. For example, the privacy manager 1264 may display the first icon in the first display area 1223b or the second display area 1223a. In an embodiment, the privacy manager 1264 may perform screen control for lowering the visibility of first visual information (for example, an application execution screen) displayed through the first display area 1223b, based on a touch input regarding the first icon being received from the display 1223. As an example, the privacy manager 1264 may blur the first visual information or may lower the image quality or sharpness of the visual information, thereby generating a lock image protecting information from observers, and may display the lock image in the first display area 1223b. As another example, the privacy manager 1264 may display a lock image having a designated color (for example, black) in the first display area 1223b instead of the first visual information. In an embodiment, the privacy manager 1264 may display a second icon (for example, a lock icon) corresponding to the third display area 1223c on the display 1223, based on the second angle being equal to or smaller than a second threshold angle value (which may be equal to or different from the first threshold angle value), and observers being identified as existing around the user through the surrounding situation recognition module 1263. For example, the privacy manager 1264 may display the second icon in the third display area 1223c or the second display area 1223a. For example, the privacy manager 1264 may perform screen control for lowering the visibility of second visual information (for example, an application execution screen) displayed through the third display area 1223c, based on receiving a touch input regarding the second icon from the display 1223, as in the method exemplified above.

According to an embodiment, the privacy manager 1264 may display a third icon (for example, an unlock icon) on the display 1223 instead of the first icon, based on a touch input regarding the first icon received from the display 1223. For example, the privacy manager 1264 may display the third icon in the first display area 1223b or the second display area 1223a. For example, the privacy manager 1264 may end the screen control for lowering the visibility of the first visual information and may resume the display of the first visual information, based on a touch input regarding the third icon being received from the display 1223. The privacy manager 1264 may display a fourth icon (for example, an unlock icon) on the display 1223 instead of the second icon, based on a touch input regarding the second icon being received from the display 1223. For example, the privacy manager 1264 may display the fourth icon in the third display area 1223c or the second display area 1223a. The privacy manager 1264 may end the screen control for lowering the visibility of the second visual information and may resume the display of the second visual information, based on a touch input regarding the fourth icon being received from the display 1223.

In an embodiment, the privacy manager 1264 may end the screen control for lowering the visibility of the first visual information and may resume the display of the first visual information, based on the first angle exceeding the first threshold angle value. In an embodiment, the privacy manager 1264 may end the screen control for lowering the visibility of the second visual information and may resume the display of the second visual information, based on the second angle exceeding the second threshold angle value.

According to an embodiment, the privacy manager 1264 may identify that an observer is gazing at the display 1223, through the surrounding situation recognition module 1263. Based on such identification, the privacy manager 1264 may display the first icon and/or the second icon on the display 1223. For example, based on an observer gazing at the first display area 1223b, the privacy manager 1264 may display the first icon in the first display area 1223b or the second display area 1223a. Based on an observer gazing at the third display area 1223c, the privacy manager 1264 may display the second icon in the third display area 1223c or the second display area 1223a. As another example, the privacy manager 1264 may display the first icon in the first display area 1223b or the second display area 1223a, based on the first angle being equal to or smaller than the first threshold angle value, and an observer gazing at the first display area 1223b. The privacy manager 1264 may display the second icon in the third display area 1223c or the second display area 1223a, based on the second angle being equal to or smaller than the second threshold angle value (which may be equal to or different from the first threshold angle value), and an observer gazing at the third display area 1223c.

In an embodiment, the privacy manager 1264 may determine whether there is a relationship (for example, friends, coworkers, or family members) between the user and an observer, based on a contact list 1270 and/or a photograph file 1273. For example, in case of identifying that a profile image corresponding to the observer's face exists on the contact list 1270, or that a photograph having an object corresponding to the observer's face exists in the photograph file 1273, the privacy manager 1264 may determine that the observer has a relationship with the user, and in case of identifying otherwise, may determine that the observer has no relationship with the user. According to an embodiment, the privacy manager 1264 may display the first icon and/or the second icon on the display 1223, at least based on determining that there is no relationship. For example, the privacy manager 1264 may display the first icon in the first display area 1223b or the second display area 1223a, based on determining that there is no relationship, and that the observer is gazing at the first display area 1223b. For example, the privacy manager 1264 may display the second icon in the third display area 1223c or the second display area 1223a, based on determining that there is no relationship, and that the observer is gazing at the third display area 1223c. As another example, the privacy manager 1264 may display the first icon in the first display area 1223b or the second display area 1223a, based on determining that the first angle is equal to or smaller than the first threshold angle value, that there is no relationship, and that the observer is gazing at the first display area 1223b. The privacy manager 1264 may display the second icon in the third display area 1223c or the second display area 1223a, based on determining that the second angle is equal to or smaller than the second threshold angle value (which may be equal to or different from the first threshold angle value), that there is no relationship, and that the observer is gazing at the third display area 1223c.

According to an embodiment, at least based on identifying an observer existing around the user through the surrounding situation recognition module 1263, the privacy manager 1264 may notify the user of a warning sound for warning the user of personal information exposure (for example, "An unauthenticated observer has been recognized. Do you want to switch the potentially exposed screen to a privacy mode?") through the speaker 1253. The means of notification is not limited to the speaker, and may also be an external device (for example, a wireless headset) capable of wirelessly communicating with the electronic device 1200. For example, the electronic device 1200 may transmit audio data corresponding to the warning sound to the external device through the wireless communication circuit 1210. The privacy manager 1264 may receive the user's voice in response to the auditory notification. The privacy manager 1264 may recognize the user's intention through voice recognition (for example, automatic speech recognition (ASR)) regarding the received user's voice, and may perform screen control based on the recognized user intention. For example, the privacy manager 1264 may perform screen control for lowering the visibility of first visual information displayed in the first display area 1223b, based on identifying that an observer is gazing at the first display area 1223b through the surrounding situation recognition module 1263, and recognizing that the user intends to prevent exposure. The privacy manager 1264 may perform screen control for lowering the visibility of second visual information displayed in the third display area 1223c, based on identifying that an observer is gazing at the third display area 1223c through the surrounding situation recognition module 1263, and recognizing that the user intends to prevent exposure.

According to an embodiment, based on an observer being identified as existing around the user through the surrounding situation recognition module 1263, the privacy manager 1264 may calculate the distance between the observer and the electronic device 1200 by using images received from multiple front cameras (for example, the second front camera 1231 and the first front camera 1232 (and/or the third front camera 1233). For example, the privacy manager 1264 may acquire a first location value (for example, a coordinate value) of a first object (observer face) from an image obtained from the second front camera 1231, and may acquire a second location value of a second object (observer face) from an image obtained from the first front camera 1232. The privacy manager 1264 may calculate the distance between the observer and the electronic device 1200 by using the first location value, the second location value, and the distance value indicating the interval between the two front cameras 1231 and 1232. When calculating the distance, additional information (for example, a third location value of a third object (observer face) from an image acquired from the third front camera 1233) may be further used. The privacy manager 1264 may display the first icon and/or the second icon on the display 1223, at least based on the calculated distance being equal to or smaller than a designated threshold distance value. As an example, the privacy manager 1264 may display the first icon in the first display area 1223b or the second display area 1223a, based on the first angle being equal to or smaller than the first threshold angle value, and the calculated distance being equal to or smaller than the threshold distance value. The privacy manager 1264 may display the second icon in the third display area 1223c or the second display area 1223a, based on the second angle being equal to or smaller than the second threshold angle value (which may be identical to or different from the first threshold angle value), and the calculated distance being equal to or smaller than the threshold distance value. As another example, the privacy manager 1264 may display the first icon in the first display area 1223b or the second display area 1223a, based on determining that the calculated distance is equal to or smaller than the threshold distance value, that there is no relationship between the user and the observer, and that the observer is gazing at the first display area 1223b. The privacy manager 1264 may display the second icon in the third display area 1223c or the second display area 1223a, based on determining that the calculated distance is equal to or smaller than the threshold distance value, that there is no relationship between the user and the observer, and that the observer is gazing at the third display area 1223c. As another example, the privacy manager 1264 may display the first icon in the first display area 1223b or the second display area 1223a, based on determining that the first angle is equal to or smaller than the first threshold angle value, that the calculated distance is equal to or smaller than the threshold distance value, that there is no relationship between the user and the observer, and that the observer is gazing at the first display area 1223b. The privacy manager 1264 may display the second icon in the third display area 1223c or the second display area 1223a, based on determining that the second angle is equal to or smaller than the second threshold angle value, that the calculated distance is equal to or smaller than the threshold angle value, that there is no relationship between the user and the observer, and that the observer is gazing at the third display area 1223c.

According to an embodiment, the privacy manager 1264 may perform screen control for lowering the visibility of first visual information displayed through the first display area 1223b and second visual information displayed through the third display area 1223c, based on the first angle and the second angle being equal to or smaller than a first threshold angle value (for example, 90 degrees). The privacy manager 1264 may end the screen control for lowering the visibility and may resume the display of the first visual information and the second visual information, based on the first angle and the second angle exceeding a second threshold angle value (which may be equal to or larger than the first threshold angle value, for example).

According to an embodiment, the privacy manager 1264 may activate the surrounding situation recognition module 1263 while visual information is provided through the display 1223. Based on an observer being identified around the user through the surrounding situation recognition module 1263, the privacy manager 1264 may display an image acquired from the camera module 1230 or a warning phrase indicating that the current situation requires attention to the back side, on the display 1220.

The above-described angle calculation module 1261, state recognition module 1262, surrounding situation recognition module 1263, and privacy manager 1264 may be stored as software in the memory 1288 and executed by the processor 1299. The processor 1299 may store data which is available when the software is executed in the memory 1288. For example, the processor 1299 may store the contact list 1270 and the photograph file 1273 in the memory 1288 and may allow the privacy manager 1264 to access the contact list 1270 and the photograph file 1273. The processor 1299 may store data generated or acquired by executing software (for example, a message received through the wireless communication circuit 1210, an image acquired through the camera module 1230, or voice data acquired through the audio processing circuit 1250) in the memory 1288. Hereinafter, operations of the processor 1299 according to an embodiment of the disclosure will be described in detail.

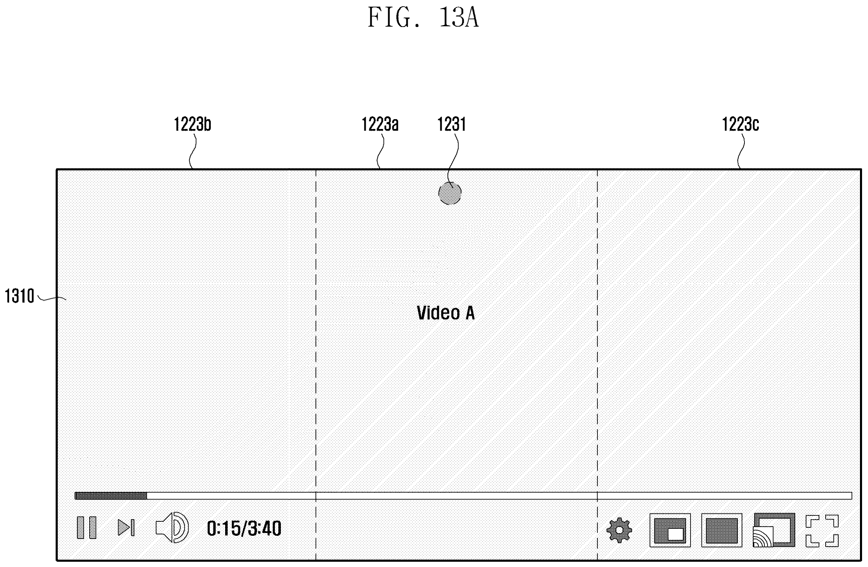

FIG. 13A to FIG. 13G are diagrams for describing operations of the processor 1299 for user privacy according to an embodiment of the disclosure.

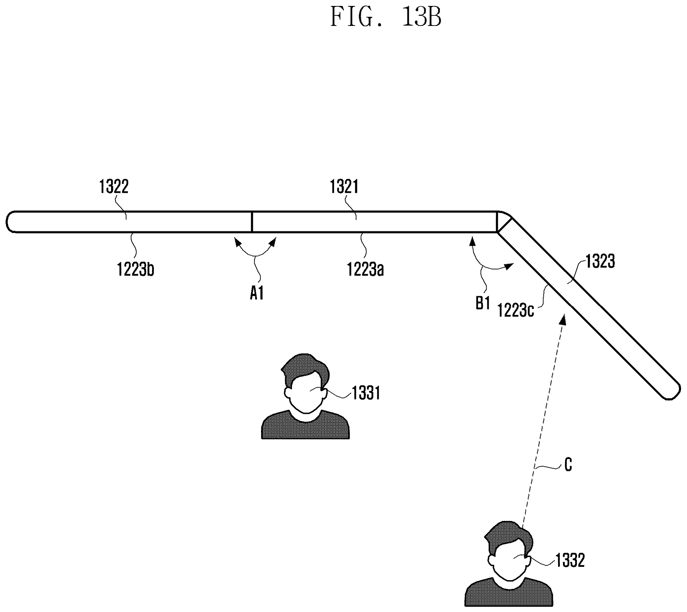

Referring to FIG. 13A and FIG. 13B, the processor 1299 may display an execution screen 1310 of a video playback application on the entire display areas 1223a, 1223b, and 1223c. While the execution screen 1310 is displayed, the processor 1299 may calculate the first angle A1 between the second housing 1321 on which the second display area 1223a is disposed and the first housing 1322 on which the first display area 1223b is disposed, by using data received from the sensing circuit 1240. While the execution screen 1310 is displayed, the processor 1299 may calculate the second angle B1 between the second housing 1321 and the third housing 1323 on which the third display area 1223c is disposed, by using data received from the sensing circuit 1240. According to an embodiment, the processor 1299 may activate the second front camera 1231, based on at least one of the first angle A1 and the second angle B1 (for example, the second angle B) being equal to or smaller than a designated threshold angle value. According to another embodiment, the processor 1299 may also activate the second front camera 1231 while the display 1223 is activated, regardless of whether the angles are equal to or smaller than the threshold angle value. The processor 1299 may receive an image from the second front camera 1231 and may recognize multiple faces 1331 and 1332 in the received image. The processor 1299 may compare the user's face image stored in the memory 1288 with each of the recognized faces 1331 and 1332, thereby distinguishing the user face 1331 and the observer face 1332 from among the recognized faces. The processor 1299 may rack the eyes of the observer face 1332 and, as a result of the tracking, may determine that the eyes are gazing (C) at the third display area 1223c.

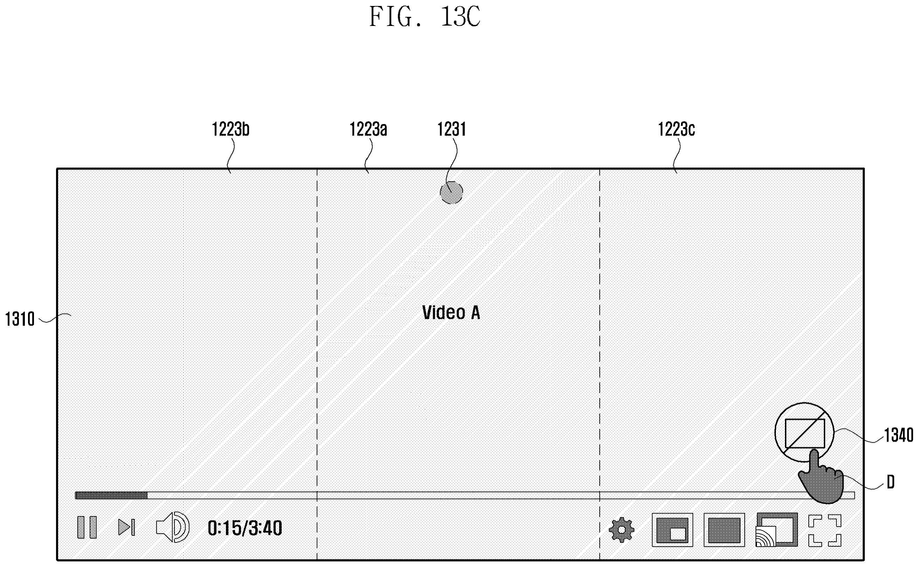

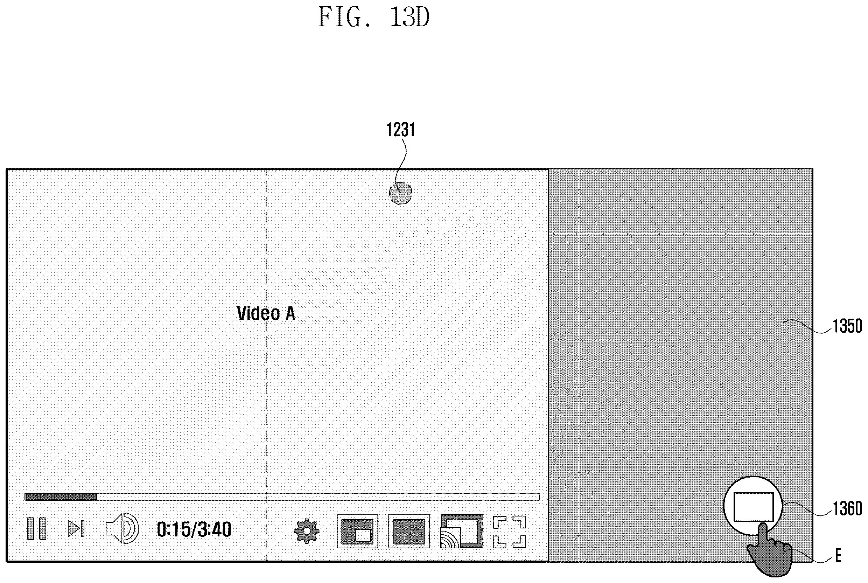

Referring to FIG. 13C and FIG. 13D, in an embodiment, the processor 1299 may display a first lock icon 1340 in the third display area 1223c, based on the observer's eyes gazing (C in FIG. 13B) at the third display area 1223c. According to another embodiment, the processor 1299 may also display the first lock icon 1340 in the third display area 1223c, based on the second angle B1 being equal to or smaller than a designated threshold angle value, regardless of the tracking result. The processor 1299 may reduce the execution screen 1310 so as to fit the size of the second display area 1223a and the first display area 1223b based on the user touching (D) the first lock icon 1340, may accordingly display the execution screen 1310 in the second display area 1223a and the first display area 1223b, and may display a lock image 1350 having a designated color (for example, black) in the third display area 1223c. The processor 1299 may display a first unlock icon 1360 in the third display area 1223c. The processor 1299 may end the display of the lock image 1350, based on the user's touch (E) on the first unlock icon 1360, and may expand the execution screen 1310 to the third display area 1223c, thereby displaying the execution screen 1310 across the entire display area as in FIG. 13A.

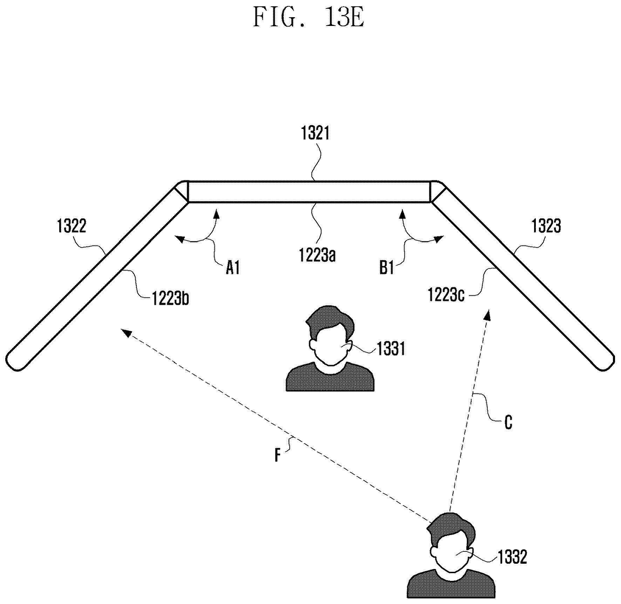

Referring to FIG. 13E, in an embodiment, the processor 1299 may activate the second front camera 1231, based on at least one of the first angle A1 and the second angle B1 (for example, both the first angle A1 and the second angle B1) being equal to or smaller than a designated threshold angle value. According to another embodiment, the processor 1299 may also activate the second front camera 1231 while the display 1223 is activated, regardless of whether the angles are equal to or smaller than the threshold angle value. The processor 1299 may receive an image from the second front camera 1231 and may recognize multiple faces 1331 and 1332 in the received image. The processor 1299 may compare the user's face image stored in the memory 1288 with each of the recognized faces 1331 and 1332, thereby distinguishing the user face 1331 and the observer face 1332 from among the recognized faces. The processor 1299 may track the eyes of the observer face 1332 and, as a result of the tracking, may recognize that the observer is gazing (C and F) at the first display area 1223b and the third display area 1223c.

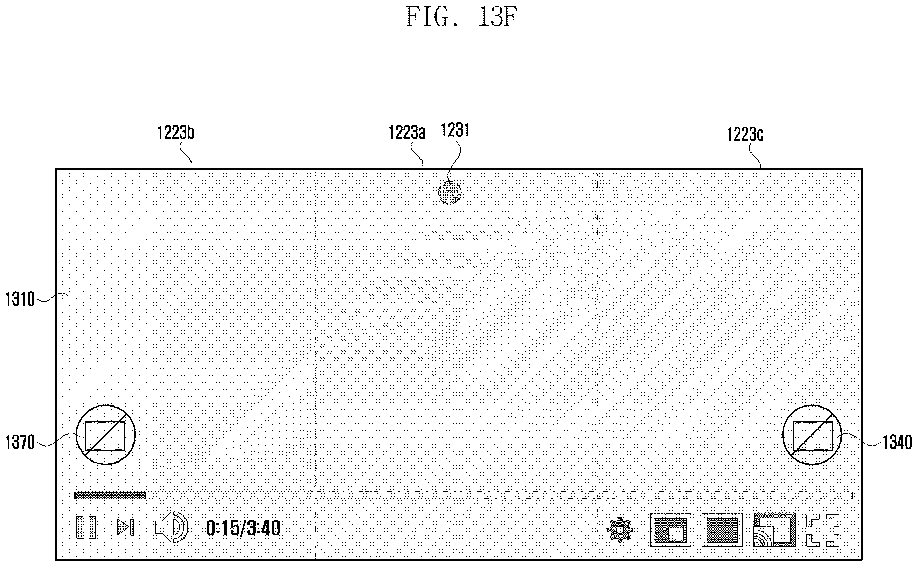

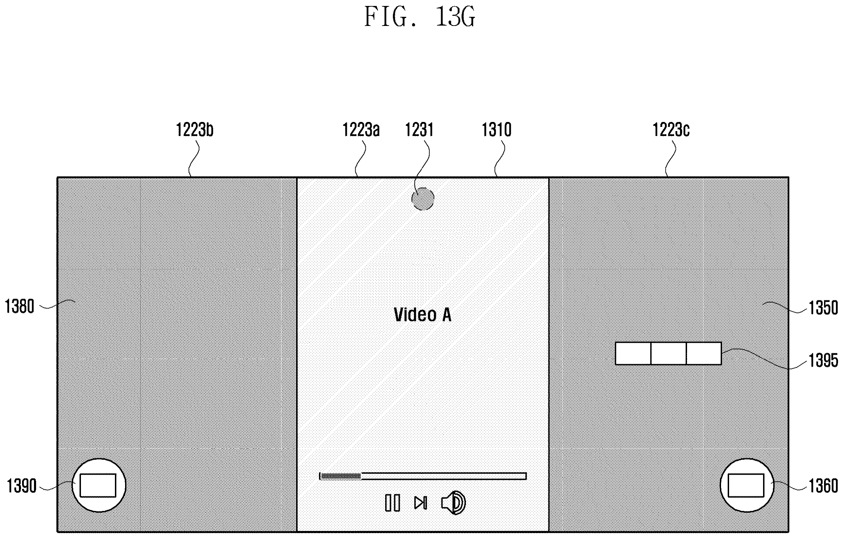

Referring to FIG. 13F and FIG. 13G, in an embodiment, the processor 1299 may display a first lock icon 1340 in the third display area 1223c at which an observer gazes (C), and may display a second lock icon 1370 in the first display area 1223b at which the observer gazes (F). According to another embodiment, the processor 1299 may display the first lock icon 1340 in the third display area 1223c and may display the second lock icon 1370 in the first display area 1223b, based on the first angle A1 and the second angle B1 being equal to or smaller than a designated threshold angle value, regardless of the tracking result. The processor 1299 may reduce the execution screen 1310 so as to fit the size of the second display area 1223a, based on the user touching the first lock icon 1340 and the second lock icon 1370, may accordingly display the execution screen 1310 in the second display area 1223a, and may display lock images 1380 and 1350 in the first display area 1223b and the third display area 1223c, respectively. The processor 1299 may display the first lock icon 1360 and the second unlock icon 1390 in the first display area 1223b and the third display area 1223c, respectively. For example, the processor 1299 may display a third unlock icon 1395 on the display 1223 (for example, in the third display area 1223c). The processor 1299 may expand the execution screen 1310 so as to fit the size of the second display area 1223a and the third display area 1223c in response to the user's touch on the first expansion icon 1360, and may display the same in the second display area 1223a and the third display area 1223c. The processor 1299 may expand the execution screen 1310 so as to fit the size of the second display area 1223a and the first display area 1223b in response to the user's touch on the second expansion icon 1390, and may display the same in the second display area 1223a and the first display area 1223b. The processor 1299 may expand the execution screen 1310 so as to fit the size of the entire display areas 1223a, 1223b, and 1223c in response to the user's touch on the third expansion icon 1395, and may display the same in the entire display areas.

According to an embodiment, there may be multiple observers, and the processor 1299 may recognize locations at which they gaze, by using images received from the second front camera 1231. Although it has been assumed in the above-described embodiment that the second front camera 1231 is used for image recognition, this assumption is not limitative, and at least one of the front cameras 1231, 1232, and 1233 may be used. Although it has been assumed in the above-described embodiment that the visual information displayed on the display 1223 is a video playback application, this assumption is not limitative, and various application execution screens may be displayed on the display 1223.

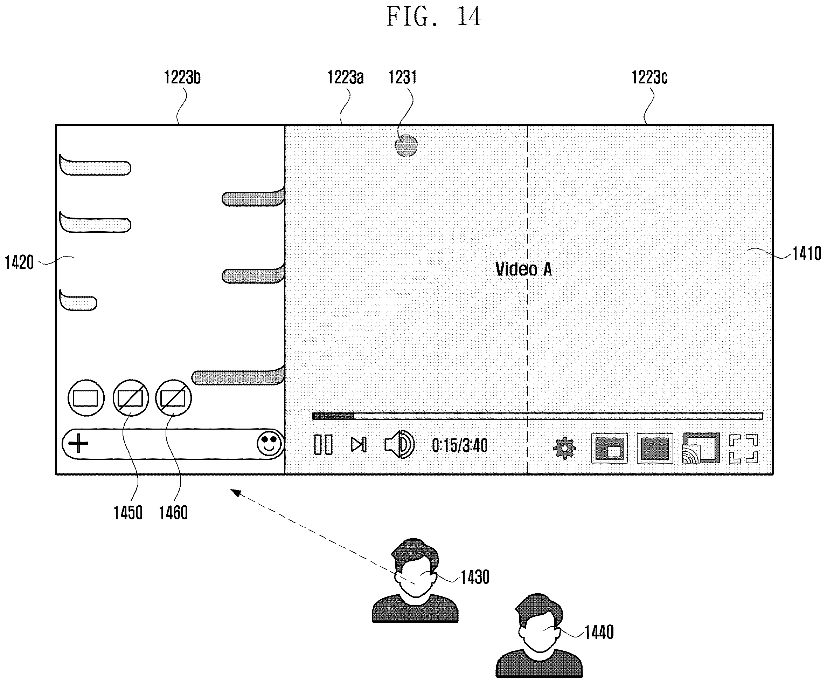

FIG. 14 is a diagram for describing operations of the processor 1299 for user privacy, based on user gaze tracking, according to an embodiment.

According to an embodiment, the processor 1299 may display a first execution screen (for example, an execution screen of a video playback application) 1410 in the second display area 1223a and the third display area 1223c, and may display a second execution screen (for example, an execution screen of a conversation application) 1420 in the first display area 1223b. The processor 1299 may activate the second front camera 1231 while app execution screens are displayed on the display 1223 as described above. The processor 1299 may receive an image from the second front camera 1231 and may recognize multiple faces 1430 and 1440 in the received image. The processor 1299 may compare the user's face image stored in the memory 1288 with each of the recognized faces 1430 and 1440, thereby distinguishing the user face 1430 and the observer face 1440 from among the recognized faces. The processor 1299 may track the eyes of the user face 1430 and, as a result of tracking, may determine that the eyes are gazing at the first display area 1223b. According to an embodiment, the processor 1299 may display a first lock icon 1450 corresponding to the second display area 1223a and a second lock icon 1460 corresponding to the third display area 1223c in the first display area 1223b, based on the user's eyes gazing at the first display area 1223b. According to another embodiment, the processor 1299 may display the first lock icon 1450 in the second display area 1223a and may display the second lock icon 1460 in the third display area 1223c, based on the user's eyes gazing at the first display area 1223b.

According to an embodiment, the processor 1299 may display a lock image in the second display area 1223a and may display the first execution screen 1410 in the third display area 1223c, based on the first lock icon 1450 being touched by the user. For example, the processor 1299 may reduce the first execution screen 1410 which has been displayed in all of the second display area 1223a and the third display area 1223c before the first lock icon 1450 is touched so as to fit the size of the third display area 1223c, and may then display the third display area 1223c.

According to an embodiment, the processor 1299 may display a lock image in the third display area 1223c and may display the first execution screen 1410 in the second display area 1223a, based on the second lock icon 1460 being touched by the user. For example, the processor 1299 may reduce the first execution screen 1410 which has been displayed in all of the second display area 1223a and the third display area 1223c before the second lock icon 1460 is touched so as to fit the size of the second display area 1223a, and may then display the same in the second display area 1223a.

According to an embodiment, the processor 1299 may display a lock image in the display areas 1223a and 1223c instead of the execution screen 1410, based on both lock images 1450 and 1460 being touched by the user, or may lower the visibility of the first execution screen 1410 and may display the same in the display areas 1223a and 1223c.

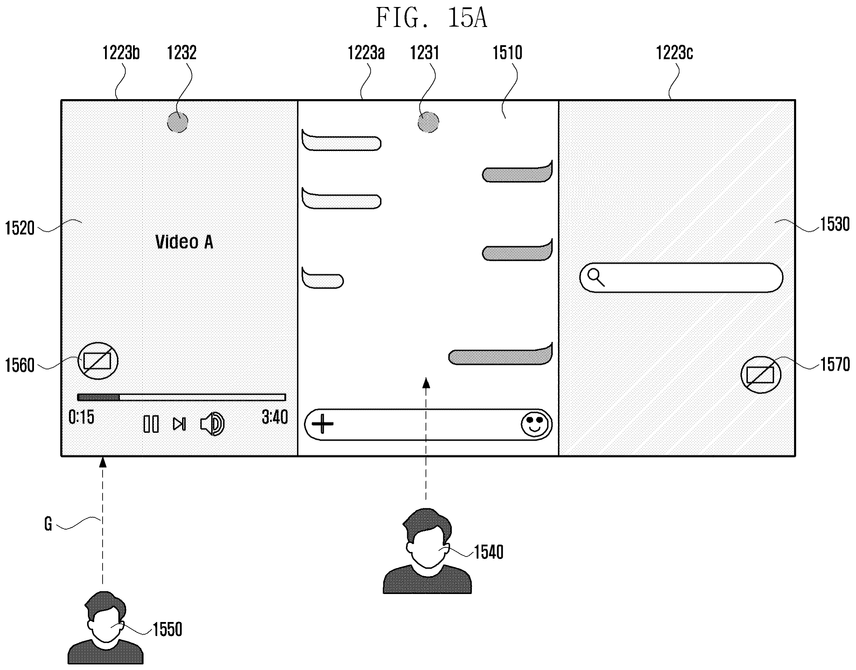

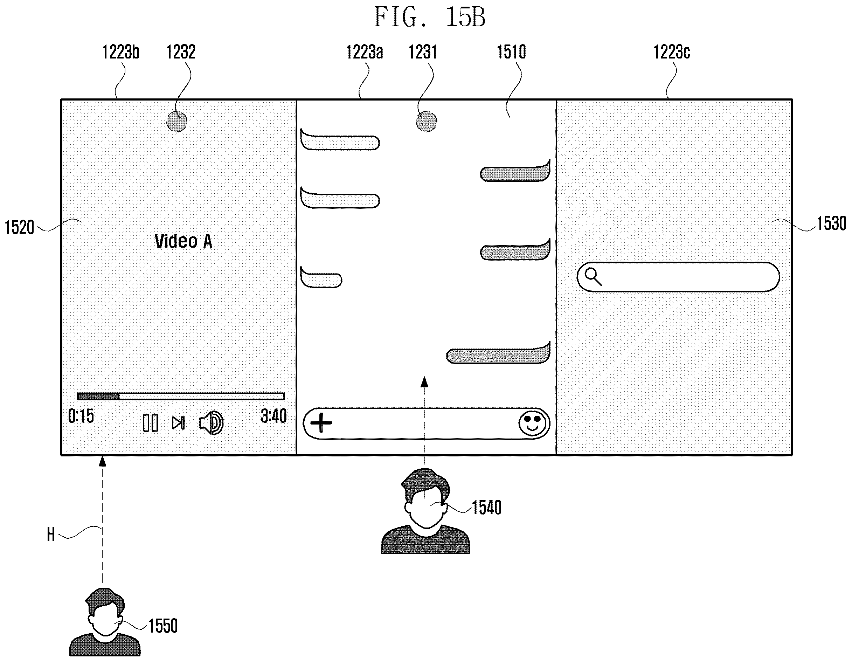

FIG. 15A and FIG. 15B are diagrams for describing operations of the processor 1299 for user privacy, based on calculation of the distance between the electronic device 1200 and an observer, according to an embodiment.

Referring to FIG. 15A and FIG. 15B, the processor 1299 may display a first execution screen (for example, an execution screen of a conversation application) 1510 in the second display area 1223a, may display a second execution screen (for example, an execution screen of a video playback application) 1520 in the first display area 1223b, and may display a third execution screen (for example, an execution screen of an Internet browser) 1530 in the third display area 1223c. The processor 1299 may activate one or more front cameras (for example, the second front camera 1231 and/or the first front camera 1232) while app execution screens are displayed on the display 1223 as described above. The processor 1299 may receive images from the second front camera 1231 and/or the first front camera 1232 and may recognize multiple faces 1540 and 1550 in the received images. The processor 1299 may compare the user's face image stored in the memory 1288 with each of the recognized faces 1540 and 1550, thereby distinguishing the user face 1540 and the observer face 1550 among the recognized faces. The processor 1299 may track the eyes of the user face 1540 and, as a result of tracking, may determine that the eyes are gazing at the second display area 1223a. The processor 1299 may acquire location values of the first object (observer face) and the second object (observer face) from images received from the second front camera 1231 and the first front camera 1232, and may calculate the distance between the observer and the electronic device 1200 by using the acquired location values and a distance value indicating the interval between the two front cameras 1231 and 1232.

Referring to FIG. 15A, in an embodiment, based at least on the calculated distance being "G" which is smaller than a designated threshold distance value, the processor 1299 may display a first lock icon 1560 in the first display area 1223b and may display a second lock icon 1570 in the third display area 1223c. According to an embodiment, based on the distance G being smaller than the threshold distance value, and the result of tracking the user's eyes indicating that the user is gazing at the second display area 1223a., the processor 1299 may display lock icons 1560 and 1570 in the first display area 1223b and the third display area 1223c, respectively, at which the user is not gazing. According to another embodiment, based on the distance G being smaller than the threshold distance value, and the angles A1 and B1 being smaller than the designated threshold angle value (refer to FIG. 13E), the processor 1299 may display lock icons 1560 and 1570 in the first display area 1223b and the third display area 1223c, respectively.

Referring to FIG. 15B, in case that the calculated distance is "H" which is equal to or larger than the designated threshold distance value, no lock icons 1560 and 1570 may be displayed.

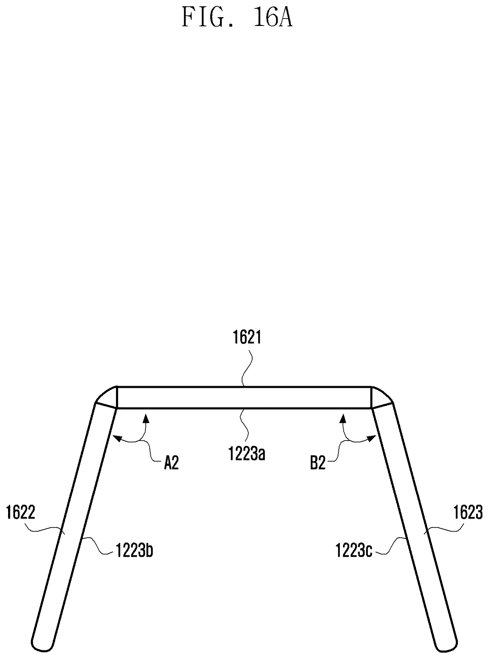

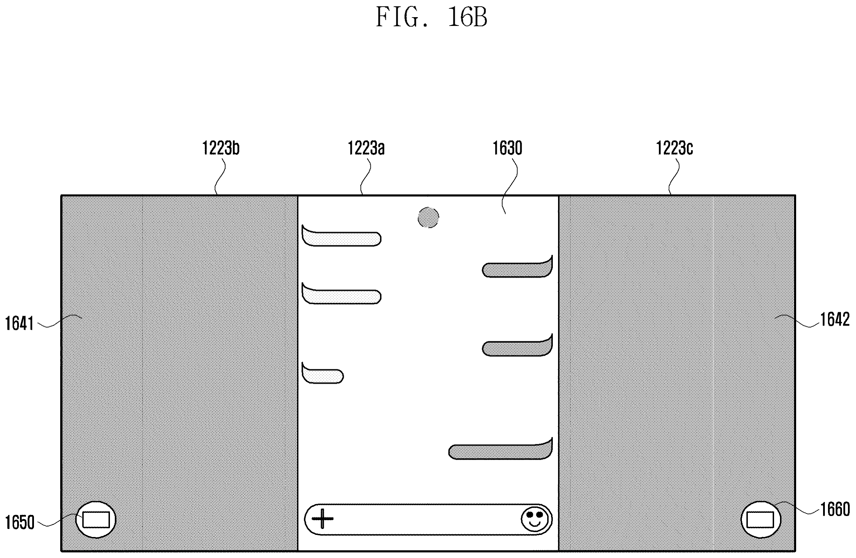

FIG. 16A and FIG.16B are diagrams for describing operations of the processor 1299 for user privacy based on calculation of the angle between housings according to an embodiment.

Referring to FIG. 16A, the processor 1299 may calculate the first angle A between the second housing 1621 on which the second display area 1223a is disposed and the first housing (1622 on which the first display area 1223b is disposed, by using data received from the sensing circuit 1240, while an execution screen is displayed on the display 1223. While the execution screen is displayed, the processor 1299 may calculate the second angle B between the second housing 1621 and the third housing 1623 on which the third display area 1223c is disposed, by using data received from the sensing circuit 1240.

Referring to FIG. 16A and FIG. 16B, in an embodiment, the processor 1299 may perform screen control for lowering the visibility of visual information displayed in the first display area 1223b and the third display area 1223c, based on the first angle A2 and the second angle B2 both being equal to or smaller than a designated first threshold angle value (for example, 90 degrees). For example, in case that the execution screen 1630 is displayed in the entire display area, the processor 1299 may reduce the execution screen 1630 so as to fit the size of the second display area 1223a and then display the same in the second display area 1223a, and may display lock images 1641 and 1642 in the first display area 1223b and the third display area 1223c, respectively. For example, the processor 1299 may display unlock icons 1650 and 1660 for resuming the display of visual information in the first display area 1223b and the third display area 1223c, respectively.

According to an embodiment, the processor 1299 may end the display of the lock images 1641 and 1642 and may resume the display of visual information in the first display area 1223b and the third display area 1223c, based on the first angle A2 and the second angle B2 being larger than the first threshold angle value, or being equal to or larger than a second threshold angle value designated to be larger than the first threshold angle value.

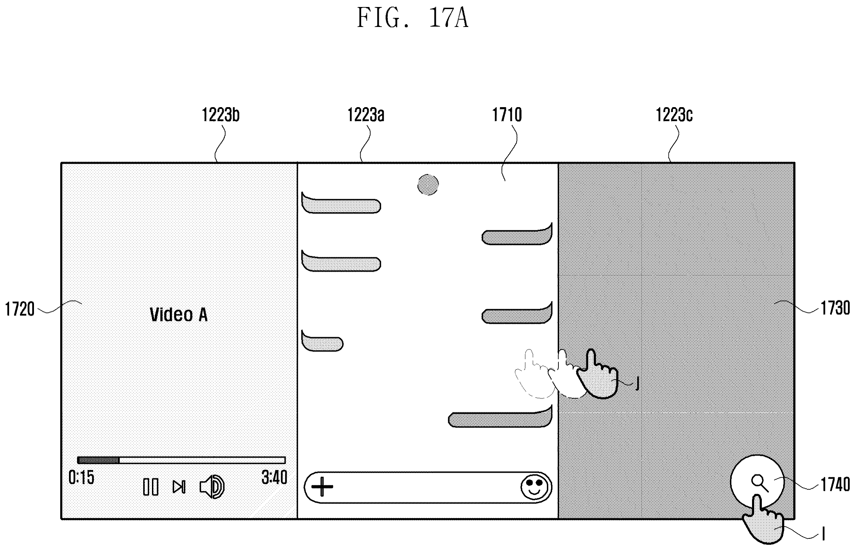

FIG. 17A to FIG. 17D are diagrams for describing operations of the processor 1299 for screen unlocking according to an embodiment.

Referring to FIG. 17A, the processor 1299 may display a first execution screen 1710 in the second display area 1223a, may display a second execution screen 1720 in the first display area 1223b, and may configure the third display area 1223c in a locked state for protecting information from observers. For example, the processor 1299 may display a lock image 1730 and an unlock icon 1740 in the third display area 1223c. In an embodiment, the processor 1299 may display the unlock icon 1740 such that the user can identify the application to be unlocked (for example, in the shape of a magnifying glass which is reminiscent of an Internet search application).

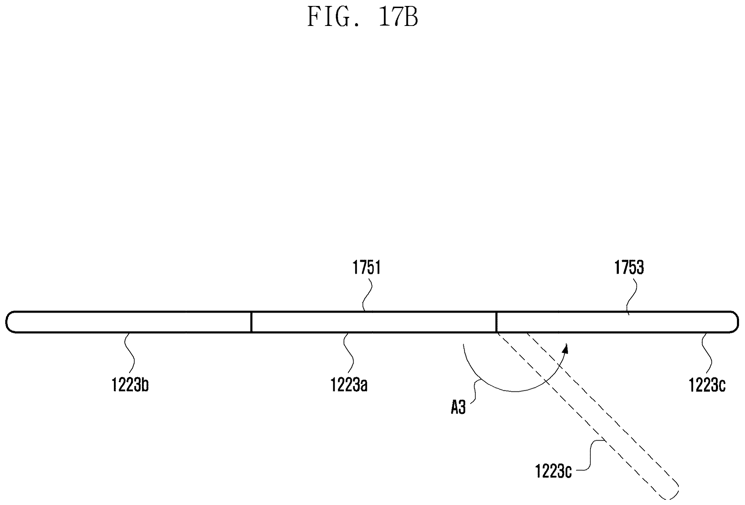

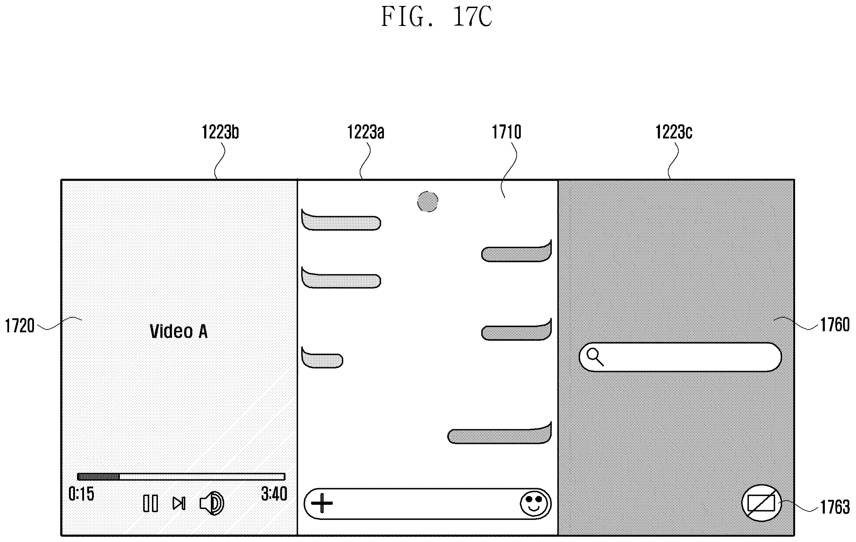

Referring to FIG. 17A, FIG. 17B, and FIG. 17C, in an embodiment, the processor 1299 may recognize, based on data received from the sensing circuit 1240, an increase in the angle A3 between the second housing 1751 on which the second display area 1223a is disposed and the third housing 1753 on which the third display area 1223c is disposed. Based on the increase in the angle A3 (for example, the angle A3 exceeding a first threshold angle value designated to display a lock image 1730 or a second threshold angle value designated to be larger than the same), the processor 1299 may end the display of the lock image 1730 and may display a third execution screen 1760 in the third display area 1223c. According to another embodiment, the processor 1299 may recognize that the foldable housing structure 1223a and 1223c has changed from a partially folding state to an unfolded state, based on data received from the sensing circuit 1240. Based on the change to the unfolded state, the processor 1299 may end the display of the lock image 1730 and may display a third execution screen 1760 in the third display area 1223c.

Referring to FIG. 17A and FIG. 17C, in an embodiment, the processor 1299 may end the display of the lock image 1730 and may display the first execution screen 1710 in the third display area 1223c, based on the user's touch I (for example, a drag or a swipe) on the unlock icon 1740. For example, the processor 1299 may display a lock icon 1763 corresponding to the third display area 1223c in the third display area 1223c. In response to the user's touch on the lock icon 1763, the processor 1299 may display the lock image 1730 and the unlock icon 1740 in the third display area 1223c as in FIG. 17A.

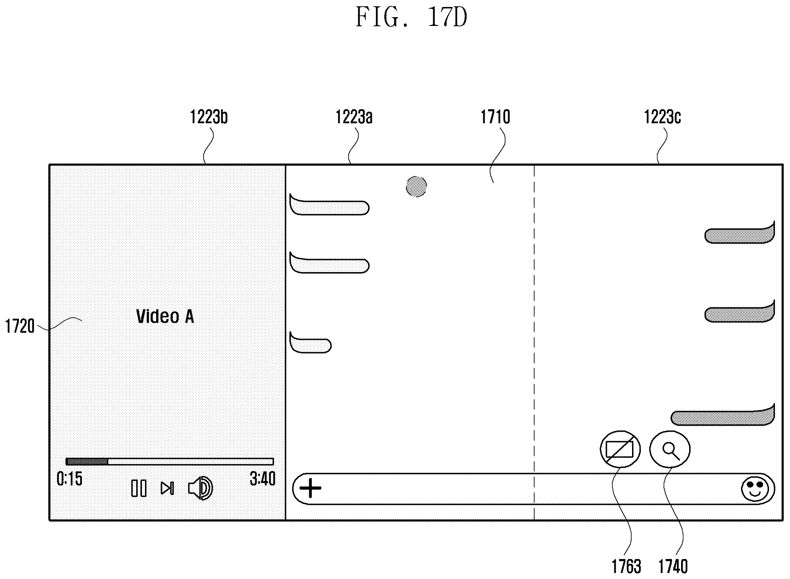

Referring to FIG. 17A and FIG. 17D, the processor 1299 may receive a touch gesture J which extends from the second display area 1223a to the third display area 1223c, through the display 1223. Based on receiving the touch gesture J, the processor 1299 may end the display of the lock image 1730, may enlarge the first execution screen 1710 so as to fit the size of the second display area 1223a and the third display area 1223c, and may display the same in the second display area 1223a and the third display area 1223c. For example, the processor 1299 may display a lock icon 1763 and an unlock icon 1740 in the third display area 1223c. In response to the user's touch on the lock icon 1763, the processor 1299 may reduce the first execution screen 1710 so as to fit the size of the second display area 1223a and then display the same in the second display area 1223a, and may display the lock image 1730 and the unlock icon 1740 in the third display area 1223c as in FIG. 17A. For example, in response to the user's touch on the unlock icon 1740, the processor 1299 may reduce the first execution screen 1710 so as to fit the size of the second display area 1223a and then display the same in the second display area 1223a, and may display a third execution screen 1760 in the third display area 1223c as in FIG. 17C.

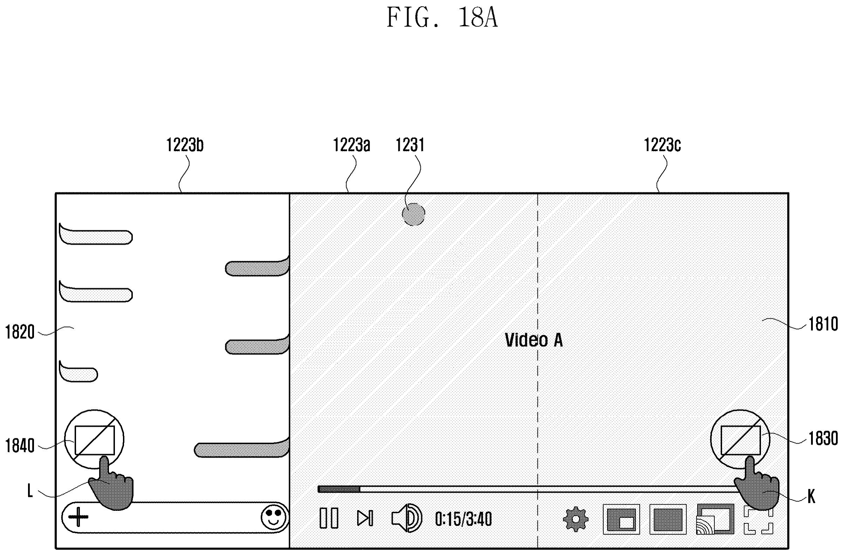

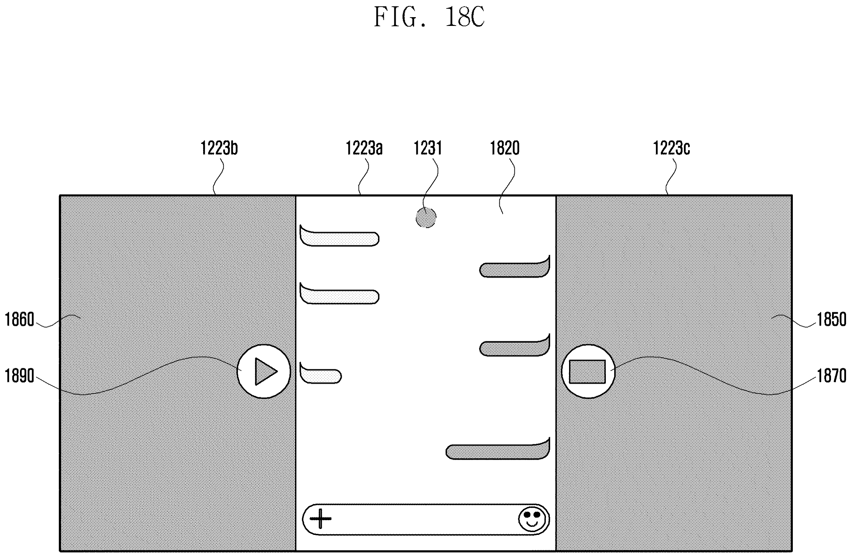

FIG. 18A, FIG. 8B, and FIG. 18C are diagrams for describing operations of the processor 1299 for screen locking according to an embodiment.

Referring to FIG. 18A, the processor 1299 may display a first execution screen 1810 in the second display area 1223a and the third display area 1223c and may display a second execution screen 1820 in the first display area 1223b. The processor 1299 may display a first lock icon 1830 corresponding to the third display area 1223c in the third display area 1223c and may display a second lock icon 1840 corresponding to the first display area 1223b in the first display area 1223b.

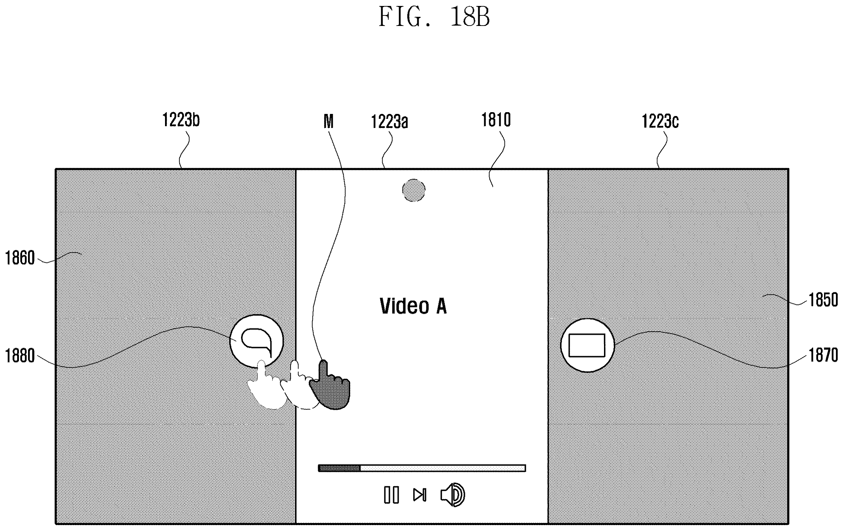

Referring to FIG. 18A and FIG. 18B, based on the user's touch K on the first lock icon 1830 and the user's touch L on the second lock icon 1840, the processor 1299 may reduce the first execution screen 1810 so as to fit the size of the second display area 1223a and then display the same in the second display area 1223a, may display a first lock image 1850 in the third display area 1223c, may end the display of the second execution screen 1820, and may display a second lock image 1860 in the first display area 1223b. For example, the processor 1299 may display a first unlock icon 1870 in the third display area 1223c and may display a second unlock icon 1880 in the first display area 1223b. For example, the processor 1299 may display the second unlock icon 1880 such that the user can identify the application to be unlocked (for example, in the shape of a speech bubble which is reminiscent of the application of the second execution screen 1820). In an embodiment, based on the user's touch on the first unlock icon 1870, the processor 1299 may end the display of the first lock image 1850, may enlarge the first execution screen 1810 so as to fit the size of the second display area 1223a and the third display area 1223c, and may display the same in the second display area 1223a and the third display area 1223c. For example, based on the user's touch on the second unlock icon 1880, the processor 1299 may end the display of the second lock image 1880 and may display the second execution screen 1820 in the first display area 1223b.

Referring to FIG. 18B and FIG. 18C, the processor 1299 may receive a touch gesture M (for example, a drag or a swipe) which extends from the second unlock icon 1880 to the second display area 1223a, through the display 1223. Based on receiving the touch gesture M, the processor 1299 may display a second execution screen 1820 corresponding to the second unlock icon 1880 in the second display area 1223a, and may display a third unlock icon 1890 corresponding to the first execution screen 1810 in the first display area 1223b instead of the second unlock icon 1880. For example, the processor 1299 may display the third unlock icon 1890 such that the user can identify the application to be unlocked (for example, in the shape of a playback button which is reminiscent of the application on the first execution screen 1810).

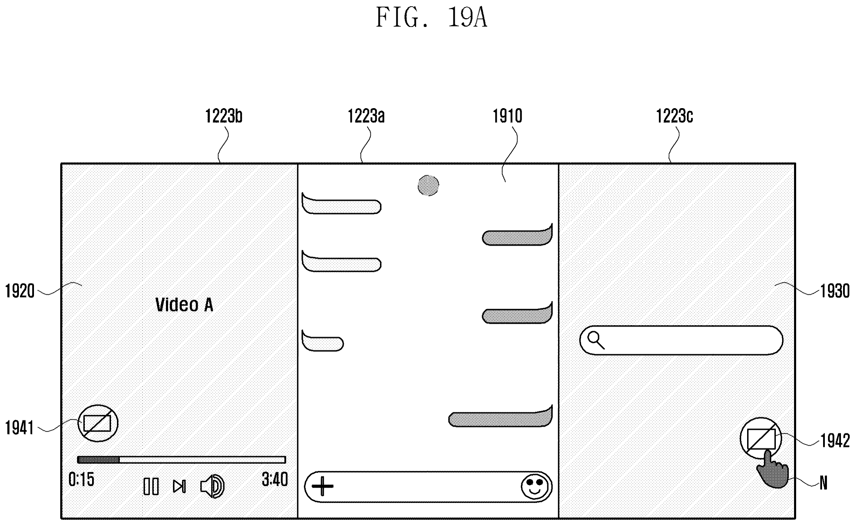

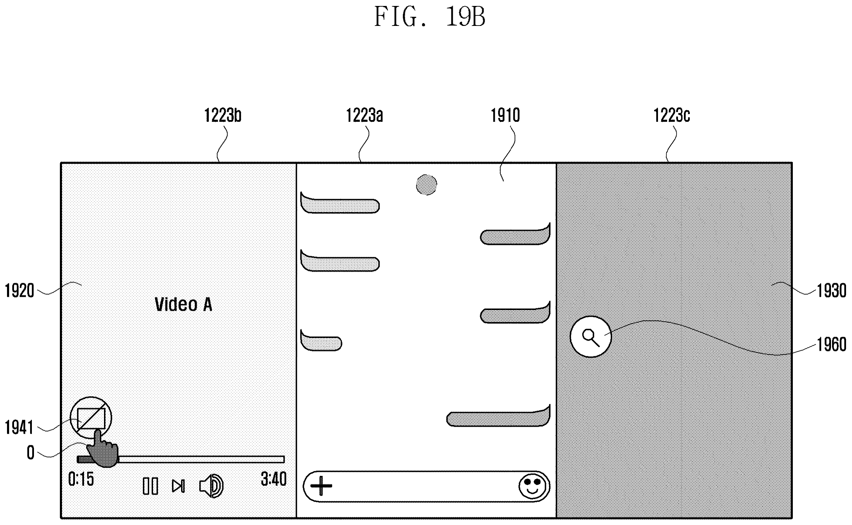

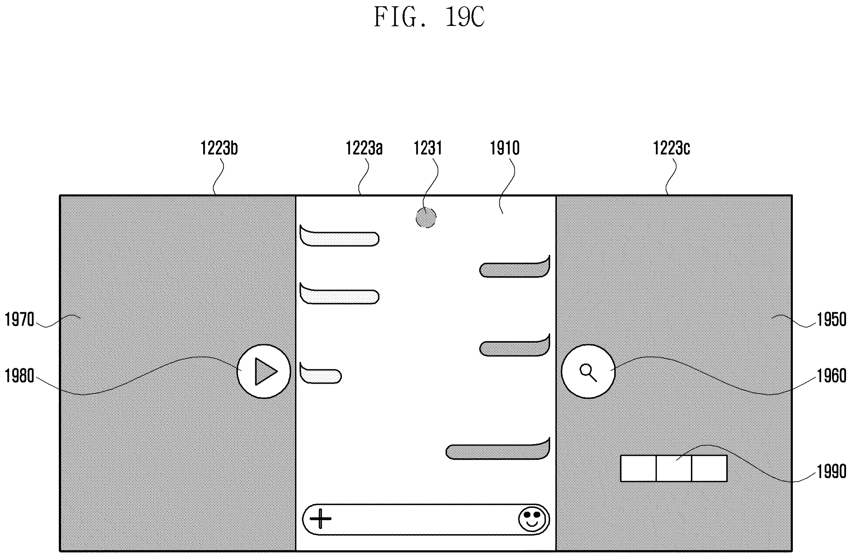

FIG. 19A, FIG. 19B, and FIG. 19C are diagrams for describing operations of the processor 1299 for screen locking according to an embodiment.

Referring to FIG. 19A, the processor 1299 may display a first execution screen 1910 in the second display area 1223a, may display a second execution screen 1920 in the first display area 1223b, and may display a third execution screen 1930 in the third display area 1223c. The processor 1299 may display a first lock icon 1941 corresponding to the first display area 1223b in the first display area 1223b, and may display a second lock icon 1942 corresponding to the third display area 1223c in the third display area 1223c.

Referring to FIG. 19A and FIG. 19B, in an embodiment, the processor 1299 may end the display of the third execution screen 1930 and may display a first lock image 1950 in the third display area 1223c in response to the user's touch N on the second lock icon 1942. For example, the processor 1299 may display a first unlock icon 1960 for resuming the display of the third execution screen 1930 in the third display area 1223c instead of the first lock icon 1942.

Referring to FIG. 19B and FIG. 19C, in an embodiment, the processor 1299 may end the display of the second execution screen 1920 and may display a second lock image 1970 in the first display area 1223b in response to the user's touch O on the first lock icon 1941. For example, the processor 1299 may display a second unlock icon 1980 for resuming the display of the second execution screen 1920 in the second display area 1223b instead of the first lock icon 1941. In an embodiment, the processor 1299 may display a third unlock icon 1990 for causing the first execution screen 1910, the second execution screen 1920, and the third execution screen 1930 to be displayed in the second display area 1223a, the first display area 1223b, and the third display area 1223c, respectively, on the display 1223 (for example, the third display area 1223c).

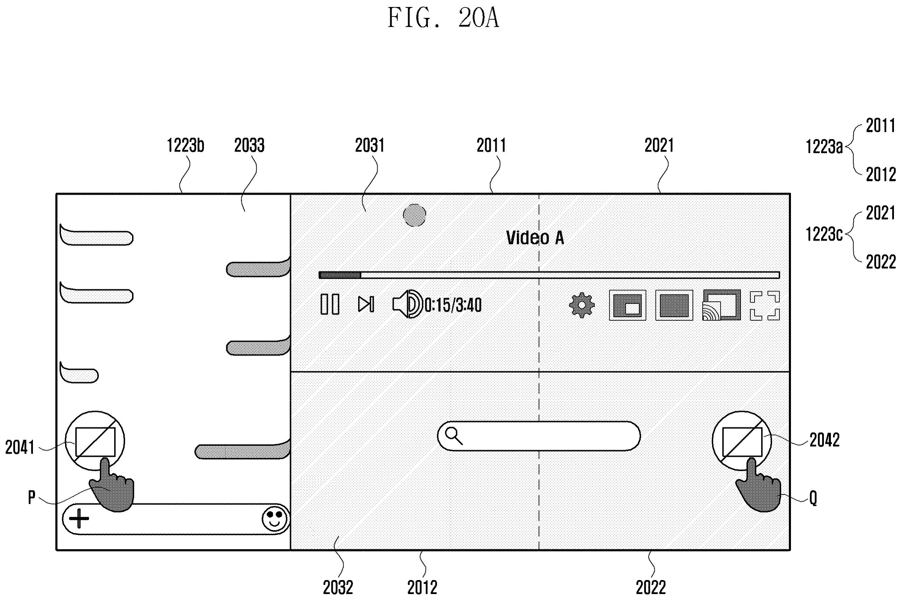

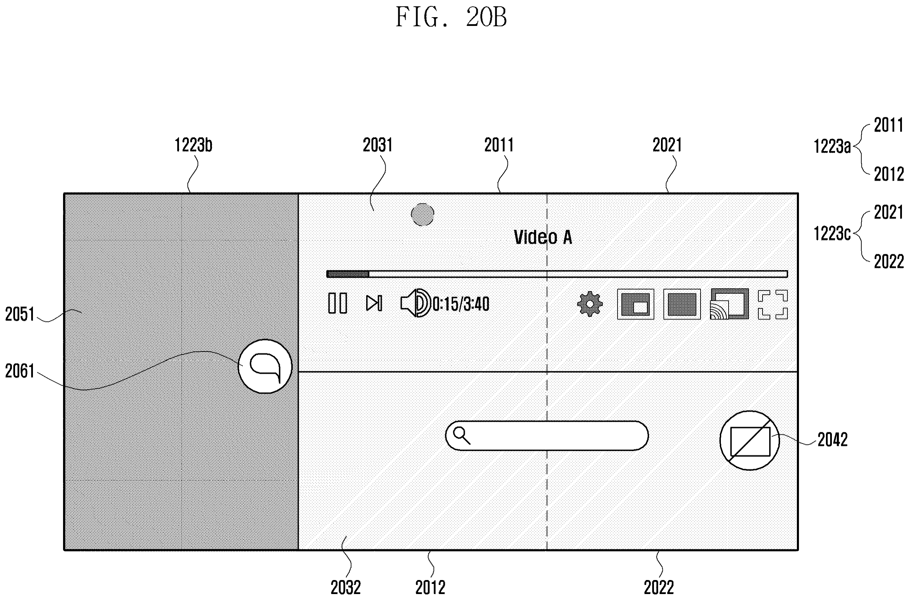

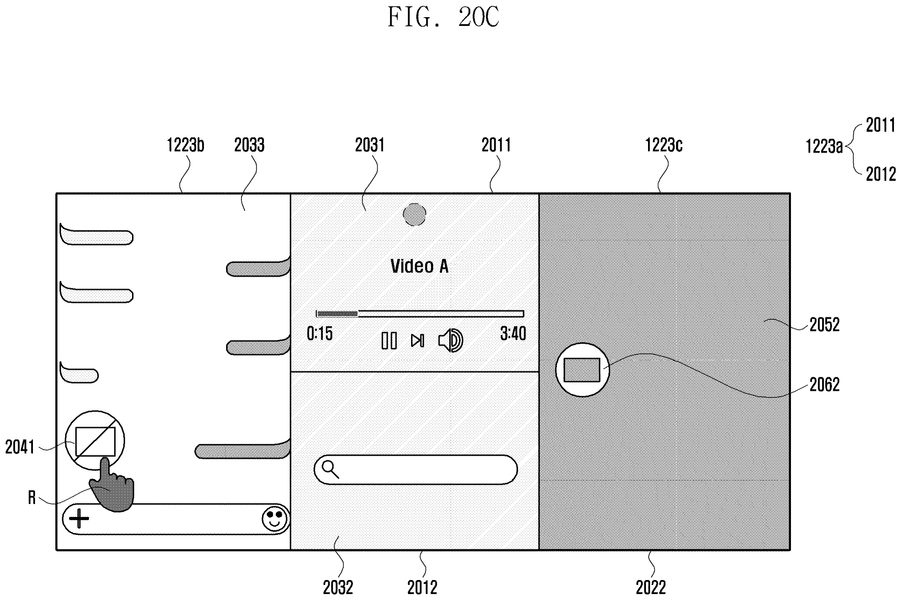

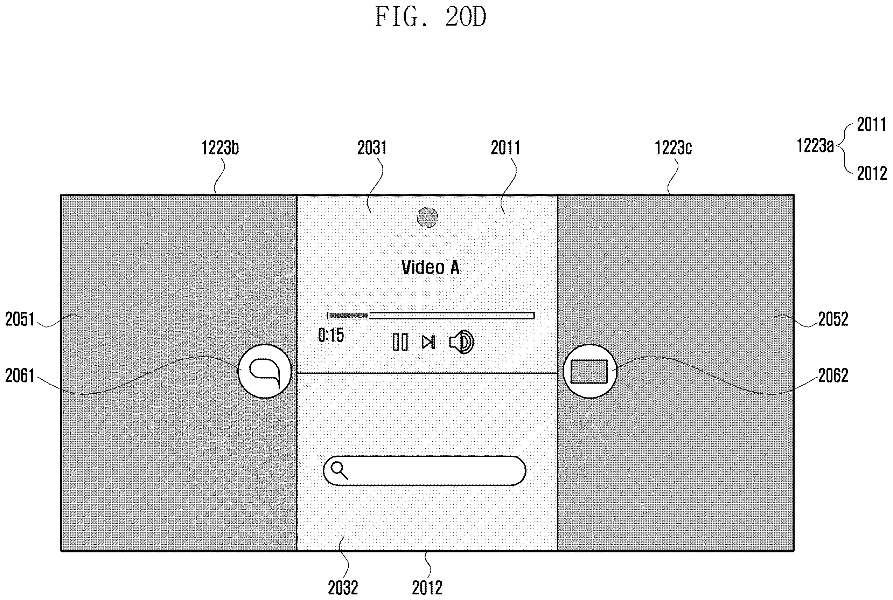

FIG. 20A, FIG. 20B, FIG. 20C, and FIG. 20D are diagrams for describing operations of the processor 1299 for screen locking according to an embodiment.

Referring to FIG. 20A, in an embodiment, the processor 1299 may display a first execution screen 2031 in the first portion 2011 of the second display area 1223a and in the second portion 2021 of the third display area 1223c extending from the first portion 2011. The processor 1299 may display a second execution screen 2032 in the third portion 2012 of the second display area 1223a and in the fourth portion 2022 of the third display area 1223c extending from the third portion 2012. The processor 1299 may display a third execution screen 2033 in the first display area 1223b. For example, the processor 1299 may display a first lock icon 2041 corresponding to the first display area 1223b in the first display area 1223b, and may display a second lock icon 2042 corresponding to the third display area 1223c in the third display area 1223c.

Referring to FIG. 20A and FIG. 20B, in an embodiment, the processor 1299 may end the display of the third execution screen 2033 and may display a first lock image 2051 in the first display area 1223b in response to the user's touch P on the first lock icon 2041. For example, the processor 1299 may display a first unlock icon 2061 corresponding to the third execution screen 2033 in the first display area 1223b.

Referring to FIG. 20A and FIG. 20C, in an embodiment, in response to the user's touch Q on the second lock icon 2042, the processor 1299 may reduce the first execution screen 2031 so as to fit the size of the first portion 2011 and then display the same in the first portion 2011, may reduce the second execution screen 2032 so as to fit the size of the third portion 2012 and then display the same in the third portion 2012, and may display a second lock image 2052 and a second unlock icon 2062 in the third display area 1223c. For example, in case that the second unlock icon 2062 is touched, the processor 1299 may enlarge the first execution screen 2031 and the second execution screen 2032 and then display the same in the second display area 1223a and the third display area 1223c as in FIG. 20A.

Referring to FIG. 20C and FIG. 20D, in an embodiment, in response to the user's touch R on the first lock icon 2041, the processor 1299 may end the display of the third execution screen 2033 and may display a first lock image 2051 in the first display area 1223b. For example, the processor 1299 may display a first unlock icon 2061 corresponding to the third execution screen 2033 in the first display area 1223b.

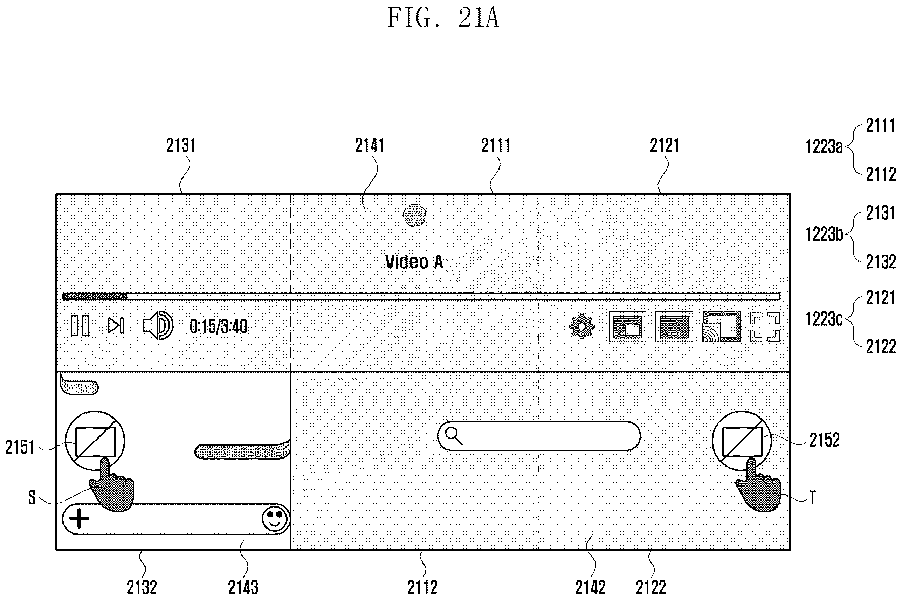

FIG. 21A to FIG. 21D are diagrams for describing operations of the processor 1299 for screen locking according to an embodiment.

Referring to FIG. 21A, in an embodiment, the processor 1299 may display a first execution screen 2141 in the first portion 2131 of the first display area 1223b, in the second portion 2111 of the second display area 1223a extending from the first portion 2131, and in the third portion 2121 of the third display area 1223c extending from the second portion 2111. The processor 1299 may display a second execution screen 2142 in the fourth portion 2112 of the second display area 1223a and in the fifth portion 2122 of the third display area 1223c extending from the fourth portion 2112. The processor 1299 may display a third execution screen 2143 in the sixth portion 2132 of the first display area 1223b. For example, the processor 1299 may display a first lock icon 2151 corresponding to the first display area 1223b in the first display area 1223b and may display a second lock icon 2152 corresponding to the third display area 1223c in the third display area 1223c.

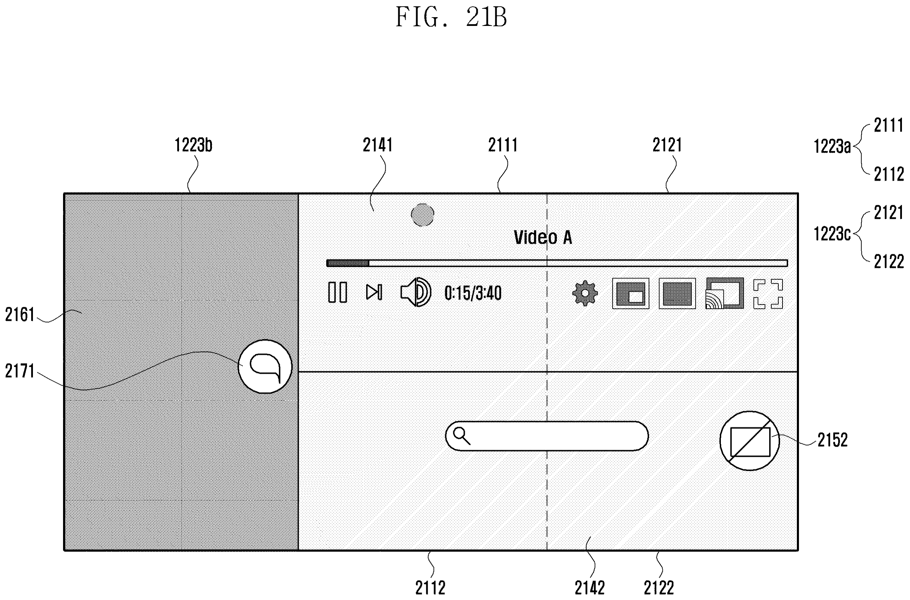

Referring to FIGS 21A and FIG. 21B, in an embodiment, in response to the user's touch S on the first lock icon 2151, the processor 1299 may end the display of the third execution screen 2143, may reduce the first execution screen 2141 so as to fit the size of the second portion 2111 and the third portion 2121 and then display the same in the second portion 2111 and the third portion 2121, and may display a first lock image 2161 in the first display area 1223b. For example, the processor 1299 may display a first unlock icon 2171 corresponding to the third execution screen 2143 in the first display area 1223b.

In an embodiment, in case that the user touches the first unlock icon 2171, the processor 1299 may unlock the first display area 1223b and may display the third execution screen 2143 in the first display area 1223b instead of the first lock image 2161. As another example, in response to the user's touch on the first unlock icon 2171, the processor 1299 may display the third execution screen 2143 in the sixth portion 2132 and may display the first execution screen 2141 so as to extend to the first portion 2131 as in FIG. 21A.

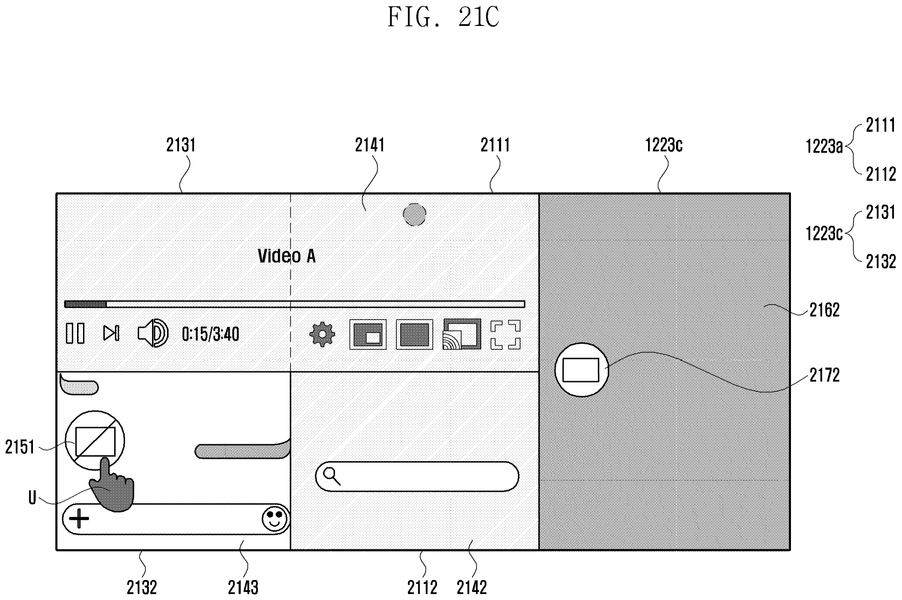

Referring to FIG. 21A and FIG. 21C, in an embodiment, in response to the user's touch T on the second lock icon 2152, the processor 1299 may reduce the first execution screen 2141 so as to fit the size of the first portion 2131 and the second portion 2111 and then display the same in the first portion 2131 and the second portion 2111, may reduce the second execution screen 2142 so as to fit the size of the fourth portion 2112 and then display the same in the fourth portion 2112, and may display a second lock image 2162 and a second unlock icon 2172 in the third display area 1223c.

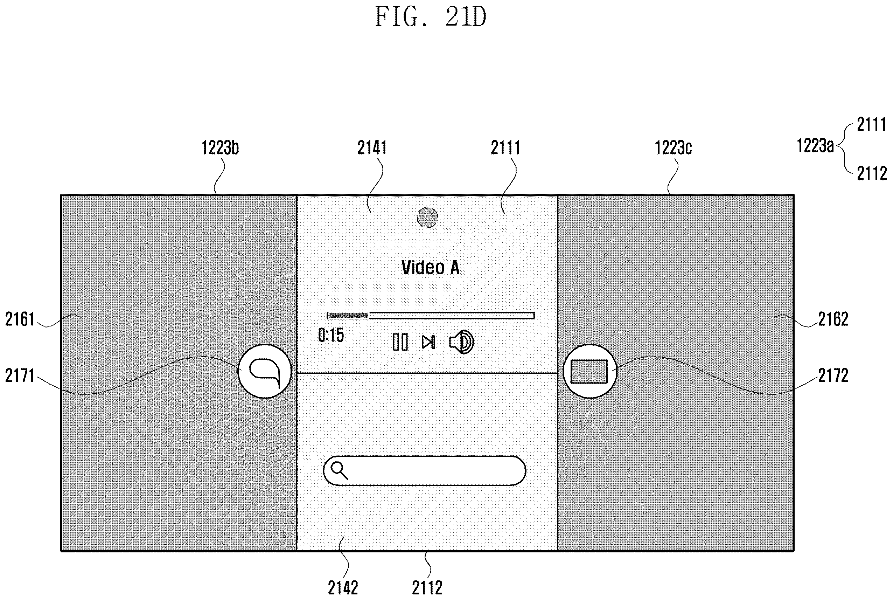

Referring to FIG. 21C and FIG. 21D , in an embodiment, in response to the user's touch U on the first lock icon 2151, the processor 1299 may end the display of the third execution screen 2143, may reduce the first execution screen 2141 so as to fit the size of the second portion 2111 and then display the same in the second portion 2111, and may display the first lock image 2161 and the first unlock icon 2171 in the first display area 1223b.

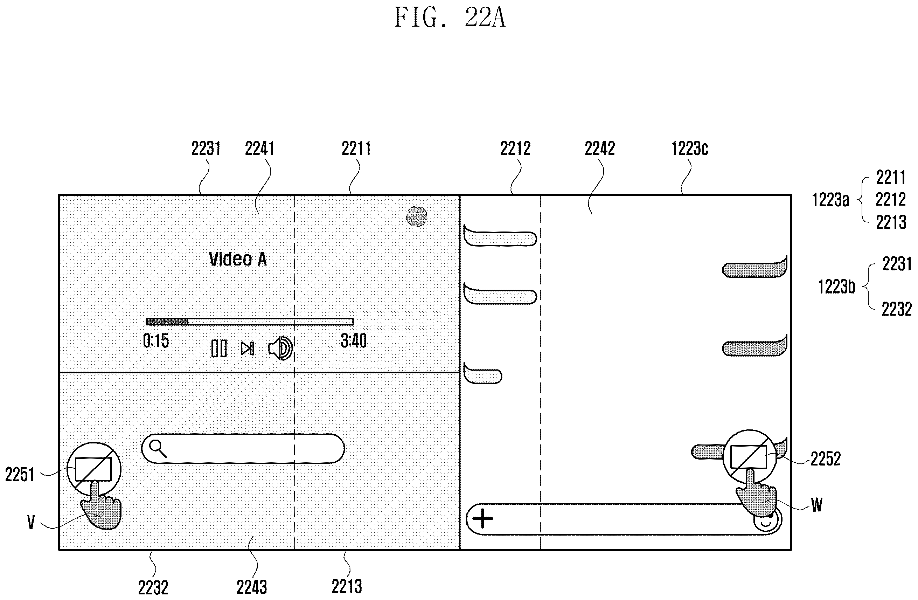

FIG. 22A to FIG. 22C are diagrams for describing operations of the processor 1299 for screen locking according to an embodiment.

Referring to FIG. 22A, in an embodiment, the processor 1299 may display a first execution screen 2241 in the first portion 2231 of the first display area 1223b and in the second portion 2211 of the second display area 1223a extending from the first portion 2231. The processor 1299 may display a second execution screen 2242 in the third display area 1223c and in the third portion 2212 of the second display area 1223a extending from the third display area 1223c. The processor 1299 may display a third execution screen 2243 in the fourth portion 2232 of the first display area 1223b and in the fifth portion 2213 of the second display area 1223a extending from the fourth portion 2232. For example, the processor 1299 may display a first lock icon 2251 corresponding to the first display area 1223b in the first display area 1223b and may display a second lock icon 2252 corresponding to the third display area 1223c in the third display area 1223c.

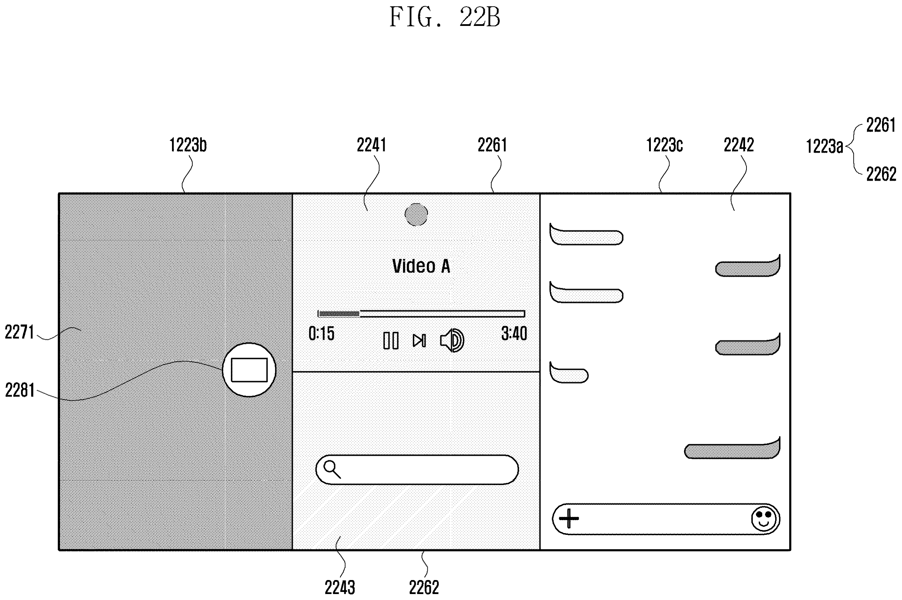

Referring to FIG. 22A and FIG. 22B, in an embodiment, in response to the user's touch V on the first lock icon 2251, the processor 1299 may re-divide the second display area 1223a, which has been divided into three portions 2211, 2212, and 2213 in FIG. 22A, into a sixth portion 2261 connected to the first portion 2231 and a seventh portion 2262 connected to the fourth portion 2232. Thereafter, the processor 1299 may reduce the first execution screen 2241 so as to fit the size of the sixth portion 2261 and then display the same in the sixth portion 2261, may reduce the third execution screen 2243 so as to fit the size of the seventh portion 2262 and then display the same in the seventh portion 2262, and may reduce the second execution screen 2242 so as to fit the size of the third display area 1223c and then display the same in the third display area 1223c. For example, the processor 1299 may display a first lock image 2271 and a first unlock icon 2281 in the first display area 1223b.

In an embodiment, in case that the user touches the first unlock icon 2281, the processor 1299 may unlock the first display area 1223b, may display the first execution screen 2241 so as to extend to the first portion 2231, and may display the third execution screen 2243 so as to extend to the fourth portion 2232.

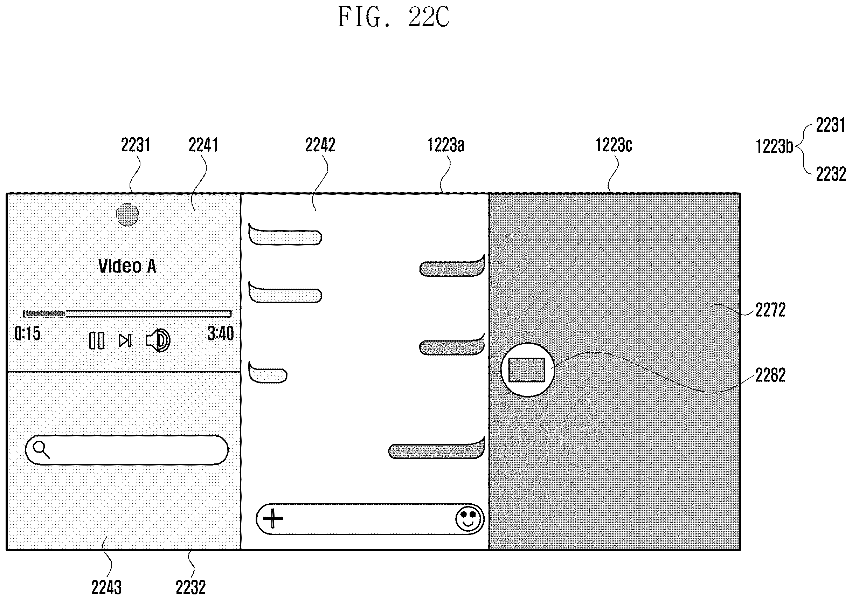

Referring to FIG. 22A and FIG. 22C, in an embodiment, in response to the user's touch W on the second lock icon 2252, the processor 1299 may reduce the first execution screen 2241 so as to fit the size of the first portion 2231 and then display the same in the first portion 2231, may reduce the third execution screen 2243 so as to fit the size of the fourth portion 2232 and then display the same in the fourth portion 2232, and may reduce the second execution screen 2242 so as to fit the size of the second display area 1223a and then display the same in the second display area 1223a. For example, the processor 1299 may display a second lock image 2272 and a second unlock icon 2282 in the third display area 1223c.

In an embodiment, in case that the user touches the second unlock icon 2282, the processor 1299 may unlock the third display area 1223c and may display the second execution screen 2242 so as to extend to the third display area 1223c. As another example, in case that the user touches the second unlock icon 2282, the processor 1299 may display as in FIG. 22A.

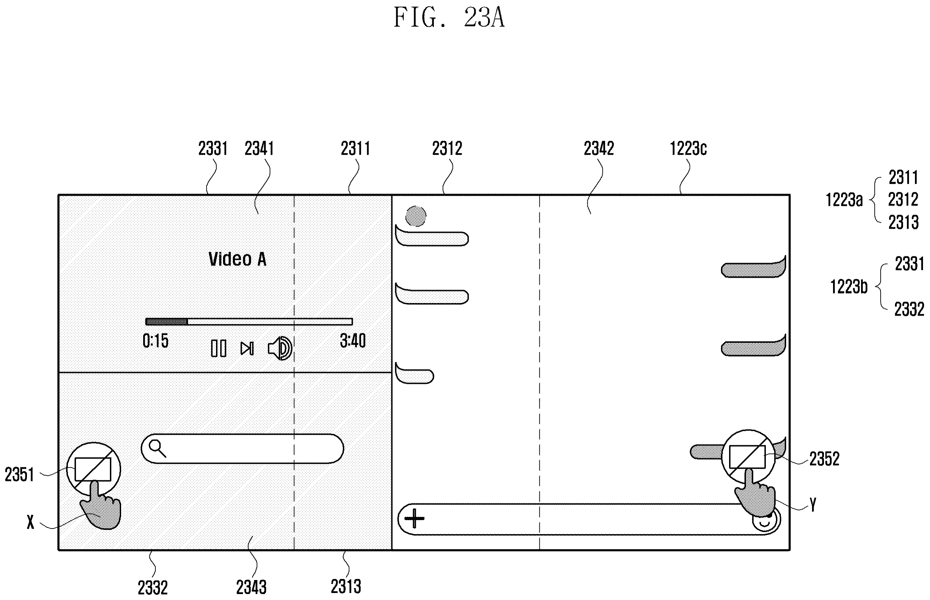

FIGS 23A to FIG. 23C are diagrams for describing operations of the processor 1299 for screen locking according to an embodiment.

Referring to FIG. 23A, in an embodiment, the processor 1299 may display a first execution screen 2341 in the first portion 2331 of the first display area 1223b and in the second portion 2311 of the second display area 1223a extending from the first portion 2331. The processor 1299 may display a second execution screen 2342 in the third display area 1223c and in the third portion 2312 of the second display area 1223a extending from the third display area 1223c. The processor 1299 may display a third execution screen 2343 in the fourth portion 2332 of the first display area 1223b and in the fifth portion 2313 of the second display area 1223a extending from the fourth portion 2343. For example, the processor 1299 may display a first lock icon 2351 corresponding to the first display area 1223b in the first display area 1223b and may display a second lock icon 2352 corresponding to the third display area 1223c in the third display area 1223c.

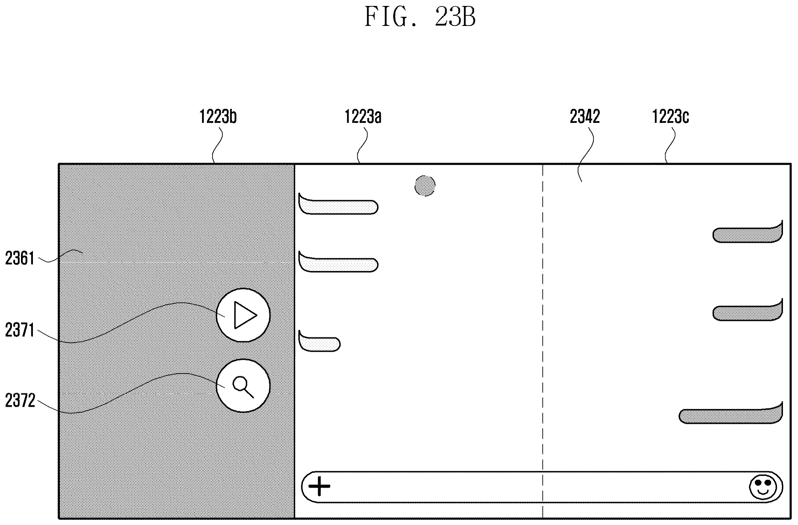

Referring to FIG. 23A and FIG. 23B, in an embodiment, in response to the user's touch X on the first lock icon 2351, the processor 1299 may compare the size of the portion disposed in the second display area 1223a and the size of the portion disposed in the first display area 1223b, in connection with the overall size of the first execution screen 2341 and the third execution screen 2343. For example, in case that the portion disposed in the first display area 1223b is larger as a result of the comparison, the processor 1299 may end the display of the first execution screen 2341 and the third execution screen 2343, and may display a first lock image 2361, a first unlock icon 2371 corresponding to the first execution screen 2341, and a second unlock icon 2372 corresponding to the third execution screen 2343 in the first display area 1223b. In addition, the processor 1299 may enlarge the second execution screen 2342 so as to fit the size of the second display area 1223a and the third display area 1223c and then display the same in the second display area 1223a and the third display area 1223c.

In an embodiment, in case that the user touches the first unlock icon 2371, the processor 1299 may unlock and display the first execution screen 2341 in the first display area 1223b. As another example, in case that the user drags the first unlock icon 2371 to the second display area 1223a, the processor 1299 may maintain the first display area 1223b locked, may display the first execution screen 2341 in the second display area 1223a, and may reduce the second execution screen 2342 so as to fit the size of the third display area 1223c and then display the same in the third display area 1223c. Thereafter, in case that the user touches the second unlock icon 2372, the processor 1299 may unlock the second display area 1223b and may display the third execution screen 2343 in the first display area 1223b. As another example, in case that the user drags the second unlock icon 2372 to the second display area 1223a, the third execution screen 2343 may be displayed in the second display area 1223a, and the first execution screen 2341 may be displayed in the first display area 1223b. For example, in case that the portion disposed in the second display area 1223a is larger as a result of the previous comparison, the processor 1299 may display the first execution screen 2341 and the third execution screen 2343 in the second display area 1223a and may display the first lock image 2361 in the first display area 1223b, as in FIG. 22B.

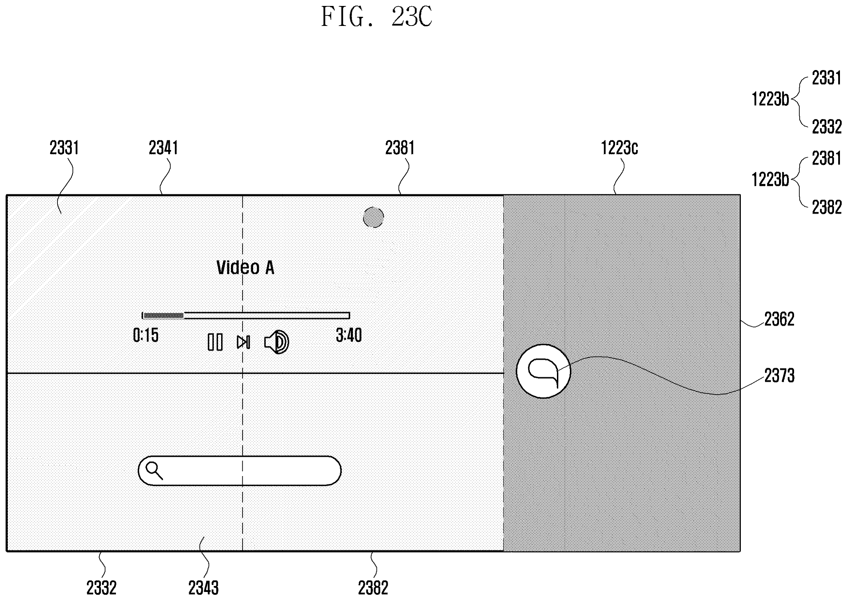

Referring to FIG. 23A and FIG. 23C, in an embodiment, in response to the user's touch Y on the second lock icon 2252, the processor 1299 may compare the size of the portion disposed in the second display area 1223a and the size of the portion disposed in the third display area 1223c, in connection with the overall size of the second execution screen 2342. For example, in case that the size of the portion disposed in the third display area 1223c is larger as a result of the comparison, the processor 1299 may end the display of the second execution screen 2342 and may display a second lock image 2362 and a second unlock icon 2373 corresponding to the second execution screen 2342 in the third display area 1223c. In addition, the processor 1299 may re-divide the second display area 1223a, which has been divided into three portions 2311, 2312, and 2313 in FIG. 23A, into a sixth portion 2381 connected to the first portion 2331 and a seventh portion 2382 connected to the fourth portion 2332. Thereafter, the processor 1299 may enlarge the first execution screen 2341 so as to fit the size of the first portion 2331 and the sixth portion 2381 and then display the same in the first portion 2331 and the sixth portion 2381, and may enlarge the third execution screen 2343 so as to fit the sizes of the fourth portion 2332 and the seventh portion 2382 and then display the same in the fourth portion 2332 and the seventh portion 2382.

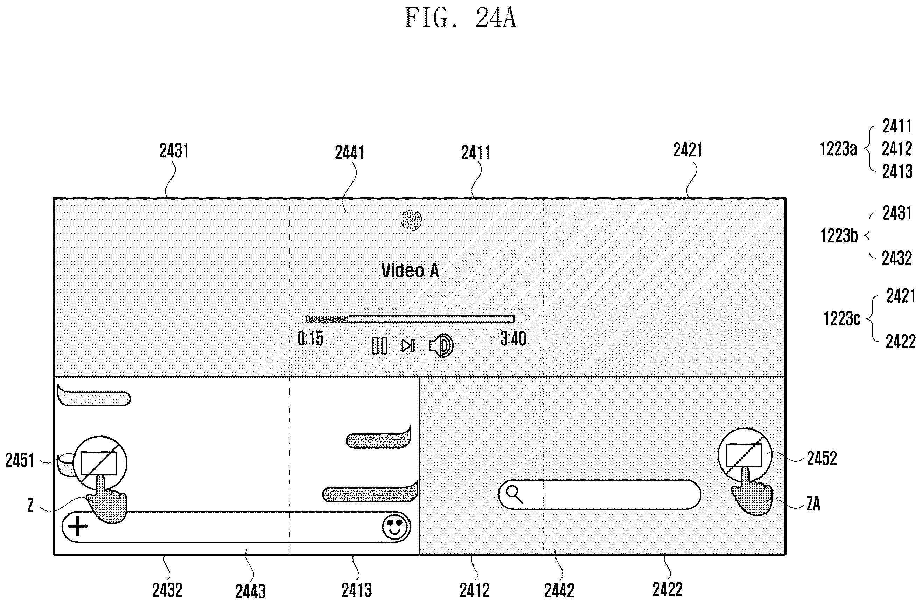

FIG. 24A to FIG. 24C are diagrams for describing operations of the processor 1299 for screen locking according to an embodiment.

Referring to FIG. 24A, in an embodiment, the processor 1299 may display a first execution screen 2441 in the first portion 2431 of the first display area 1223b, in the second portion 2411 of the second display area 1223a extending from the first portion 2431, and in the third portion 2421 of the third display area 1223c extending from the second portion 2411. The processor 1299 may display a second execution screen 2442 in the fourth portion 2412 of the second display area 1223a and in the fifth portion 2422 of the third display area 1223c extending from the fourth portion 2412. The processor 1299 may display a third execution screen 2443 in the sixth portion 2432 of the first display area 1223b and in the seventh portion 2413 of the second display area 1223a extending from the sixth portion 2432. For example, the processor 1299 may display a first lock icon 2451 corresponding to the first display area 1223b in the first display area 1223b and may display a second lock icon 2452 corresponding to the third display area 1223c in the third display area 1223c.

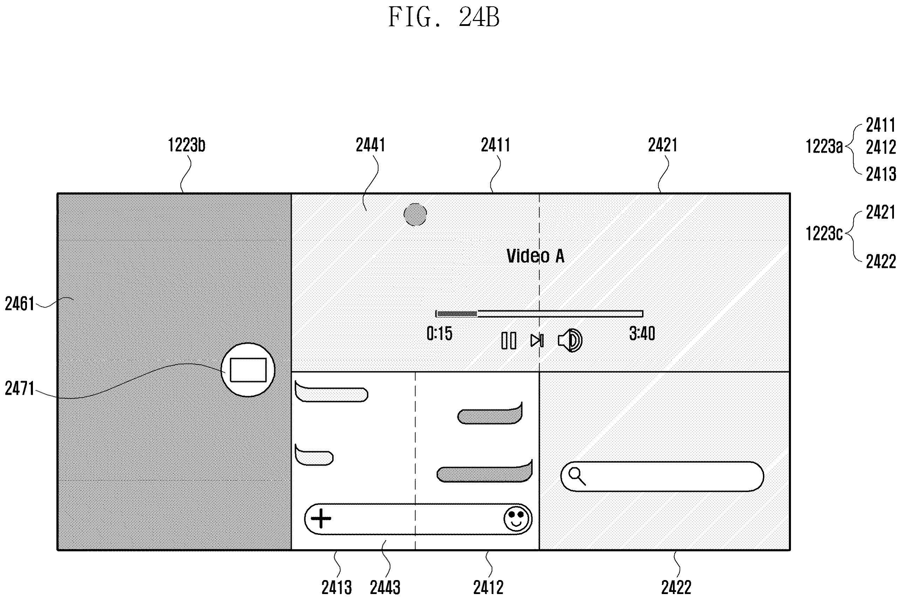

Referring to FIG. 24A and FIG. 24B, in an embodiment, in response to the user's touch Z on the first lock icon 2451, the processor 1299 may lock the first display area 1223b while maintaining the display of the execution screens 2441, 2442, and 2443. For example, the processor 1299 may reduce the first execution screen 2441 so as to fit the size of the second portion 2411 and the third portion 2421 and then display the same in the second portion 2411 and the third portion 2421, may reduce the second execution screen 2442 so as to fit the size of the fifth portion 2422 and then display the same in the fifth portion 2422, and may reduce the third execution screen 2443 so as to fit the size of the seventh portion 2413 and the fourth portion 2412 and then display the same in the seventh portion 2413 and the fourth portion 2412. For example, the processor 1299 may display a first lock image 2461 and a first unlock icon 2471 in the first display area 1223b.

In an embodiment, in case that the user touches the first unlock icon 2471, the processor 1299 may unlock the first display area 1223b and may display the first execution screen 2441 and/or the third execution screen 2443 in the first display area 1223b instead of the first lock image 2461. As an example, the processor 1299 may restore the display form as in FIG. 24A. As another example, the processor 1299 may display the third execution screen 2443 in the second display area 1223b and may display the second execution screen 2442 so as to extend to the fourth portion 2412.

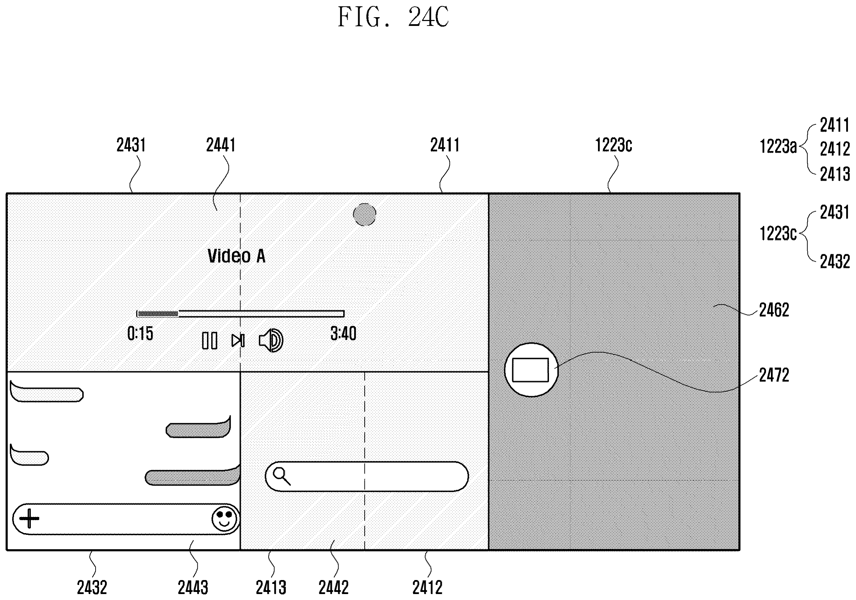

Referring to FIG. 24A and FIG. 24C, in response to the user's touch ZA on the second lock icon 2452, the processor 1299 may lock the third display area 1223c while maintaining the display of the execution screens 2441, 2442, and 2443. For example, the processor 1299 may reduce the first execution screen 2441 so as to fit the size of the first portion 2431 and the second portion 2411 and then display the same in the first portion 2431 and the second portion 2411, may adjust the size of the second execution screen 2442 so as to fit the size of the seventh portion 2413 and the fourth portion 2412 and then display the second execution screen 2442 in the seventh portion 2413 and the fourth portion 2412, and may adjust the size of the third execution screen 2443 so as to fit the size of the sixth portion 2432 and then display the third execution screen 2443 in the sixth portion 2432. For example, the processor 1299 may display a second lock image 2462 and a second unlock icon 2472 in the third display area 1223c.

In an embodiment, in case that user touches the second unlock icon 2472, the processor 1299 may unlock the first display area 1223c and may display the first execution screen 2441 and/or the second execution screen 2442 in the third display area 1223c instead of the second lock image 2462. As an example, the processor 1299 may restore the display form as in FIG. 24A. As another example, the processor 1299 may display the second execution screen 2442 in the third display area 1223b and may display the third execution screen 2443 so as to extend to the fourth portion 2412.

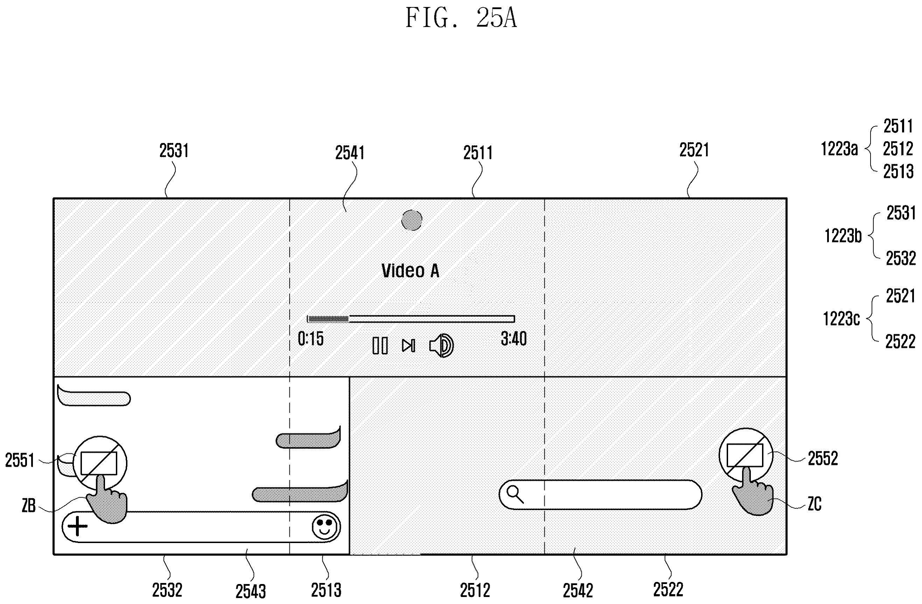

FIG. 25A to FIG. 25C are diagrams for describing operations of the processor 1299 for screen locking according to an embodiment.

Referring to FIG. 25A, in an embodiment, the processor 1299 may display a first execution screen 2541 in the first portion 2531 of the first display area 1223b, in the second portion 2511 of the second display area 1223a extending from the first portion 2531, and in the third portion 2521 of a third display area 1223c extending from the second portion 2511. The processor 1299 may display a second execution screen 2542 in the fourth portion 2512 of the second display area 1223a and in the fifth portion 2522 of the third display area 1223c extending from the fourth portion 2512. The processor 1299 may display a third execution screen 2543 in the sixth portion 2532 of the first display area 1223b and in the seventh portion 2513 of the second display area 1223a extending from the sixth portion 2532. For example, the processor 1299 may display a first lock icon 2551 corresponding to the first display area 1223b in the first display area 1223b and may display a second lock icon 2552 corresponding to the third display area 1223c in the third display area 1223c.

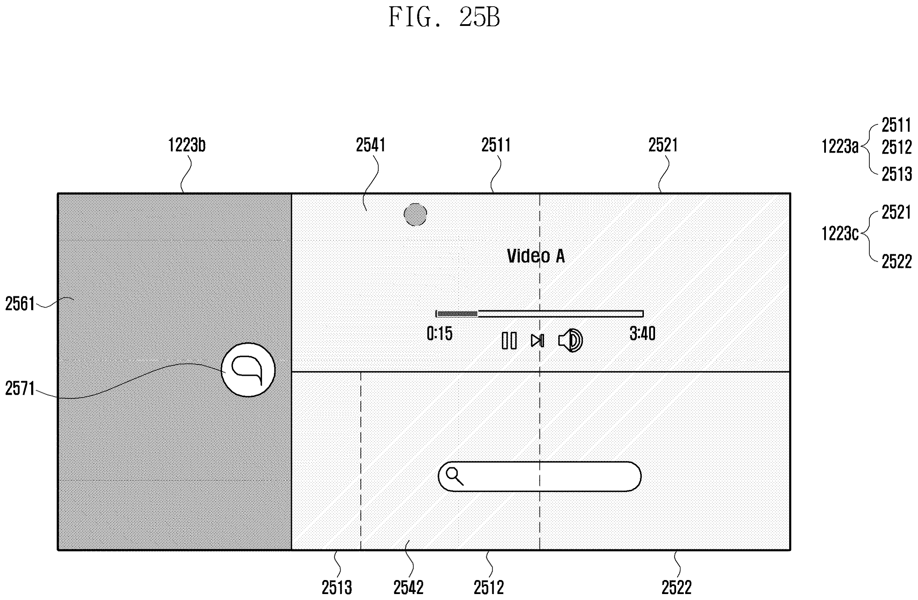

Referring to FIG. 25A and FIG. 25B, in an embodiment, in response to the user's touch ZB on the first lock icon 2551, the processor 1299 may compare the size of the portion disposed in the second display area 1223a and the size of the portion disposed in the first display area 1223b in connection with the overall size of the third execution screen 2543. In case that the portion disposed in the first display area 1223b is larger as a result of the comparison, the processor 1299 may end the display of the third execution screen 2543 and may display a first lock image 2561 and a first unlock icon 2371 corresponding to the third execution screen 2543 in the first display area 1223b. For example, the processor 1299 may reduce the first execution screen 2541 so as to fit the size of the second portion 2511 and the third portion 2521 and then display the same in the second portion 2511 and the third portion 2521, and may enlarge the second execution screen 2542 so as to fit the size of the seventh portion 2513, the fourth portion 2512, and the fifth portion 2522 and then display the same in the seventh portion 2513, the fourth portion 2512, and the fifth portion 2522.

In an embodiment, in case that the portion disposed in the second display area 1223a is larger as a result of the previous comparison, the processor 1299 may display the third execution screen 2543 in the seventh portion 2513 and the fourth portion 2512 and may display the second execution screen 2542 in the fifth portion 2522.

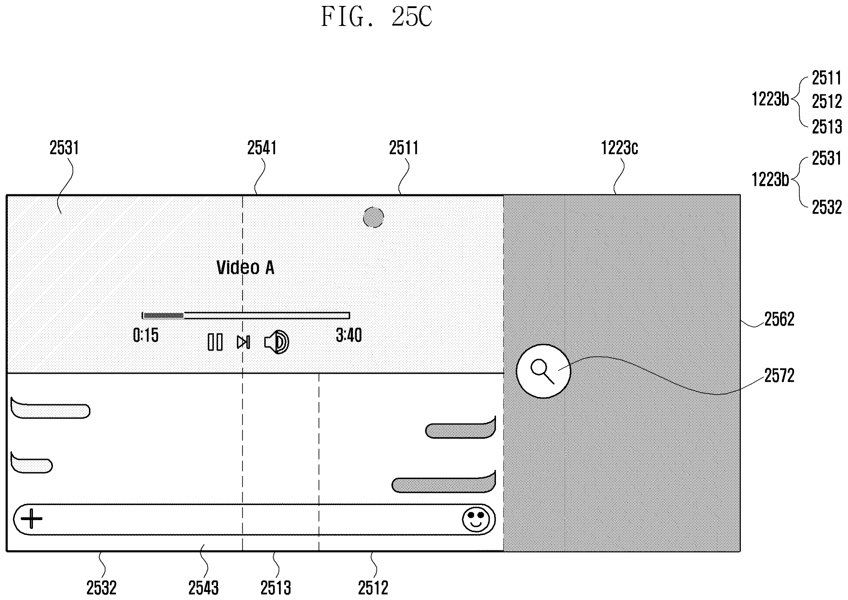

Referring to FIG. 25A and FIG. 25C, in an embodiment, in response to the user's touch ZC on the second lock icon 2552, the processor 1299 may compare the size of the portion disposed in the second display area 1223a and the size of the portion disposed in the third display area 1223c in connection with the overall size of the second execution screen 2542. For example, in case that the size of the portion disposed in the third display area 1223c is larger as a result of the comparison, the processor 1299 may end the display of the second execution screen 2542 and may display a second lock image 2562 and a second unlock icon 2572 corresponding to the second execution screen 2542 in the third display area 1223c. For example, the processor 1299 may reduce the first execution screen 2541 so as to fit the size of the first portion 2531 and the second portion 2511 and then display the same in the first portion 2531 and the second portion 2511, and may enlarge the third execution screen 2543 so as to fit the size of the sixth portion 2532, the seventh portion 2513, and the fourth portion 2512 and then display the same in the sixth portion 2532, the seventh portion 2513, and the fourth portion 2512.

In an embodiment, in case that the portion disposed in the second display area 1223a is larger as a result of the previous comparison, the processor 1299 may display the third execution screen 2543 in the seventh portion 2513 and the fourth portion 2512 and may display the second execution screen 2542 in the sixth portion 2532.

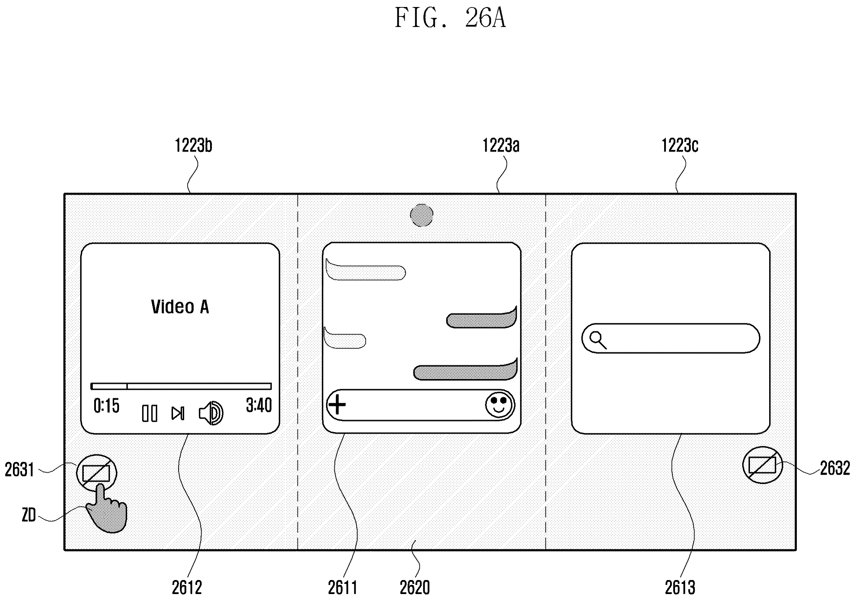

FIG. 26A to FIG. 26C are diagrams for describing operations of the processor 1299 for screen locking according to an embodiment.

Referring to FIG. 26A, in an embodiment, the processor 1299 may configure execution screens 2611, 2612, and 2613 as a first layer. For example, the processor 1299 may configure the display position of the first execution screen 2611 to be in the second display area 1223a and may configure the size of the first execution screen 2611 to be smaller than the second display area 1223a. For example, the processor 1299 may configure the display position of the second execution screen 2612 on the first layer to be in the first display area 1223b and may configure the size of the second execution screen 2612 to be smaller than the first display area 1223b. For example, the processor 1299 may configure the display position of the third execution screen 2613 on the first layer to be in the third display area 1223c and may configure the size of the third execution screen 2613 to be smaller than the third display area 1223c. In an embodiment, the processor 1299 may configure the display positions and/or size of the execution screens 2611, 2612, and 2613, based on the user's touch input, for example. The processor 1299 may configure the background screen (for example, a home screen including multiple application icons) 2620, which has been configured as a second layer, so as to be displayed in the entire display areas 1223a, 1223b, and 1223c. The processor 1299 may synthesize the execution screens 2611, 2612, and 2613, the layer, position, and size of which have been configured, and the background screen 2620 and then display the same on the display 1223. For example, the processor 1299 may display a first lock icon 2631 and a second lock icon 2632 in the display areas 1223b and 1223c, respectively.

The term "layer" used in the disclosure may be defined as the priority of display for interactions between the user and the electronic device 1200. For example, visual information designated as the first layer (the highest layer) may have a higher priority of display than visual information designated as the second layer. Accordingly, a part of the visual information designated as the second layer may be obscured by the visual information designated as the first layer. Alternatively, the entire visual information designated as the second layer may not be displayed on the display 1223 due to the visual information designated as the first layer. The processor 1299 may display a first lock icon 2631 corresponding to the first display area 1223b in the first display area 1223b and may display a second lock icon 2632 corresponding to the third display area 1223c in the third display area 1223c. For example, the processor 1299 may configure the first lock icon 2631 as the same layer as the second execution screen 2612 but may display the first lock icon 2631 in the first display area 1223b so as not to overlap the same. The processor 1299 may configure the second lock icon 2632 as the same layer as the third execution screen 2613 but may display the second lock icon 2632 in the third display area 1223c so as not to overlap the same. As another example, the processor 1299 may configure the first lock icon 2631 as a higher layer than the second execution screen 2612 and may display the same in the first display area 1223b. The processor 1299 may configure the second lock icon 2632 as a higher layer than the third execution screen 2613 and display the same in the third display area 1223c.

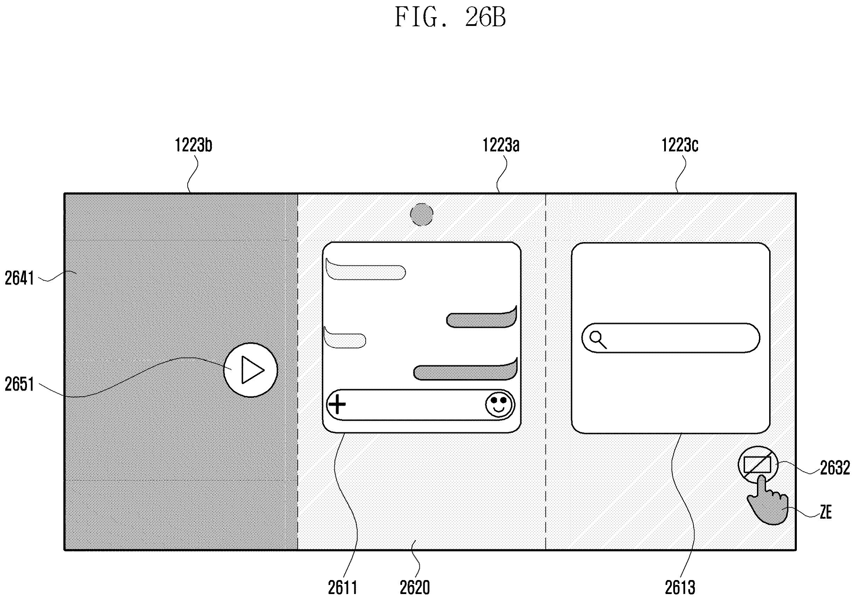

Referring to FIG. 26A and FIG. 26B, in an embodiment, in response to the user's touch ZD on the first lock icon 2631, the processor 1299 may end the display of the second execution screen 2612 and may display a first lock image 2641 and a first unlock icon 2651 corresponding to the second execution screen 2612 in the first display area 1223b.

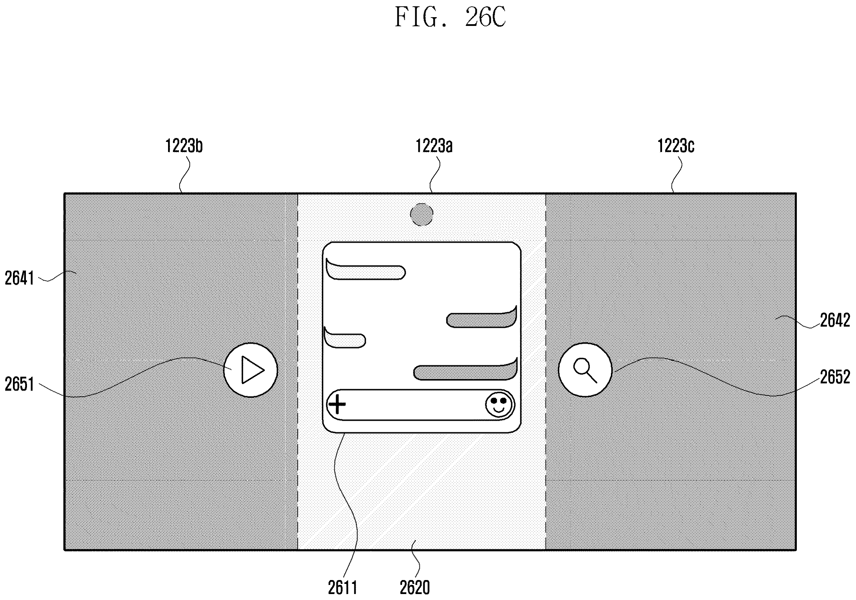

Referring to FIG. 26B and FIG. 26C, in an embodiment, in response to the user's touch ZE on the second lock icon 2632, the processor 1299 may end the display of the third execution screen 2613 and may display a second lock image 2642 and a second unlock icon 2652 corresponding to the third execution screen 2613 in the third display area 1223c.

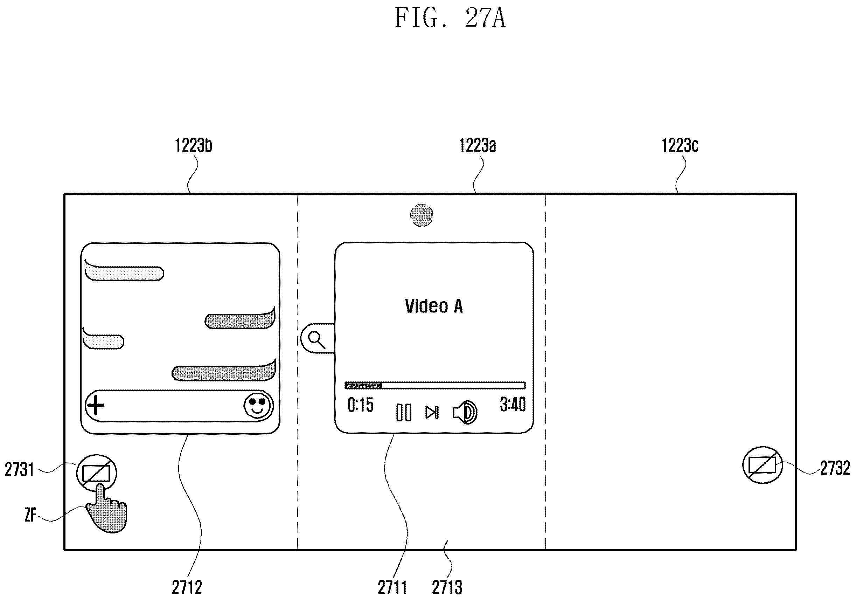

FIG. 27A to FIG. 27C are diagrams for describing operations of the processor 1299 for screen locking according to an embodiment.

Referring to FIG. 27A, in an embodiment, the processor 1299 may configure the first execution screen 2711 and the second execution screen 2712 as the first layer and may configure the third execution screen 2713 as the second layer. The processor 1299 may configure the display position of the first execution screen 2711 to be in the second display area 1223a and may configure the size of the first execution screen 2711 to be smaller than the second display area 1223a. The processor 1299 may configure the display position of the second execution screen 2712 to be in the first display area 1223b and may configure the size of the second execution screen 2712 to be smaller than the second display area 1223b. The processor 1299 may configure the third execution screen 2713 so as to be displayed in the entire display area 1223a, 1223b, and 1223c. The processor 1299 may synthesize execution screens 2711, 2712, and 2713, the layer, position, and size of which have been configured, and may display the same on the display 1223. For example, the processor 1299 may display a first lock icon 2731 and a second lock icon 2732 in display areas 1223b and 1223c, respectively.

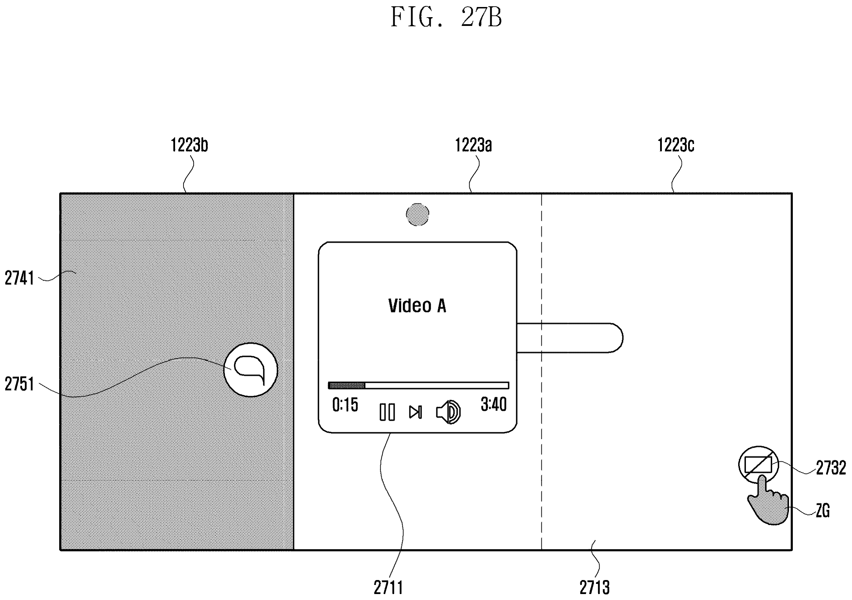

Referring to FIG. 27A and FIG. 27B, in an embodiment, in response to the user's touch ZF on the first lock icon 2731, the processor 1299 may end the display of the second execution screen 2712, may display a first lock image 2741 and a first unlock icon 2751 corresponding to the second execution screen 2712 in the first display area 1223b, may reduce the size of the third execution screen 2713 so as to fit the size of the second display area 1223a and the third display area 1223c, and may display the third execution screen 2713 in the second display area 1223a and the third display area 1223c.

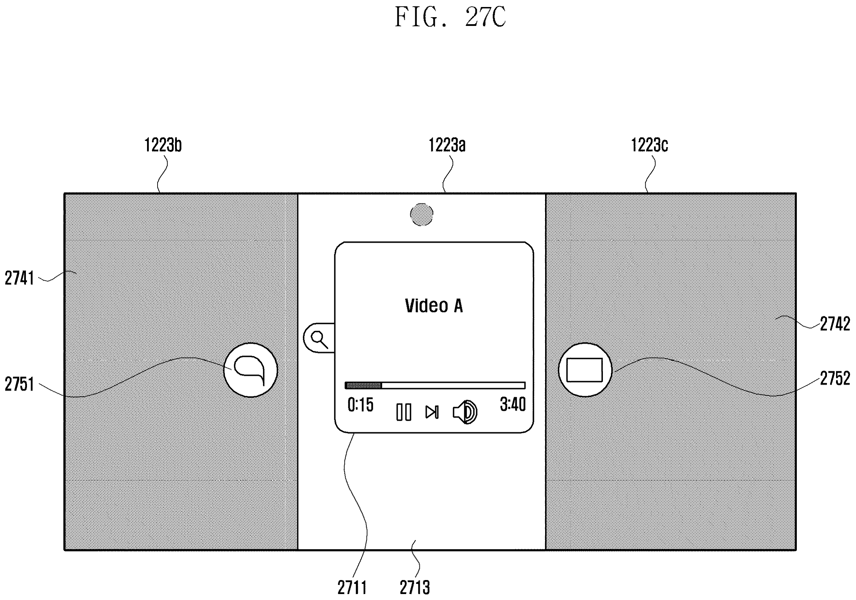

Referring to FIG. 27B and FIG. 27C, in an embodiment, in response to the user's touch ZG on the second lock icon 2732, the processor 1299 may end the display of the third execution screen 2713, may display a second lock image 2742 and a second unlock icon 2752 corresponding to the third execution screen 2713 in the third display area 1223c, may reduce the size of the third execution screen 2713 so as to fit the size of the second display area 1223a, and may display the third execution screen 2713 in the second display area 1223a.

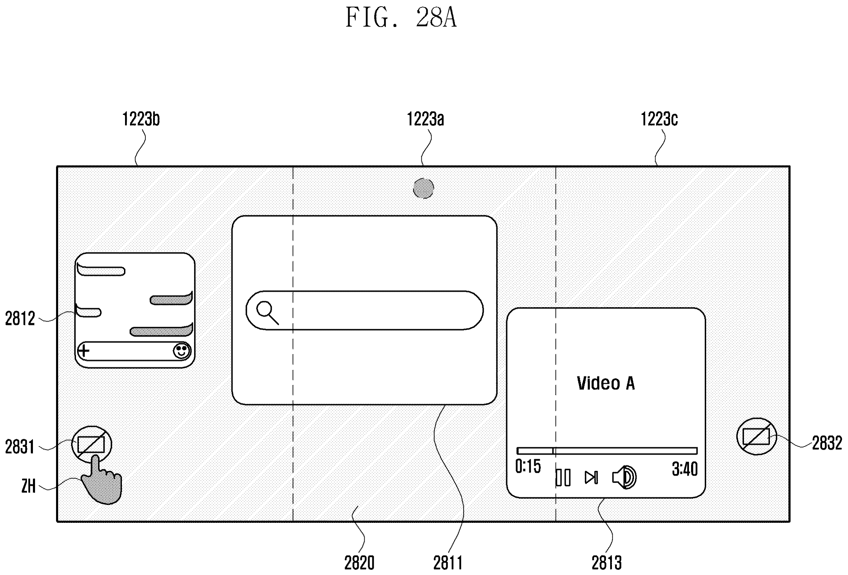

FIG. 28A to FIG. 28D are diagrams for describing operations of the processor 1299 for screen locking according to an embodiment of the disclosure.

Referring to FIG. 28A, in an embodiment, the background screen (for example, a home screen) 2820 may be configured as a second layer and displayed in the entire display area 1223a, 1223b, and 1223c. The execution screens 2811, 2812, and 2813 may be set as a first layer. A part of the first execution screen 2811 may be displayed in the second display area 1223a, and another part of the first execution screen 2811 may be displayed in the first display area 1223b. The second execution screen 2812 may be displayed in the first display area 1223b without overlapping the first execution screen 2811. A part of the third execution screen 2813 may be displayed in the second display area 1223a without overlapping the first execution screen 2811, and another remaining part thereof may be displayed in the third display area 1223c. For example, a first lock icon 2831 and a second lock icon 2832 may be displayed in the first display area 1223b and the third display area 1223c, respectively.

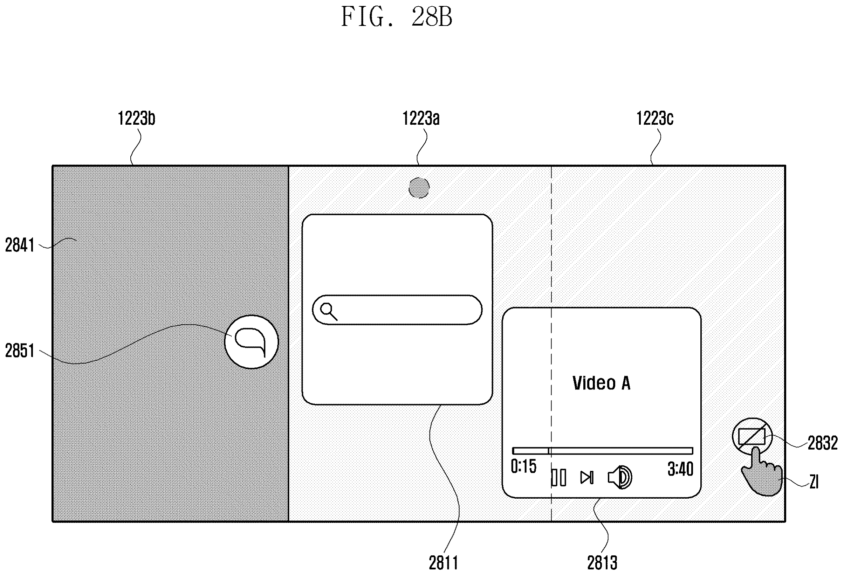

Referring to FIG. 28A and FIG. 28B, in an embodiment, based on the user's touch ZH on the first lock icon 2831, and based on the second execution screen 2812 being positioned within the first display area 1223b prior to the occurrence of the touch ZH, the processor 1299 may end the display of the second execution screen 2812 and may display a first lock image 2841 and a first unlock icon 2851 corresponding to the second execution screen 2812 in the first display area 1223b. For example, the processor 1299 may reduce the size of the first execution screen 2811 and/or change the display position of the first execution screen 2811 such that the first execution screen 2811 is not displayed in the first display area 1223b beyond the second display area 1223a.

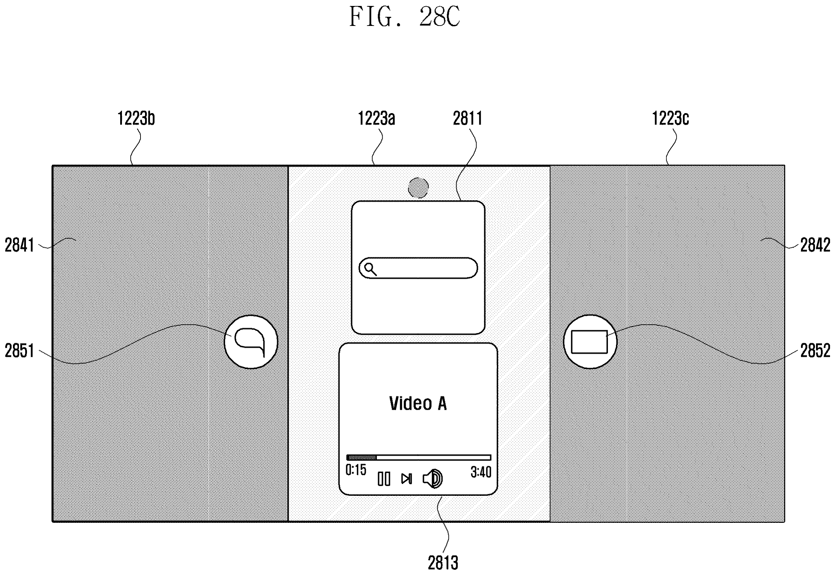

Referring to FIG. 28B and FIG. 28C, in an embodiment, based on the user's touch ZI on the second lock icon 2832, and based on a part of the third execution screen 2813 being positioned within the second display area 1223a beyond the third display area 1223c prior to the occurrence of the touch ZI, the processor 1299 may display the third execution screen 2813 in the second display area 1223a. For example, the processor 1299 may reduce the size of at least one of the first execution screen 2811 and the third execution screen 2813 such that the first execution screen 2811 and the third execution screen 2813 are displayed in the second display area 1223a without overlapping each other. For example, the processor 1299 may display a second lock image 2842 and a second unlock icon 2852 in the third display area 1223c.

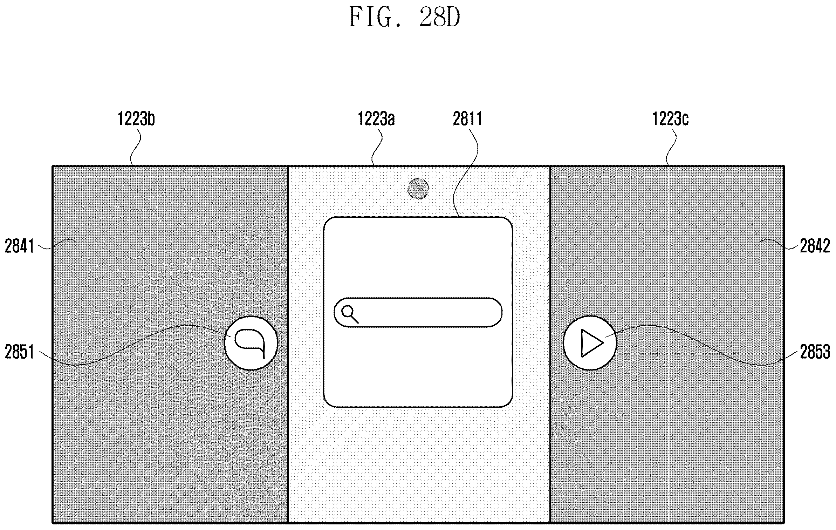

Referring to FIG. 28B and FIG. 28D, in another embodiment, in response to the user's touch B on the second lock icon 2832, the processor 1299 may compare the size of the portion disposed in the second display area 1223a and the size of the portion disposed in the third display area 1223c in connection with the third execution screen 2813. In case that the portion disposed in the third display area 1223c is larger as a result of the comparison, the processor 1299 may end the display of the third execution screen 2813 and may display a second lock image 2842 and a third unlock icon 2853 corresponding to the third execution screen 2813 in the third display area 1223c.

In an embodiment, in case that the portion disposed in the second display area 1223a is larger as a result of the previous comparison, the processor 1299 may display the third execution screen 2813 together with the first execution screen 2811 in the second display area 1223a as in FIG. 28C.

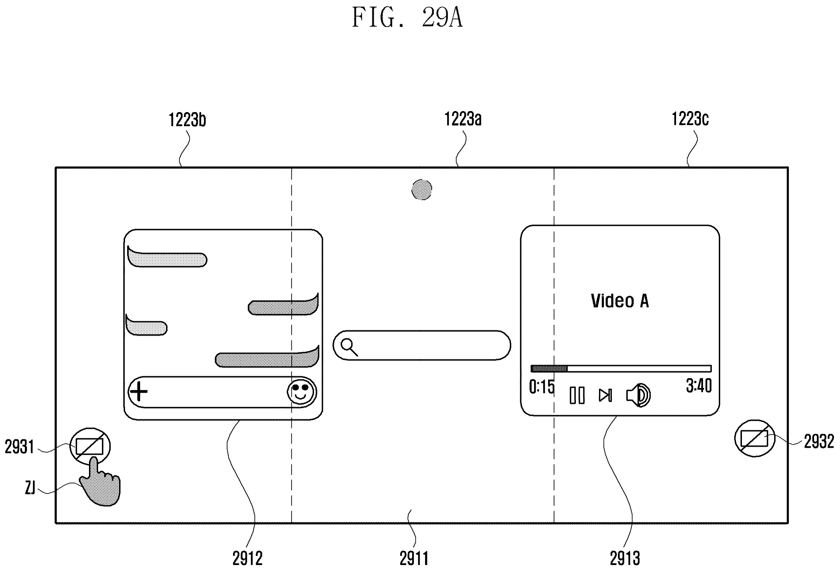

FIG. 29A to FIG. 29D are diagrams for describing operations of the processor 1299 for screen locking according to an embodiment of the disclosure.

Referring to FIG. 29A, in an embodiment, the first execution screen 2911 may be configured as a second layer and displayed in the entire display area 1223a, 1223b, and 1223c. The second execution screen 2912 and the third execution screen 2913 may be configured as a first layer. A part of the second execution screen 2912 may be displayed in the first display area 1223b, and another part thereof may be displayed in the second display area 1223a. A part of the third execution screen 2913 may be displayed in the second display area 1223a without overlapping the second execution screen 2912, and another part thereof may be displayed in the third display area 1223c. For example, a first lock icon 2931 and a second lock icon 2932 may be displayed in the first display area 1223b and the third display area 1223c, respectively.

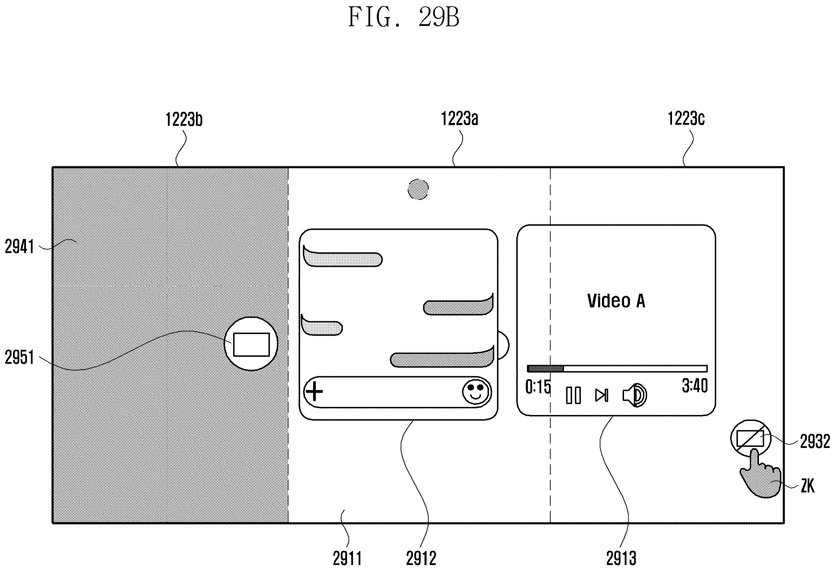

Referring to FIG. 29A and FIG. 29B, in an embodiment, based on the user's touch ZJ on the first lock icon 2931, and based on a part of the second execution screen 2812 being positioned in the second display area 1223a beyond the first display area 1223b prior to the occurrence of the touch ZJ, the processor 1299 may display the second execution screen 2812 in the second display area 1223a. For example, the processor 1299 may reduce the first execution screen 2911 so as to fit the size of the first and third display areas 1223a and 1223c and then display the same in the first and third display areas 1223a and 1223c, and may display a first lock image 2941 and a first unlock icon 2951 in the first display area 1223b.

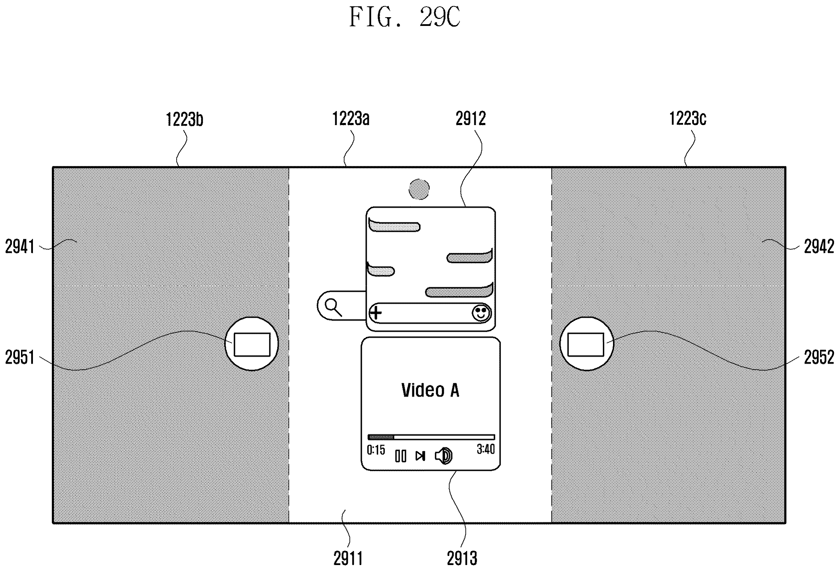

Referring to FIG. 29B and FIG. 29C, in an embodiment, based on the user's touch ZK on the second lock icon 2932, and based on a part of the third execution screen 2813 being positioned in the second display area 1223a beyond the third display area 1223c prior to the occurrence of the touch ZK, the processor 1299 may display the third execution screen 2913 in the second display area 1223a. For example, the processor 1299 may reduce the size of at least one of the second execution screen 2912 and the third execution screen 2913 such that the second execution screen 2912 and the third execution screen 2913 are displayed in the second display area 1223a without overlapping each other. For example, the processor 1299 may reduce the first execution screen 2911 so as to fit the size of the second display area 1223a and then display the same in the second display area 1223a, and may display a second lock image 2942 and a second unlock icon 2952 in the third display area 1223c.

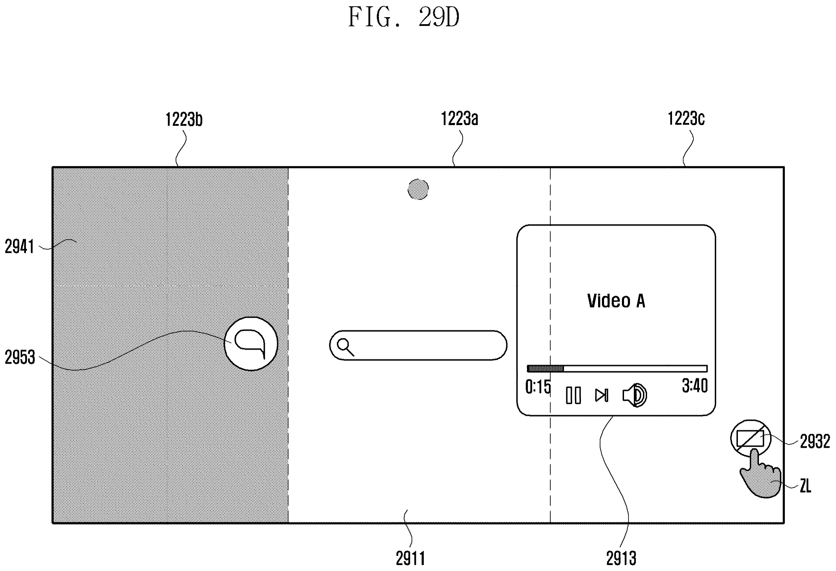

Referring to FIG. 29A and FIG. 29D, in another embodiment, in response to the user's touch ZJ on the first lock icon 2931, the processor 1299 may compare the size of the portion disposed in the second display area 1223a and the size of the portion disposed in the first display area 1223b in connection with the second execution screen 2912. In case that the portion disposed in the first display area 1223b is larger as a result of the comparison, the processor 1299 may end the display of the second execution screen 2912 and may display a first lock image 2941 and a third unlock icon 2953 corresponding to the second execution screen 2912 in the first display area 1223b. For example, the processor 1299 may reduce the first execution screen 2911 so as to fit the size of the first and third display areas 1223a and 1223c and then display the same in the first and third display areas 1223a and 1223c.

In an embodiment, in case that the portion placed in the second display area 1223a is larger as a result of the previous comparison, the processor 1299 may display the second execution screen 2912 in the second display area 1223a as in FIG. 29B.

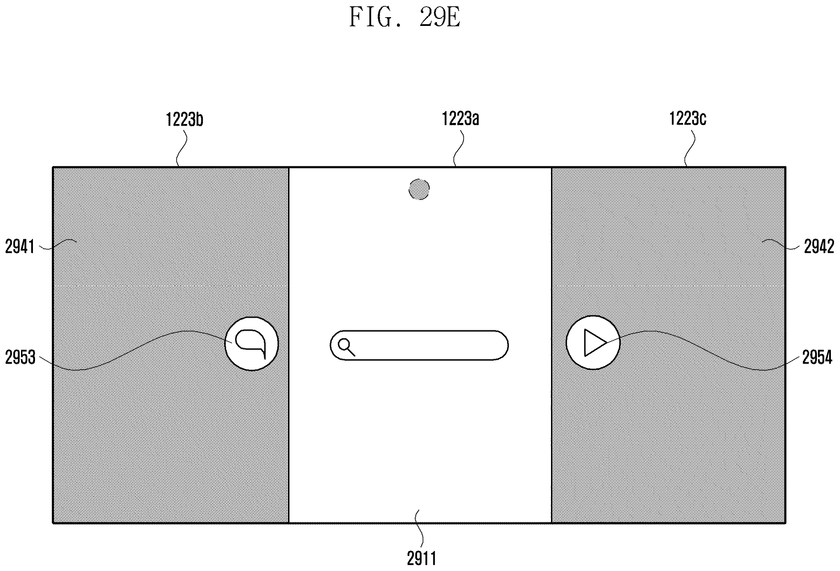

Referring to FIGS. 29D and FIG. 29E, in an embodiment, in response to the user's touch ZL on the second lock icon 2932, the processor 1299 may compare the size of the portion disposed in the second display area 1223a and the size of the portion disposed in the third display area 1223c in connection with the third execution screen 2913. In case that the portion disposed in the third display area 1223c is larger as a result of the comparison, the processor 1299 may end the display of the third execution screen 2913 and may display a second lock image 2942 and a fourth unlock icon 2954 corresponding to the third execution screen 2913 in the third display area 1223c. For example, the processor 1299 may reduce the first execution screen 2911 so as to fit the size of the second display area 1223a and then display the same in the second display area 1223a.

In an embodiment, in case that the portion placed in the second display area 1223a is larger as a result of the previous comparison, the processor 1299 may display the third execution screen 2913 together with the first execution screen 2911 in the second display area 1223a as in FIG. 29C.

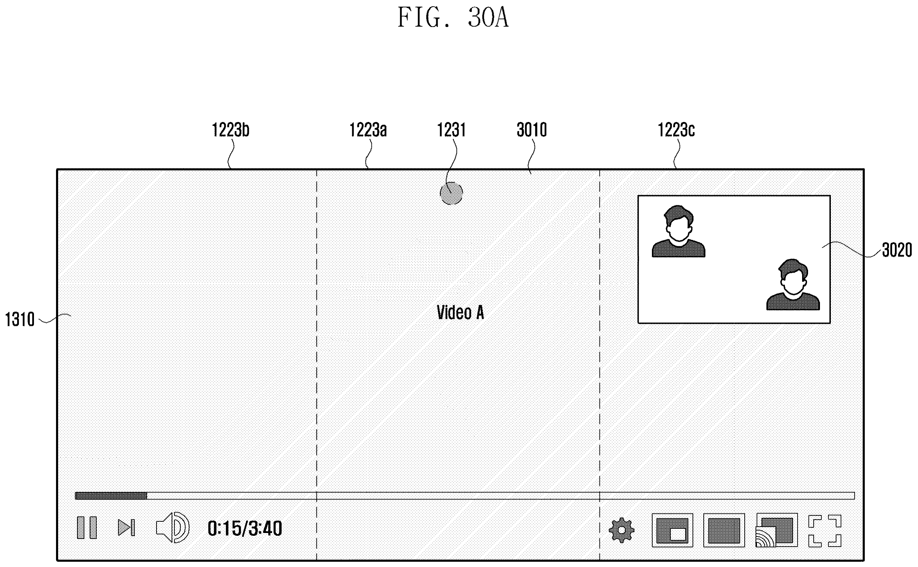

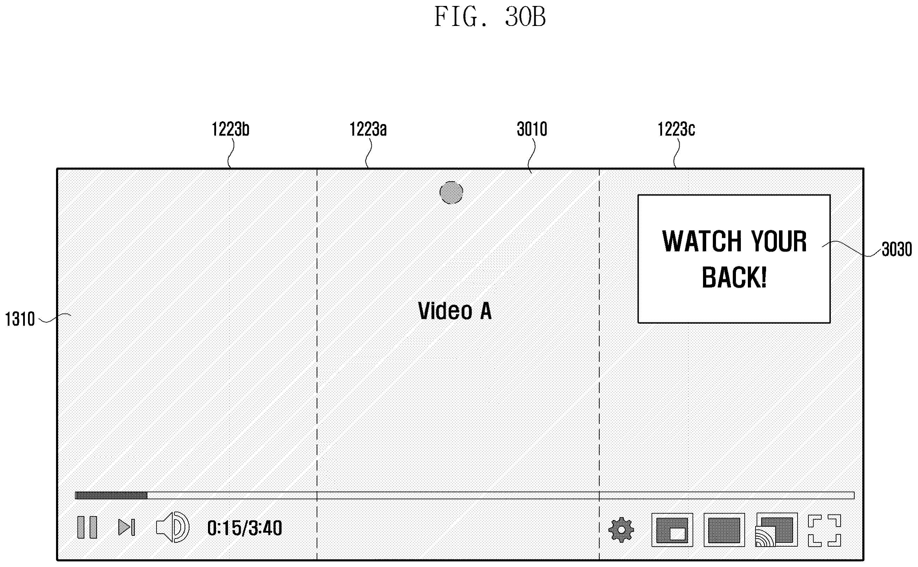

FIG. 30A and FIG. 30B are diagrams for describing operations of the processor 1299 for user privacy according to an embodiment of the disclosure.

Referring to FIG. 30A, in an embodiment, the processor 1299 may display an application execution screen 3010 in the entire display area 1223a, 1223b, and 1223c. The processor 1299 may determine that an observer exists through the result of recognizing an image 3020 acquired from a front camera (for example, the second front camera 1231). According to an embodiment, the processor 1299 may display the image 3020 acquired from the front camera on the display 1223, based on determining that an observer exists.

Referring to FIG. 30B, in another embodiment, the processor 1299 may display a corresponding warning phrase 3030 on the display 1223 instead of the image 3020.

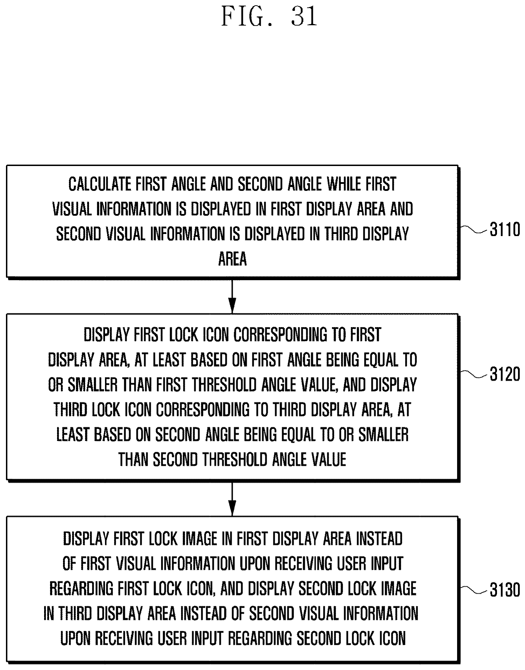

FIG. 31 is a flowchart for describing operations of the processor 1299 for user privacy according to an embodiment.

In operation 3110, while first visual information is displayed in the first display area 1223b and second visual information is displayed in the third display area 1223c, the processor 1299 may calculate the first angle between the second housing which the second display area 1223a is disposed and the first housing on which the first display area 1223b is disposed, and the second angle between the second housing on which the second display area 1223a is disposed and the third housing on which the third display area 1223c is disposed, by using data received from the sensing circuit 1240.

In operation 3120, at least based on the first angle being equal to or smaller than a first threshold angle value, the processor 1299 may display a first lock icon corresponding to the first display area 1223b on the display 1223. At least based on the second angle being a second threshold angle value (for example, the same value as the first threshold angle value), the processor 1299 may display a second lock icon corresponding to the third display area 1223c on the display 1223.

In operation 3130, based on receiving a user input regarding the first lock icon from the display 1223, the processor 1299 may display a first lock image in the first display area 1223b instead of the first visual information. Based on receiving a user input regarding the second lock icon from the display 1223, the processor 1299 may display a second lock image in the third display area 1223c instead of the second visual information.

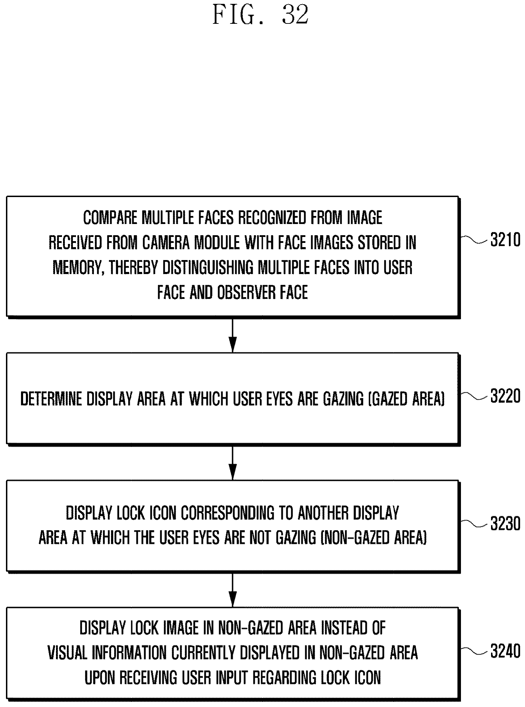

FIG. 32 is a flowchart for describing operations of the processor 1299 for user privacy according to an embodiment.

In operation 3210, the processor 1299 may compare multiple faces recognized from an image received from the camera module 1230 with face images stored in the memory 1288, thereby distinguishing the multiple faces into a user face and an observer face.

In operation 3220, the processor 1299 may track the eyes of the user face, thereby determining the display area at which the eyes are gazing (hereinafter, referred to as a gazed area) among the display areas 1223a, 1223b, and 1223c.

In operation 3230, the processor 1299 may display a lock icon corresponding to another display area at which the user is not gazing (hereinafter, referred to as a non-gazed area) on the display 1223.

In operation 3240, based on receiving a user input regarding the lock icon from the display 1223, the processor 1299 may display a lock image in the non-gazed area instead of visual information currently displayed in the non-gazed area.

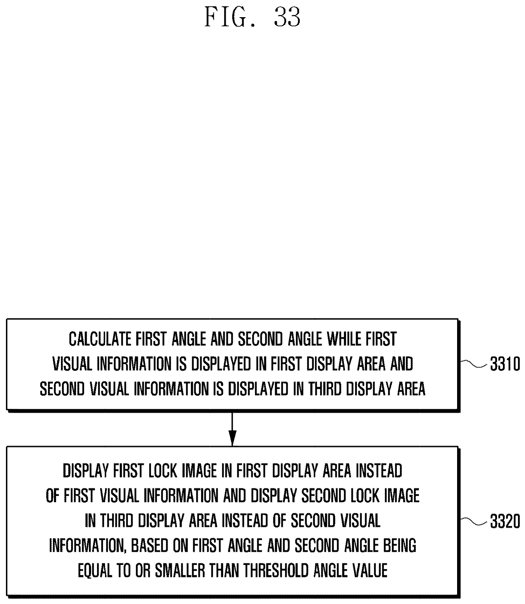

FIG. 33 is a flowchart for describing operations of the processor 1299 for user privacy according to an embodiment.

In operation 3310, while first visual information is displayed in the first display area 1223b and second visual information is displayed in the third display area 1223c, the processor 1299 may calculate the first angle between the second housing on which the second display area 1223a is disposed and the first housing on which the first display area 1223b is disposed, and the second angle between the second housing on which the second display area 1223a is disposed and the third housing on which the third display area 1223c is disposed, by using data received from the sensing circuit 1240.

In operation 3320, the processor 1299 may display a first lock image in the first display area 1223b instead of the first visual information, and may display a second lock image in the third display area 1223c instead of the second visual information, based on the first angle and the second angle being equal to or smaller than a designated threshold angle value.

According to an embodiment, an electronic device (for example, the electronic device 1200) may include: a second housing; a first housing foldably coupled to one side of the second housing; a third housing foldably coupled to the other side of the second housing; a display including a first display area disposed on the first housing, a second display area disposed on the second housing, and a third display area disposed on the third housing; at least one camera disposed on the display; at least one sensor configured to sense a folding state of the first housing or the third housing; a memory configured to store instructions; and at least one processor. The instructions, when executed by the at least one processor, may cause the electronic device to, while an image captured by the at least one camera is displayed on the display, calculate a first angle between the first housing and the second housing and a second angle between the second housing and the third housing by using data received from the sensor. The instructions, when executed by the at least one processor, may cause the electronic device to operate in a privacy mode in response to a folding state between the first housing and the second housing based on the first angle, or a folding state between the second housing and the third housing based on the second angle.

The instructions, when executed by the at least one processor, may cause the electronic device to, at least based on the first angle being equal to or smaller than a first threshold angle value, display a first lock icon corresponding to the second display area on the display. The instructions, when executed by the at least one processor, may cause the electronic device to, at least based on the second angle being equal to or smaller than a second threshold angle value, display a second lock icon corresponding to the third display area on the display. The instructions, when executed by the at least one processor, may cause the electronic device to, based on receiving a user input regarding the first lock icon from the display, display a first lock image in the second display area instead of visual information currently displayed in the second display area. The instructions, when executed by the at least one processor, may cause the electronic device to, based on receiving a user input regarding the first lock icon from the display, display a second lock image in the third display area instead of visual information currently displayed in the third display area.

The electronic device may further include at least one camera connected to the processor and disposed to face in the same direction as the direction in which the display faces. The instructions, when executed by the at least one processor, may cause the electronic device to receive an image from the at least one camera and, based on the first angle being equal to or smaller than the first threshold angle value, and based on multiple faces being recognized from the image, display the first lock icon. The instructions, when executed by the at least one processor, may cause the electronic device to, based on the second angle being equal to or smaller than the second threshold angle value, and based on multiple faces being recognized from the image, display the second lock icon.

The instructions, when executed by the at least one processor, may cause the electronic device to compare the recognized multiple faces with face images stored in the memory, thereby distinguishing the recognized multiple faces into a user face and an observer face. The instructions, when executed by the at least one processor, may cause the electronic device to, based on the first angle being equal to or smaller than the first threshold angle value, and based on eyes of the observer face gazing at the second display area, display the first lock icon. The instructions, when executed by the at least one processor, may cause the electronic device to, based on the second angle being equal to or smaller than the second threshold angle value, and based on eyes of the observer face gazing at the third display area, display the second lock icon.

The at least one camera may include a first front camera positioned on one of the first housing, the second housing, and the third housing, and a second front camera positioned on another. The instructions, when executed by the at least one processor, may cause the electronic device to compare the recognized multiple faces with face images stored in the memory, thereby distinguishing the recognized multiple faces into a user face and an observer face. The instructions, when executed by the at least one processor, may cause the electronic device to calculate the distance between the observer face and the electronic device by using an image received from the first front camera and an image received from the second front camera. The instructions, when executed by the at least one processor, may cause the electronic device to, based on the first angle being equal to or smaller than the first threshold angle value, and based on the calculated distance being equal to or smaller than a threshold distance value, display the first lock icon. The instructions, when executed by the at least one processor, may cause the electronic device to, based on the second angle being equal to or smaller than the second threshold angle value, and based on the calculated distance being equal to or smaller than the threshold distance value, display the second lock icon.

The instructions, when executed by the at least one processor, may cause the electronic device to, at least based on the first angle being equal to or smaller than the first threshold angle value, display the first lock icon in the second display area. The instructions, when executed by the at least one processor, may cause the electronic device to, at least based on the second angle being equal to or smaller than the second threshold angle value, display the second lock icon in the third display area.

The instructions, when executed by the at least one processor, may cause the electronic device to, when the first lock image is displayed on the display, display a first unlock icon on the display together with the first lock image. The instructions, when executed by the at least one processor, may cause the electronic device to, when the first lock image is displayed on the display, display a second unlock icon on the display together with the second lock image. The instructions, when executed by the at least one processor, may cause the electronic device to, based on receiving a user input regarding the first unlock icon from the display, end display of the first lock image. The instructions, when executed by the at least one processor, may cause the electronic device to, based on receiving a user input regarding the second unlock icon from the display, end display of the second lock image.

The instructions, when executed by the at least one processor, may cause the electronic device to, when the first lock image is displayed on the display, display the first unlock icon in the second display area together with the first lock image. The instructions, when executed by the at least one processor, may cause the electronic device to, when the first lock image is displayed on the display, display the second unlock icon in the third display area together with the second lock image.

Visual information currently displayed in the second display area before a user input regarding the first lock icon is received may be an execution screen of a first application, and visual information currently displayed in the second display area before a user input regarding the second lock icon is received is an execution screen of a second application. The instructions, when executed by the at least one processor, may cause the electronic device to, based on receiving a user input regarding the first unlock icon from the display, display the execution screen of the first application in the second display area instead of the first lock image. The instructions, when executed by the at least one processor, may cause the electronic device to, based on receiving a user input regarding the second unlock icon from the display, display the execution screen of the second application in the third display area instead of the second lock image.

The instructions, when executed by the at least one processor, may cause the electronic device to, based on an increase in the first angle in a state in which the first lock image is displayed, end display of the first lock image. The instructions, when executed by the at least one processor, may cause the electronic device to, based on an increase in the second angle in a state in which the second lock image is displayed, end display of the second lock image.

Visual information currently displayed in the second display area before a user input regarding the first lock icon is received may be an execution screen of an application. The instructions, when executed by the at least one processor, may cause the electronic device to, when the first lock image is displayed on the display, display a first unlock icon in the second display area together with the first lock image. The instructions, when executed by the at least one processor, may cause the electronic device to, based on receiving a touch gesture extending from the first unlock icon to the first display area from the display, display the execution screen of the application in the first display area.

Visual information currently displayed in the first display area and the second display area before a user input regarding the first lock icon is received may be an execution screen of an application. The instructions, when executed by the at least one processor, may cause the electronic device to, based on receiving a user input regarding the first lock icon from the display, display the first lock image in the second display area, reduce the execution screen so as to fit the size of the first display area, and display the execution screen in the first display area.

Visual information currently displayed in the first display area and the second display area before a user input regarding the first lock icon is received may be an execution screen of an application. The instructions, when executed by the at least one processor, may cause the electronic device to, based on receiving a user input regarding the first lock icon from the display, compare the size of a portion disposed in the first display area and the size of a portion disposed in the second display area in connection with the overall size of the execution screen. The instructions, when executed by the at least one processor, may cause the electronic device to, based on the size of the portion disposed in the second display area being larger, end display of the execution screen and display the first lock image in the second display area. The instructions, when executed by the at least one processor, may cause the electronic device to, based on the size of the portion disposed in the first display area being larger, display the execution screen in the first display area and display the first lock image in the second display area.

According to an embodiment, an electronic device (for example, the electronic device 1200) may include a second housing; a first housing coupled to the second housing and configured to be rotatable; a third housing coupled to the second housing and configured to be rotatable; a touch-sensitive display including a first display area disposed on the first housing, a second display area disposed on the second housing, and a third display area disposed on the third housing; at least one camera disposed to face in the same direction as the direction in which the display faces; a processor; and a memory configured to instructions. The instructions, when executed by the processor, may cause the electronic device to receive an image from the at least one camera, and compare multiple faces recognized from the image with face images stored in the memory, thereby distinguishing the multiple recognized faces as a user face and an observer face. The instructions, when executed by the processor, may cause the electronic device to determine a display area at which the eyes of the user face gaze. The instructions, when executed by the processor, may cause the electronic device to display a lock icon corresponding to a display area other than the determined display area on the display. The instructions, when executed by the processor, may cause the electronic device to, based on receiving a user input regarding the lock icon from the display, display a lock image in the display area corresponding to the lock icon instead of visual information currently displayed in the display area corresponding to the lock icon.

The instructions, when executed by the processor, may cause the electronic device to display an unlock icon together with the lock image. The instructions, when executed by the processor, may cause the electronic device to end display of the lock image, based on receiving a user input regarding the unlock icon from the display.

According to an embodiment, an electronic device (for example, the electronic device 1200) may include a second housing; a first housing coupled to the second housing and configured to be rotatable; a third housing coupled to the second housing and configured to be rotatable; a touch-sensitive display including a first display area disposed on the first housing, a second display area disposed on the second housing, and a third display area disposed on the third housing; a sensing circuit; a processor; and a memory configured to store instructions. The instructions, when executed by the processor, may cause the electronic device to, while visual information is displayed on the display, calculate a first angle between the first housing and the second housing and a second angle between the second housing and the third housing by using data received from the sensing circuit. The instructions, when executed by the processor, may cause the electronic device to, based on the first angle and the second angle being less than or equal to a specified threshold angle value, display a first lock image in the first display area instead of the visual information currently displayed in the first display area. The instructions, when executed by the processor, may cause the electronic device to display a second lock image in the third display area instead of the visual information currently displayed in the third display area.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStoreTM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device comprising:
a second housing;
a first housing foldably coupled to one side of the second housing;
a third housing foldably coupled to the other side of the second housing;
a display comprising a first display area disposed on the first housing, a second display area disposed on the second housing, and a third display area disposed on the third housing;
at least one camera disposed on the display;
at least one sensor configured to sense a folding state of the first housing or the third housing;
a memory configured to store instructions; and
at least one processor,
wherein the instructions, when executed by the at least one processor, cause the electronic device to:
while an image captured by the at least one camera is displayed on the display, calculate a first angle between the first housing and the second housing and a second angle between the second housing and the third housing by using data received from the sensor; and
operate in a privacy mode in response to a folding state between the first housing and the second housing based on the first angle, or a folding state between the second housing and the third housing based on the second angle.

2. The electronic device of claim 1, wherein the instructions, when executed by the at least one processor, are configured to cause the electronic device to:
at least based on the first angle being equal to or smaller than a first threshold angle value, display a first lock icon corresponding to the second display area on the display;
at least based on the second angle being equal to or smaller than a second threshold angle value, display a second lock icon corresponding to the third display area on the display;
based on receiving a user input regarding the first lock icon from the display, display a first lock image in the second display area instead of visual information currently displayed in the second display area; and
based on receiving a user input regarding the first lock icon from the display, display a second lock image in the third display area instead of visual information currently displayed in the third display area.

3. The electronic device of claim 2, further comprising at least one camera connected to the processor and disposed to face in the same direction as the direction in which the display faces,
wherein the instructions, when executed by the at least one processor, are configured to cause the electronic device to:
receive an image from the at least one camera;
based on the first angle being equal to or smaller than the first threshold angle value, and based on multiple faces being recognized from the image, display the first lock icon; and
based on the second angle being equal to or smaller than the second threshold angle value, and based on multiple faces being recognized from the image, display the second lock icon.

4. The electronic device of claim 3, wherein the instructions, when executed by the at least one processor, are configured to cause the electronic device to:
compare the recognized multiple faces with face images stored in the memory, thereby distinguishing the recognized multiple faces into a user face and an observer face;
based on the first angle being equal to or smaller than the first threshold angle value, and based on eyes of the observer face gazing at the second display area, display the first lock icon; and
based on the second angle being equal to or smaller than the second threshold angle value, and based on eyes of the observer face gazing at the third display area, display the second lock icon.

5. The electronic device of claim 3, wherein the at least one camera comprises a first front camera positioned on one of the first housing, the second housing, and the third housing, and a second front camera positioned on another, and
wherein the instructions, when executed by the at least one processor, are configured to cause the electronic device to:
compare the recognized multiple faces with face images stored in the memory, thereby distinguishing the recognized multiple faces into a user face and an observer face;
calculate the distance between the observer face and the electronic device by using an image received from the first front camera and an image received from the second front camera;
based on the first angle being equal to or smaller than the first threshold angle value, and based on the calculated distance being equal to or smaller than a threshold distance value, display the first lock icon; and
based on the second angle being equal to or smaller than the second threshold angle value, and based on the calculated distance being equal to or smaller than the threshold distance value, display the second lock icon.

6. The electronic device of claim 2, wherein the instructions, when executed by the at least one processor, are configured to cause the electronic device to:
at least based on the first angle being equal to or smaller than the first threshold angle value, display the first lock icon in the second display area; and
at least based on the second angle being equal to or smaller than the second threshold angle value, display the second lock icon in the third display area.

7. The electronic device of claim 2, wherein the instructions, when executed by the at least one processor, are configured to cause the electronic device to:
when the first lock image is displayed on the display, display a first unlock icon on the display together with the first lock image;
when the first lock image is displayed on the display, display a second unlock icon on the display together with the second lock image;
based on receiving a user input regarding the first unlock icon from the display, end display of the first lock image; and
based on receiving a user input regarding the second unlock icon from the display, end display of the second lock image.

8. The electronic device of claim 7, wherein the instructions, when executed by the at least one processor, are configured to cause the electronic device to:
when the first lock image is displayed on the display, display the first unlock icon in the second display area together with the first lock image; and
when the first lock image is displayed on the display, display the second unlock icon in the third display area together with the second lock image.

9. The electronic device of claim 7, wherein visual information currently displayed in the second display area before a user input regarding the first lock icon is received is an execution screen of a first application,
wherein visual information currently displayed in the second display area before a user input regarding the second lock icon is received is an execution screen of a second application, and
wherein the instructions, when executed by the at least one processor, are configured to cause the electronic device to:
based on receiving a user input regarding the first unlock icon from the display, display the execution screen of the first application in the second display area instead of the first lock image; and
based on receiving a user input regarding the second unlock icon from the display, display the execution screen of the second application in the third display area instead of the second lock image.

10. The electronic device of claim 2, wherein the instructions, when executed by the at least one processor, are configured to cause the electronic device to:
based on an increase in the first angle in a state in which the first lock image is displayed, end display of the first lock image; and
based on an increase in the second angle in a state in which the second lock image is displayed, end display of the second lock image.

11. The electronic device of claim 2, wherein visual information currently displayed in the second display area before a user input regarding the first lock icon is received is an execution screen of an application, and
wherein the instructions, when executed by the at least one processor, are configured to cause the electronic device to:
when the first lock image is displayed on the display, display a first unlock icon in the second display area together with the first lock image; and
based on receiving a touch gesture extending from the first unlock icon to the first display area from the display, display the execution screen of the application in the first display area.

12. The electronic device of claim 2, wherein visual information currently displayed in the first display area and the second display area before a user input regarding the first lock icon is received is an execution screen of an application, and
wherein the instructions, when executed by the at least one processor, are configured to cause the electronic device to, based on receiving a user input regarding the first lock icon from the display, display the first lock image in the second display area, reduce the execution screen so as to fit the size of the first display area, and display the execution screen in the first display area.

13. The electronic device of claim 2, wherein visual information currently displayed in the first display area and the second display area before a user input regarding the first lock icon is received is an execution screen of an application, and
wherein the instructions, when executed by the at least one processor, are configured to cause the electronic device to:
based on receiving a user input regarding the first lock icon from the display, compare the size of a portion disposed in the first display area and the size of a portion disposed in the second display area in connection with the overall size of the execution screen;
based on the size of the portion disposed in the second display area being larger, end display of the execution screen and display the first lock image in the second display area; and
based on the size of the portion disposed in the first display area being larger, display the execution screen in the first display area and display the first lock image in the second display area.

14. A method for operating an electronic device comprising a foldable housing structure comprising a second housing, a first housing foldably coupled to one side of the second housing, and a third housing foldably coupled to the other side of the second housing, a display disposed in the foldable housing structure, and a camera disposed on the display, the method comprising:
while an image captured by the camera is displayed on the display, calculating a first angle between the first housing and the second housing and a second angle between the second housing and the third housing by using data received from a sensor of the electronic device; and
performing a privacy mode in response to a folding state between the first housing and the second housing based on the first angle, or a folding state between the second housing and the third housing based on the second angle.

15. The method of claim 14, wherein the performing of a privacy mode comprises:
at least based on the first angle being equal to or smaller than a first threshold angle value, displaying a first lock icon corresponding to the second display area on the display;
at least based on the second angle being equal to or smaller than a second threshold angle value, displaying a second lock icon corresponding to the third display area on the display;
based on receiving a user input regarding the first lock icon from the display, displaying a first lock image in the second display area instead of visual information currently displayed in the second display area; and
based on receiving a user input regarding the first lock icon from the display, displaying a second lock image in the third display area instead of visual information currently displayed in the third display area.
